(19) **Europäisches Patentamt / European Patent Office / Office européen des brevets**

(11) **EP 4 654 581 A1**

(12) **EUROPEAN PATENT APPLICATION**
published in accordance with Art. 153(4) EPC

(43) Date of publication:
26.11.2025 Bulletin 2025/48

(21) Application number: 24744948.1

(22) Date of filing: 22.01.2024

(51) International Patent Classification (IPC):
H04N 19/31 (2014.01)   H04N 19/597 (2014.01)
H04N 19/54 (2014.01)   H04N 19/70 (2014.01)
H04N 19/184 (2014.01)

(52) Cooperative Patent Classification (CPC):
H04N 19/184; H04N 19/31; H04N 19/54;
H04N 19/597; H04N 19/70

(86) International application number:
PCT/KR2024/001034

(87) International publication number:
WO 2024/155169 (25.07.2024 Gazette 2024/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.01.2023 KR 20230009064

(71) Applicant: LG Electronics Inc.
Yeongdeungpo-gu
Seoul 07336 (KR)

(72) Inventor: OH, Hyunmook
Seoul 06772 (KR)

(74) Representative: Mooser, Sebastian Thomas et al
Wuesthoff & Wuesthoff
Patentanwälte und Rechtsanwalt PartG mbB
Schweigerstraße 2
81541 München (DE)

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57) A point cloud data reception method and device are provided. The point cloud data reception method according to embodiments may comprise the steps of: receiving geometry data, attribute data and signaling information; decoding the geometry data on the basis of the signaling information; decoding the attribute data on the basis of the signaling information and the decoded geometry data; and rendering point cloud data including the decoded geometry data and the decoded attribute data.

FIG. 37

| Current subgroup | | | Parent subgroup (non-overlapped nodes in the current subgroup) | | | |
|---|---|---|---|---|---|---|
| Non-IDCM nodes | IDCM nodes (top layer) | ... IDCM nodes (bottom layer) | Non-IDCM nodes | IDCM nodes (top layer) | ... | IDCM nodes (bottom layer) |

**Description**

[Technical Field]

Embodiments relate to a method and device for processing point cloud content.

[Background Art]

Point cloud content is content represented by a point cloud, which is a set of points belonging to a coordinate system representing a three-dimensional space(or volume). The point cloud content may express media configured in three dimensions, and is used to provide various services such as virtual reality (VR), augmented reality (AR), mixed reality (MR), XR (Extended Reality), and self-driving services. However, tens of thousands to hundreds of thousands of point data are required to represent point cloud content. Therefore, there is a need for a method for efficiently processing a large amount of point data.

In other words, a high throughput is required to transmit and receive data of the point cloud. Accordingly, in the process of transmitting and receiving the point cloud data, in which encoding for compression and decoding for decompression are performed, the computational operation is complicated and time-consuming due to the large volume of the point cloud data.

[Disclosure]

[Technical Problem]

An object of the present disclosure devised to solve the above-described problems is to provide devices and methods for efficiently transmitting/receiving a point cloud.

Another object of the present disclosure is to provide devices and methods for addressing latency and encoding/decoding complexity.

Another object of the present disclosure is to provide devices and methods for providing efficient scalable services by performing LoD generation and neighbor search on a subgroup basis.

Another object of the present disclosure is to provide devices and methods for efficiently providing scalable services by performing LoD generation and neighbor search on a sub-group basis, taking into account direct compression nodes.

Embodiments are not limited to the above-described objects, and the scope of the embodiments may cover other objects that can be inferred by those skilled in the art based on the entire contents of the present disclosure.

[Technical Solution]

To achieve these objects and other advantages and in accordance with the purpose of the disclosure, as embodied and broadly described herein, a method of receiving point cloud data may include receiving geometry data, attribute data, and signaling information, decoding the geometry data based on the signaling information, decoding the attribute data based on the signaling information and the decoded geometry data, and rendering point cloud data including the decoded geometry data and the decoded attribute data.

According to embodiments, the decoding of the attribute data may include receiving the attribute data on a subgroup basis, storing nodes of a current subgroup and nodes of a parent subgroup of the current subgroup in a buffer based on the signaling information, the decoded geometry data, and the attribute data, generating at least one level of detail (LoD) for the current subgroup based on the nodes of the current subgroup and the nodes of the parent subgroup stored in the buffer, searching for nearest neighbors of a node to be subjected to attribute decoding in the current subgroup based on the at least one LoD for the current subgroup and at least one LoD for the parent subgroup, and deriving attribute data based on the searched nearest neighbors.

According to embodiments, nodes of the parent subgroup used to generate the at least one LoD for the current subgroup may not overlap with the nodes of the current subgroup.

According to embodiments, the nodes of the parent subgroup used to generate the at least one LoD for the current subgroup may include nodes outside a boundary of the current subgroup or at least one direct compression (IDCM) node.

According to embodiments, the storing may include storing the nodes of the current subgroup and the nodes of the parent subgroup separately in the buffer, based on at least one of the nodes of the current subgroup being an IDCM node, storing non-IDCM nodes of the current subgroup and the at least one IDCM node separately in the buffer, and based on at least one of the nodes of the parent subgroup being an IDCM node, storing non-IDCM nodes of the parent subgroup and the at least one IDCM node separately in the buffer, wherein the nodes stored in the buffer may be identified by an index assigned to each of the nodes.

According to embodiments, the storing may further include, based on the at least one IDCM node of the current subgroup being included in a plurality of layers, separating the at least one IDCM node of the current subgroup according to the layers and storing the same in the buffer, and based on the at least one IDCM node of the parent subgroup being included in a plurality of layers, separating the at least one IDCM node of the parent subgroup according to the layers and storing the same in the buffer.

According to embodiments, the deriving of the attribute data may include, based on a bottom layer of the parent subgroup having a node at an identical position to a node to be reconstructed in a top layer of the current subgroup, matching an attribute of the node in the parent subgroup to an attribute of the node in the top layer of the current subgroup.

According to embodiments, at least one IDCM node of the parent subgroup may be a node excluded from being sub-sampled from a top layer of the current subgroup.

According to embodiments, a device for receiving point cloud data, including a receiver configured to receive geometry data, attribute data, and signaling information, a geometry decoder configured to decode the geometry data based on the signaling information, an attribute decoder configured to decode the attribute data based on the signaling information and the decoded geometry data, and a renderer configured to render point cloud data including the decoded geometry data and the decoded attribute data.

According to embodiments, the attribute decoder may include a buffer configured to store nodes of a current subgroup and nodes of a parent subgroup of the current subgroup based on the signaling information, the decoded geometry data, and subgroup-based attribute data, a level of detail (LoD) generator configured to generate at least one LoD for the current subgroup based on the nodes of the current subgroup and the nodes of the parent subgroup stored in the buffer, a neighbor searcher configured to search for nearest neighbors of a node to be subjected to attribute decoding in the current subgroup based on the at least one LoD for the current subgroup and at least one LoD for the parent subgroup, and a deriver configured to derive attribute data based on the searched nearest neighbors.

According to embodiments, nodes of the parent subgroup used to generate the at least one LoD for the current subgroup do not overlap with the nodes of the current subgroup.

According to embodiments, the nodes of the parent subgroup used to generate the at least one LoD for the current subgroup include nodes outside a boundary of the current subgroup or at least one direct compression (IDCM) node.

According to embodiments, the buffer may be configured to store the nodes of the current subgroup and the nodes of the parent subgroup in separate storage areas, store, based on at least one of the nodes of the current subgroup being an IDCM node, non-IDCM nodes of the current subgroup and the at least one IDCM node in separate storage areas, and store, based on at least one of the nodes of the parent subgroup being an IDCM node, non-IDCM nodes of the parent subgroup and the at least one IDCM node in separate storage areas, wherein the nodes stored in the buffer may be identified by an index assigned to each of the nodes.

According to embodiments, the buffer may be configured to separate, based on the at least one IDCM node of the current subgroup being included in a plurality of layers, the at least one IDCM node of the current subgroup according to the layers and store the same, and separate, based on the at least one IDCM node of the parent subgroup being included in a plurality of layers, the at least one IDCM node of the parent subgroup according to the layers and store the same.

According to embodiments, based on a bottom layer of the parent subgroup having a node at an identical position to a node to be reconstructed in a top layer of the current subgroup, the deriver may match an attribute of the node in the parent subgroup to an attribute of the node in the top layer of the current subgroup.

[Advantageous Effects]

Devices and methods according to embodiments may provide a quality point cloud service.

Devices and methods according to embodiments may achieve various video codec methods.

Devices and methods according to embodiments may provide universal point cloud content such as an autonomous driving service.

Devices and methods according to embodiments may perform space-adaptive partition of point cloud data for independent encoding and decoding of the point cloud data, thereby improving parallel processing and providing scalability.

Devices and methods according to embodiments may perform encoding and decoding by partitioning the point cloud data in units of tiles and/or slices, and signal necessary data therefor, thereby improving encoding and decoding performance of the point cloud.

A device and method according to embodiments may divide and transmit compressed data of point cloud data according to a predetermined criterion. In addition, when layered coding is used, compressed data may be divided and transmitted according to layers. Accordingly, the storage and transmission efficiency of the transmission device may increase.

Devices and methods according to embodiments apply the same LoD generation and NN search performed by an attribute encoder in a transmission device to an attribute decoder in a reception device when scalable transmission and/or scalable decoding is performed. In particular, by performing the same position correction and NN search through the attribute encoder of the transmission device and the attribute decoder of the reception device, the neighbor candidates considered by the attribute encoder of the transmission device and the neighbor candidates considered by the attribute decoder of the reception device are not different, and the order of the nodes does not change. Therefore, decoder prediction errors may not occur in operations such as prediction transform in which attribute prediction is performed from neighbor nodes.

Devices and methods according to embodiments may increase the efficiency of scalable attribute coding by performing LoD generation and neighbor search in consideration of cases where there is a missing slice (or subgroup).

Devices and methods according to embodiments may increase the efficiency of scalable attribute decoding by performing LoD generation and neighbor search on a subgroup basis in attribute decoding.

Devices and methods according to embodiments may improve attribute decoding speed by performing LoD generation and neighbor search on a subgroup basis, taking into account direct compression nodes in attribute decoding.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 shows an exemplary point cloud content providing system according to embodiments;

FIG. 2 is a block diagram illustrating a point cloud content providing operation according to embodiments;

FIG. 3 illustrates an exemplary point cloud encoder according to embodiments;

FIG. 4 shows an example of an octree and occupancy code according to embodiments;

FIG. 5 illustrates an example of point configuration in each LOD according to embodiments;

FIG. 6 illustrates an example of point configuration in each LOD according to embodiments;

FIG. 7 illustrates a point cloud decoder according to embodiments;

FIG. 8 illustrates a transmission device according to embodiments;

FIG. 9 illustrates a reception device according to embodiments;

FIG. 10 illustrates an exemplary structure operable in connection with point cloud data transmission/reception methods/devices according to embodiments;

FIGS. 11 and 12 are diagrams illustrating a process for encoding, transmitting, and decoding point cloud data according to embodiments;

FIG. 13 illustrates layer-based configuration of point cloud data according to embodiments;

FIG. 14-(a) illustrates a bitstream structure for geometry data according to embodiments, and FIG. 14-(b) illustrates a bitstream structure for attribute data according to embodiments;

FIG. 15 is a diagram illustrating an example of configuration of a bitstream for dividing the bitstream into layers for delivery according to embodiments;

FIG. 16 illustrates an exemplary bitstream sorting method used when a geometry bitstream and an attribute bitstream are multiplexed into a single bitstream according to embodiments;

FIG. 17 illustrates another exemplary bitstream sorting method used when a geometry bitstream and an attribute bitstream are multiplexed into a single bitstream according to embodiments;

FIGS. 18-(a) to 18-(c) illustrate an example of symmetric geometry-attribute selection according to embodiments;

FIGS. 19-(a) to 19-(c) illustrate an example of asymmetric geometry-attribute selection according to embodiments;

FIGS. 20-(a) to 20-(c) illustrate exemplary methods of configuring slices including point cloud data according to embodiments;

FIGS. 21-(a) and 21-(b) illustrate geometry coding layer structures according to embodiments;

FIG. 22 illustrates a layer group and subgroup structure according to embodiments;

FIGS. 23-(a) to 23-(c) illustrate representations of layer group-based point cloud data according to embodiments;

FIG. 24 illustrates a point cloud data transmission/reception device/method according to embodiments;

FIG. 25 is a flowchart illustrating an exemplary LoD generation method according to embodiments;

FIG. 26 is a diagram illustrating an exemplary LoD generation method used when there is a missing subgroup according to embodiments;

FIG. 27 is a diagram illustrating an exemplary method of searching for the nearest neighbor according to embodiments;

FIG. 28 is a diagram illustrating another exemplary method of searching for the nearest neighbor according to embodiments;

FIG. 29 is a diagram illustrating yet another exemplary method of searching for the nearest neighbor according to embodiments;

FIG. 30 illustrates another exemplary point cloud transmission device according to embodiments;

FIG. 31 is a flowchart illustrating an exemplary method of encoding point cloud data according to embodiments;

FIG. 32 illustrates another illustrates point cloud reception device according to embodiments;

FIG. 33 is a flowchart illustrating an exemplary method of decoding point cloud data according to embodiments;

FIG. 34 is a flowchart illustrating another embodiment of a point cloud data decoding method according to the embodiments;

FIG. 35 illustrates an example of points included in each subgroup according to embodiments;

FIG. 36 illustrates an example of LoDs generated through subsampling according to embodiments;

FIG. 37 illustrates an example of an input buffer according to embodiments;

FIG. 38 illustrates an example of an attribute inheritance process according to embodiments;

FIG. 39 illustrates an example bitstream structure for transmitting/receiving point cloud data according to embodiments;

FIG. 40 illustrates an example syntax structure of a sequence parameter set according to embodiments;

FIG. 41 illustrates an example syntax structure of a dependent attribute data unit header according to embodiments;

FIG. 42 illustrates an example of providing services by compressing geometry and attributes of point cloud data;

FIG. 43 illustrates another example of providing services by compressing geometry and attributes of point cloud data according to embodiments;

FIG. 44 illustrates yet another example of providing services by compressing geometry and attributes of point cloud data according to embodiments;

FIG. 45 is a flowchart illustrating a method of transmitting point cloud data according to embodiments; and

FIG. 46 is a flowchart illustrating a method of receiving point cloud data, according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

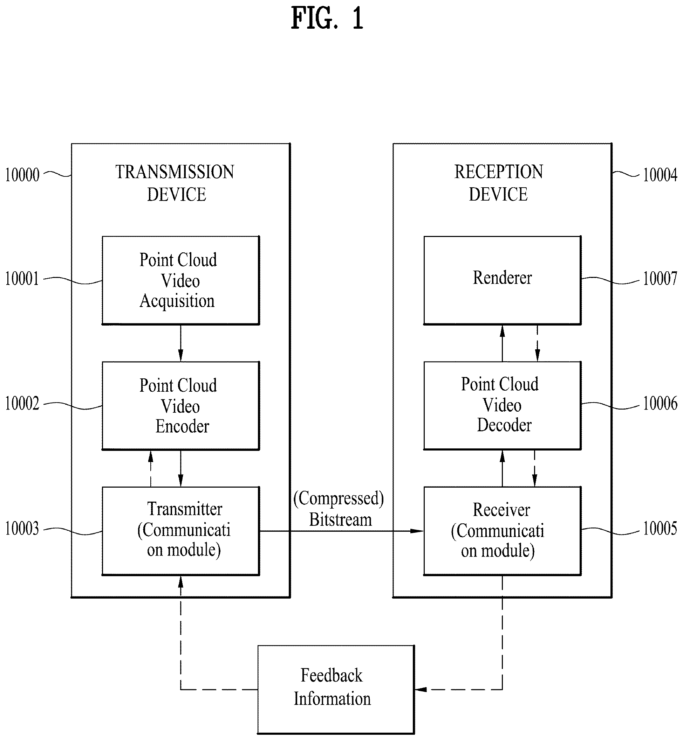

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquisition unit 10001, a point cloud video encoder 10002, and/or a transmitter (or communication module) 10003.

The point cloud video acquisition unit 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. In one embodiment, the renderer 10007 may render the decoded point cloud video data according to a viewport or the like. The renderer 10007 may render not only the point cloud video data but also audio data to output point cloud content. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to the embodiments may represent information about a position, orientation, angle, and motion of a user's head. The reception device 10004 according to the embodiments may calculate viewport information based on the head orientation information. The viewport information is information about a region of a point cloud video that the user is viewing (that is, a region that the user is currently viewing). That is, the viewport information is information about a region that the user is currently viewing in the point cloud video. In other words, the viewport or viewport region may represent a region that the user is viewing in the point cloud video. A viewpoint is a point that the user is viewing in the point cloud video, and may represent a center point of the viewport region. That is, the viewport is a region centered on a viewpoint, and the size and shape of the region may be determined by a field of view (FOV). Accordingly, the reception device 10004 may extract the viewport information based on a vertical or horizontal FOV supported by the device as well as the head orientation information. In addition, the reception device 10004 may perform gaze analysis or the like based on the head orientation information and/or the viewport information to determine the way the user consumes a point cloud video, a region at which the user gazes in the point cloud video, and the gaze time. According to embodiments, the reception device 10004 may transmit feedback information including the result of the gaze analysis to the transmission device 10000. According to embodiments, a device such as a VR/XR/AR/MR display may extract a viewport region based on the position/orientation of a user's head and a vertical or horizontal FOV supported by the device. According to embodiments, the head orientation information and the viewport information may be referred to as feedback information, signaling information, or metadata.

The feedback information according to the embodiments may be acquired in the rendering and/or display process. The feedback information may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The feedback information may not only be transmitted to the transmitting side, but also be consumed at the receiving side. That is, the point cloud content providing system may process (encode/-decode/render) point cloud data based on the feedback information. For example, the point cloud video decoder 10006 and the renderer 10007 may preferentially decode and render only the point cloud video for a region currently viewed by the user, based on the feedback information, namely, the head orientation information and/or the viewport information.

Furthermore, the reception device 10004 may transmit the feedback information to the transmission device 10000. The transmission device 10000 (or the point cloud video encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, transmission system or the like, and the reception device 10004 may be called a decoder, a receiving device, a receiver, receiving system or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

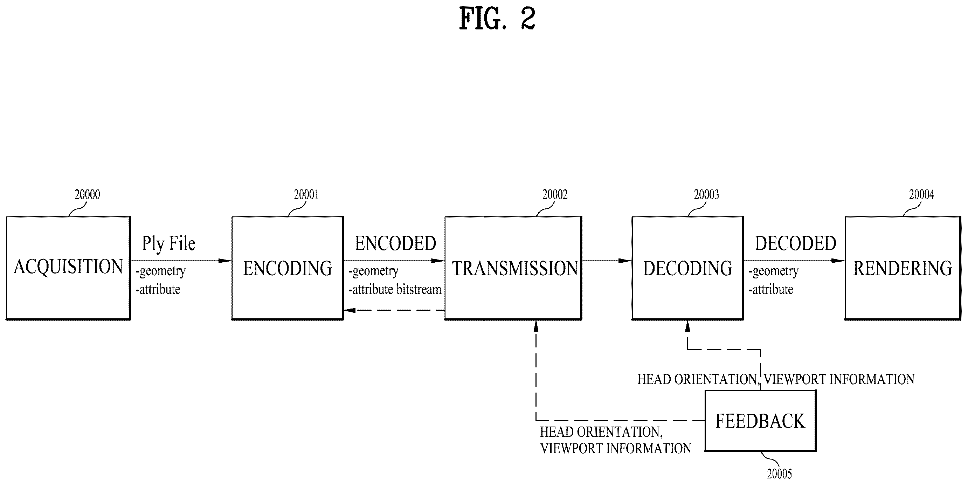

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquisition unit 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquisition unit 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data

(20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data

(20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus a detailed description thereof is omitted.

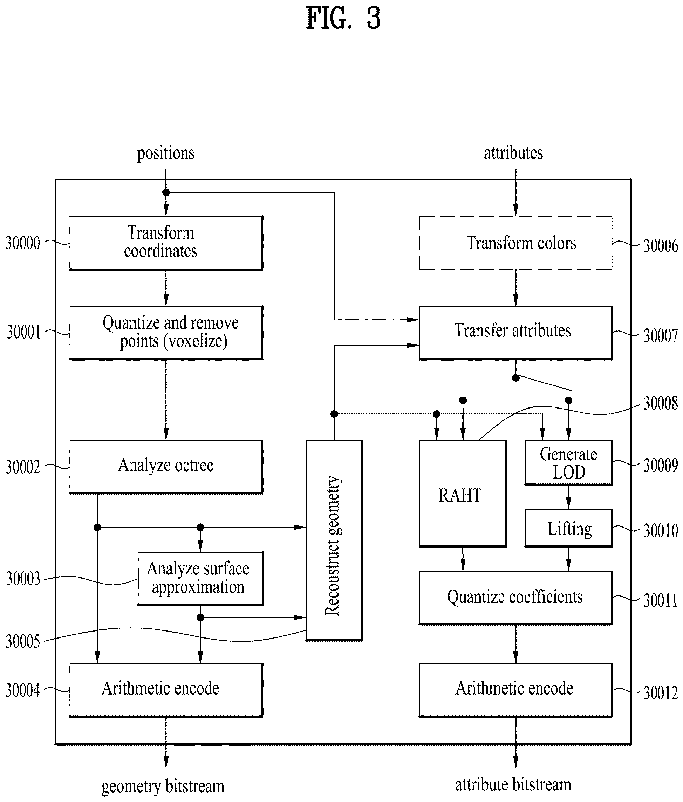

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud video encoder according to the embodiments includes a coordinate transformer (Transform coordinates) 30000, a quantizer (Quantize and remove points (voxelize)) 30001, an octree analyzer (Analyze octree) 30002, a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transfer attributes) 30007, a RAHT transformer 30008, an LOD generator (Generated LOD) 30009, a lifting transformer (Lifting) 30010, a coefficient quantizer (Quantize coefficients) 30011, and/or an arithmetic encoder (Arithmetic encode) 30012. In the point cloud encoder of FIG. 3, the coordinate transformer 30000, the quantizer 30001, the octree analyzer 30002, the surface approximation analyzer 30003, the arithmetic encoder 30004, and the geometry reconstructor 30005 may be grouped together and referred to as a geometry encoder. The color transformer 30006, the attribute transformer 30007, the RAHT transformer 30008, the LOD generator 30009, the lifting transformer 30010, the coefficient quantizer 30011, and/or the arithmetic encoder 30012 may be grouped together and referred to as an attribute encoder.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 30009.

The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients.

The arithmetic encoder 30012 according to the embodiments encodes the quantized attributes based on arithmetic coding.

Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

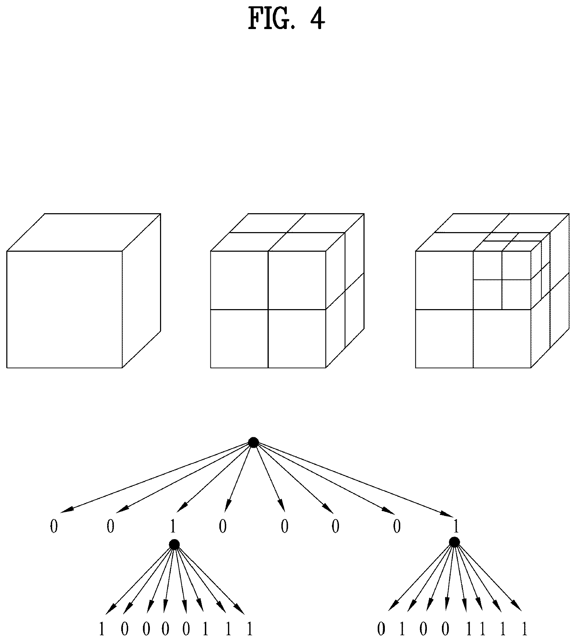

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and ($2^d$, $2^d$, $2^d$). Here, 2d may be set to a value constituting the smallest bounding box surrounding all points of the point cloud content (or point cloud video). Here, d denotes the depth of the octree. The value of d is determined in the following equation. In the following equation, ($x^{int}_n$, $y^{int}_n$, $z^{int}_n$) denotes the positions (or position values) of quantized points.

$$\mathrm{d} = Ceil\left(Log2\left(Max\left(x_n^{int}, y_n^{int}, z_n^{int}, n = 1, \dots, N\right) + 1\right)\right)$$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta x$, $\Delta y$, $\Delta z$) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{①} \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix} \quad \text{②} \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad \text{③} \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For 'example, when the element x is the minimum, each vertex is projected on the x-axis with respect to the center of the block, and projected on the (y, z) plane. When the values obtained through projection on the (y, z) plane are (ai, bi), the value of θ is estimated through atan2(bi, ai), and the vertices are ordered based on the value of θ. The table 1 below shows a combination of vertices for creating a triangle according to the number of the vertices. The vertices are ordered from 1 to n. The table 1 below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

[Table 1]

[Table 1] Triangles formed from vertices ordered 1,...,n

| n | Triangles |
|---|---|
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

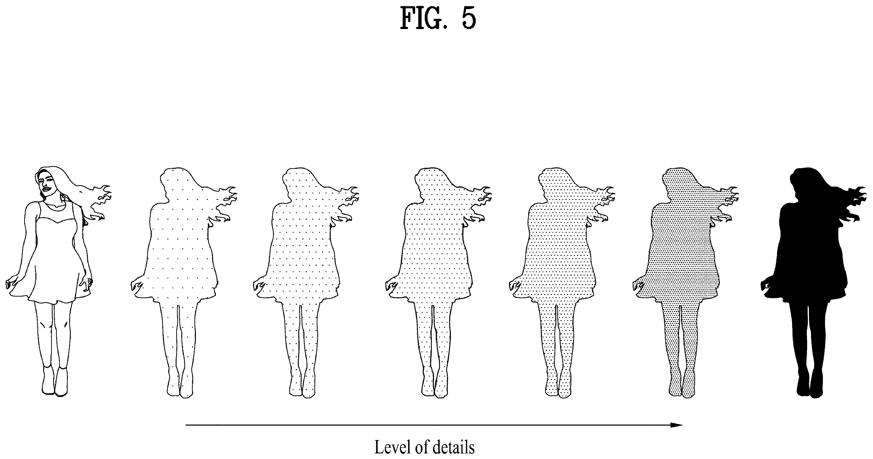

FIG. 5 illustrates an example of point configuration in each LOD according to embodiments.

As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

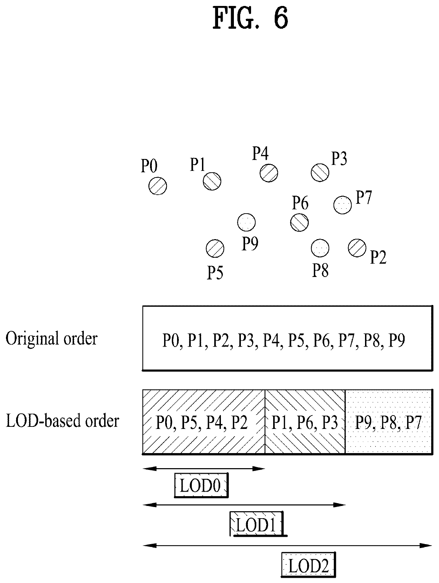

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 6 shows examples (P0 to P9) of points of the point cloud content distributed in a 3D space. In FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 30011) may quantize and inversely quantize the residuals (which may be called residual attributes, residual attribute values, attribute prediction residuals, or the like) obtained by subtracting a predicted attribute (or attribute value) of each point from the attribute (attribute value) of each point. The quantization process is shown in Tables 2 and 3 below.

[Table 2]

| int PCCQuantization(int value, int quantStep) { |
|---|
| if(value >=0) { |
| return floor(value / quantStep + 1.0 / 3.0); |
| } else { |
| return -floor(-value / quantStep + 1.0 / 3.0); |
| } |
| } |

[Table 3]

| int PCCInverseQuantization(int value, int quantStep) { |
|---|
| if( quantStep ==0) { |
| return value; |
| } else { |
| return value * quantStep; |
| } |
| } |

When the predictor of each point has neighbor points, the point cloud encoder (e.g., the arithmetic encoder 30012) according to the embodiments may perform entropy coding on the quantized and inversely quantized residual values as described above. When the predictor of each point has no neighbor point, the point cloud encoder according to the embodiments (e.g., the arithmetic encoder 30012) may perform entropy coding on the attributes of the corresponding point without performing the above-described operation.

The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l_{x,y,z}}$ denotes the average attribute value of voxels at level l. $g_{l_{x,y,z}}$ may be calculated based on $g_{l+1_{2x,y,z}}$ and $g_{l+1_{2x+1,y,z}}$. The weights for $g_{l_{2x,y,z}}$ and $g_{l_{2x+1,y,z}}$ are w1 = $w_{l_{2x,y,z}}$ and w2 = $w_{l_{2x+1,y,z}}$.

$$\begin{bmatrix} g_{l-1_{x,y,z}} \\ h_{l-1_{x,y,z}} \end{bmatrix} = T_{w1\ w2} \begin{bmatrix} g_{l_{2x,y,z}} \\ g_{l_{2x+1,y,z}} \end{bmatrix}, \quad T_{w1\ w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1_{x,y,z}}$ is a low-pass value and is used in the merging process at the next higher level. $h_{l-1_{x,y,z}}$ denotes high-pass coefficients. The high.0000000000-pass coefficients at each step are quantized and subjected to entropy coding (e.g., encoding by the arithmetic encoder 30012). The weights are calculated as $w_{l-1_{x,y,z}} = w_{l_{2x,y,z}} + w_{l_{2x+1,y,z}}$. The root node is created through the $g_{1_{0,0,0}}$ and $g_{1_{0,0,1}}$ as follows.

$$\begin{bmatrix} gDC \\ h_{0_{0,0,0}} \end{bmatrix} = T_{w1000\ w1001} \begin{bmatrix} g_{1_{0,0,0z}} \\ g_{1_{0,0,1}} \end{bmatrix}$$

The value of gDC is also quantized and subjected to entropy coding like the high-pass coefficients.

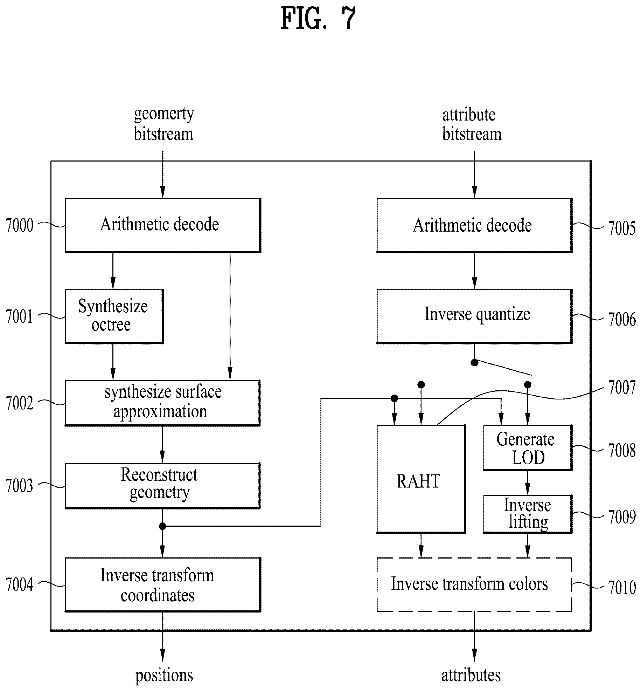

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

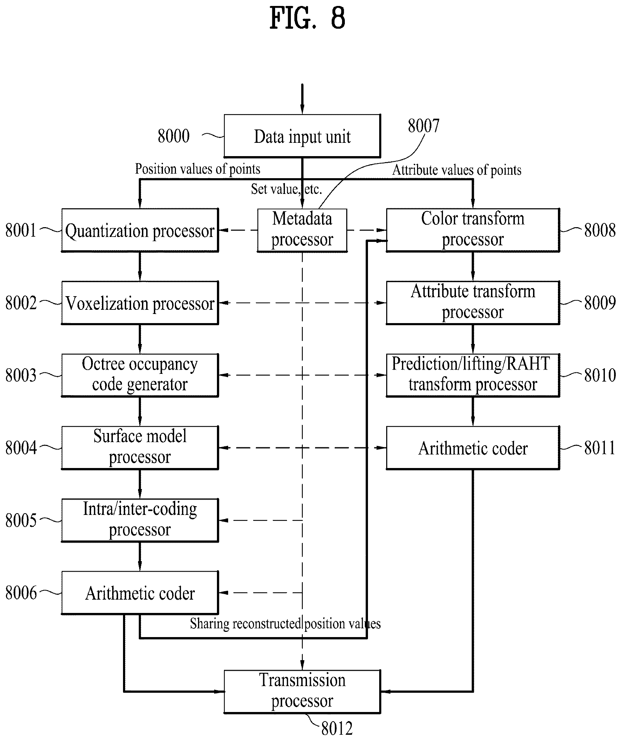

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquisition unit 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9.

The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method the same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 300012.

The transmission processor 8012 according to the embodiments may transmit each bitstream containing encoded geometry and/or encoded attributes or metadata information, or transmit one bitstream containing the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

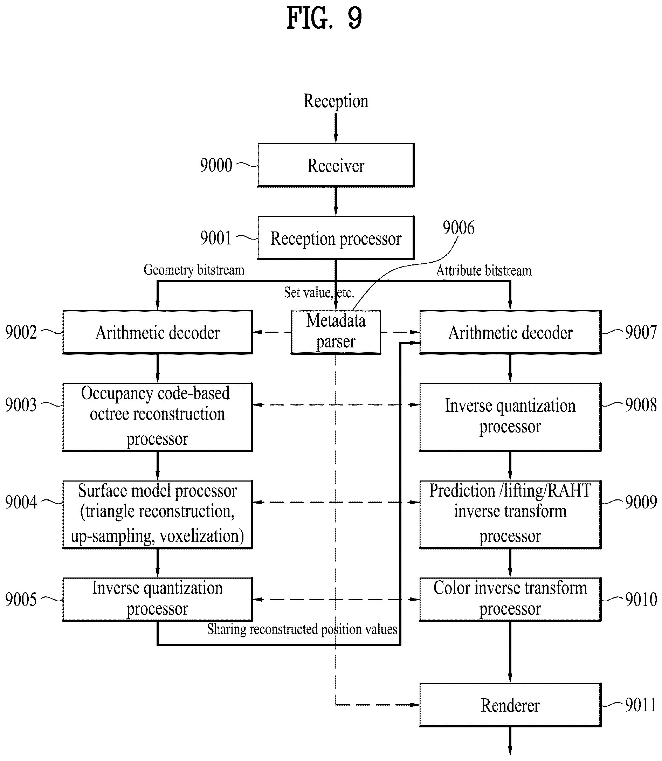

FIG. 9 illustrates a reception device according to embodiments.

The reception device illustrated in FIG. 9 is an example of the reception device 10004 of FIG. 1. The reception device illustrated in FIG. 9 may perform one or more of the operations and methods the same as or similar to those of the point cloud decoder described with reference to FIGS. 1 to 8.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 8, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus a detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to at least one of FIGS. 1 to 8, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009 of FIG. 7. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010 of FIG. 7. The renderer 9011 according to the embodiments may render the point cloud data.

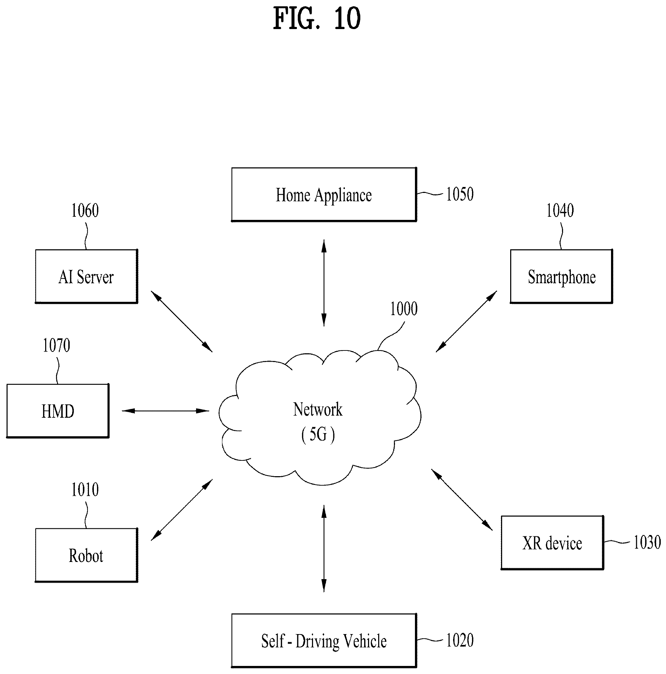

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

## \<PCC+XR\>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

## \<PCC+XR+Mobile phone\>

The XR/PCC device 1030 may be implemented as a mobile phone 1040 by applying PCC technology.

The mobile phone 1040 may decode and display point cloud content based on the PCC technology.

## \<PCC+Self-driving+XR\>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

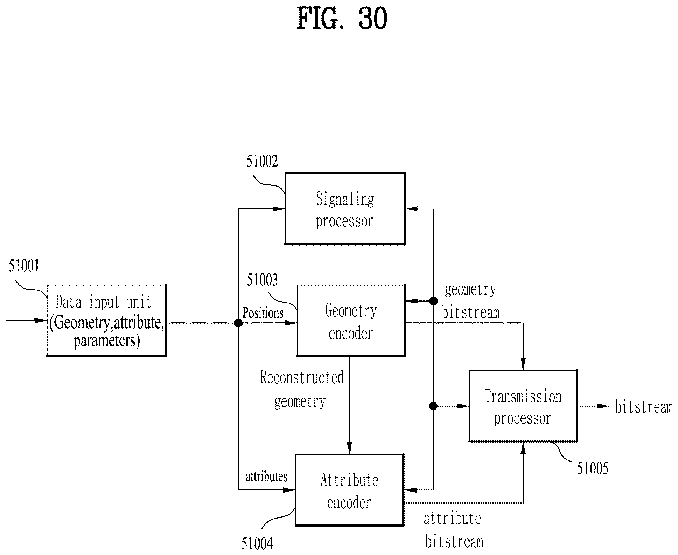

The point cloud data transmission method/device according to the embodiments is construed as a term referring to the transmission device 10000, point cloud video encoder 10002, and transmitter 10003 of FIG. 1, the acquisition 20000-encoding 20001-transmission 20002 of FIG. 2, the point cloud video encoder of FIG. 3, the transmission device of FIG. 8, the device of FIG. 10, the transmission device of FIG. 30, and the like.

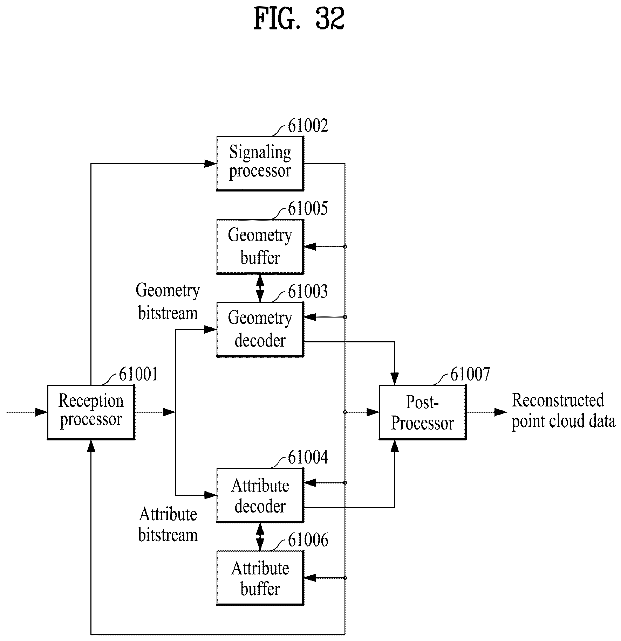

The point cloud data reception method/device according to the embodiments is construed as a term referring to the reception device 10004, receiver 10005, and point cloud video decoder 10006 of FIG. 1, the transmission 20002-decoding 20003-rendering 20004 of FIG. 2, the point cloud video decoder of FIG. 7, the reception device of FIG. 9, the device of FIG. 10, the reception device of FIG. 32, and the like.

The point cloud data transmission reception method/device according to the embodiments may be simply referred to as a method/device according to the embodiments.

According to embodiments, geometry data, geometry information, position information, and the like constituting the point cloud data are construed as having the same meaning. Attribute data, attribute information, and the like constituting point cloud data are construed as having the same meaning.

The method/device according to the embodiments may process point cloud data in consideration of scalable transmission.

Regarding the method/device according to the embodiments, disclosed herein is a method for efficiently supporting selective decoding of a part of data according to receiver performance or transmission speed in transmitting/receiving point cloud data. In particular, the present disclosure proposes techniques for increasing the efficiency of scalable coding, wherein the encoder at the transmitting end may selectively deliver information required by a decoder at the receiving side for compressed data, and the decoder may decode the same, wherein the coding unit may be configured as independent slices in the sense of tree levels, LODs, layer group units, and the like.

In particular, the present disclosure proposes a method for increasing the efficiency of scalable coding among point cloud data compression methods. Here, scalable coding is a technique for gradually changing the resolution of data according to the request/processing speed/performance/transmission bandwidth of the receiver, etc. such that the compressed data may be efficiently delivered from the transmitting side and decoded at the receiving side. To this end, packing for effectively delivering point cloud data configured based on layers may be applied along with the technology of the present disclosure. In particular, proposed herein is a method of configuring slice segments to be more suitable for scalable PCC services and transmitting/receiving the same when a direct compression mode is used for position compression. Additionally, a compression method for efficient storage and transmission of large point cloud data that is widely distributed and has high point density may be used.

Referring to the point cloud data transmission/reception device (which may be referred to simply as an encoder/decoder) according to the embodiments shown in FIGS. 3 and 7, point cloud data is composed of a set of points. Each of the points includes geometry information (or geometry or geometry data) and attribute information (or an attribute or attribute data). The geometry information is three-dimensional position information (xyz) about each point. That is, the position of each point is represented by parameters in a coordinate system representing a three-dimensional space (e.g., parameters (x, y, z) of three axes representing the space, such as the X-axis, Y-axis, and Z-axis). The attribute information represents the color (RGB, YUV, etc.), reflectance, normal vectors, transparency, and the like of the points. In point cloud compression (PCC), octree-based compression is performed to efficiently compress non-uniform distribution in a three-dimensional space, and attribute information is compressed based on the octree-based compression. The point cloud video encoder and the point cloud video decoder shown in S. 3 and 7 may process the operation(s) according to embodiments through respective components.

According to embodiments, the transmission device compresses the geometry information (e.g., position) and attribute information (e.g., color/brightness/reflectance, etc.) about the point cloud data and transmits the compressed information to the reception device. The point cloud data may be configured according to an octree structure that has layers according to the degree of detail or levels of detail (LoDs). Then, scalable point cloud data coding and representation may be performed based the configuration. In this case, only a part of the point cloud data may be decoded or represented according to the performance of the reception device or the transfer rate. However, there is currently no method to remove unnecessary data in advance.

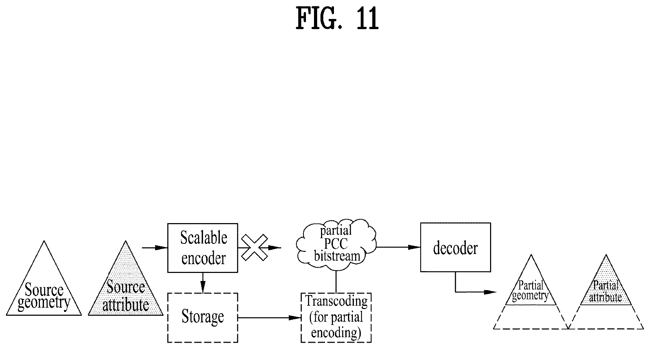

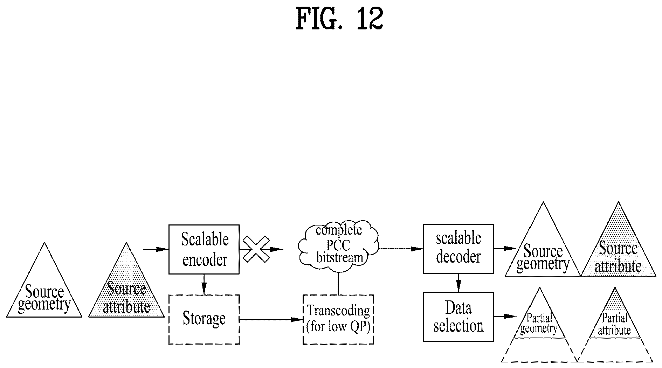

In other words, in the case where only a part of the scalable point cloud compression bitstream needs to be transmitted (e.g., only a part of the layers are decoded in scalable decoding), the necessary part cannot be selected and sent. Accordingly, the transmission device should re-encode the necessary part after decoding as shown in FIG. 11, or the reception device should selectively apply the necessary data after decoding when the entire data is delivered to the reception device as shown in FIG. 12.

However, in the case of FIG. 11, a delay may occur due to the time for decoding and re-encoding. In the case of FIG. 12, bandwidth efficiency may be degraded due to transmission of unnecessary data to the reception device. Further, when a fixed bandwidth is used, data quality may need to be lowered to transmit data.

Accordingly, the methods/devices according to the embodiments may provide slices such that the point cloud may be divided into regions for processing.

In particular, in the case of octree-based position compression, entropy-based compression and direct compression may be used together. In this regard, proposed herein is a slice configuration for efficiently utilizing scalability.

Also, regarding the methods/devices according to the embodiments, a slice segmentation structure of point cloud data may be defined, and a scalable layer and slice structure for scalable transmission may be signaled.

The methods/devices according to embodiments may divide and process a bitstream in specific units for efficient bitstream delivery and decoding.

The methods/devices according to the embodiments may enable selective transmission and decoding of layered point cloud data in a bitstream unit.

The unit according to the embodiments may be referred to as an LOD, a layer, a slice, or the like. The LOD is the same term as LOD in attribute data coding, but may mean a data unit for a layered structure of a bitstream in another sense. The LOD may be a concept corresponding to one depth or a bundle of two or more depths based on the layer structure of point cloud data, for example, depths (levels) of an octree or multiple trees. Similarly, a layer is provided to generate a unit of a sub-bitstream. It is a concept that corresponds to one depth or a bundle of two or more depths, and may correspond to one LOD or two or more LODs. Also, a slice is a unit for configuring a unit of a sub-bitstream, and may correspond to one depth, a part of one depth, or two or more depths. Also, a slice may correspond to one LOD, a part of one LOD, or two or more LODs. According to embodiments, the LOD, the layer, and the slice may correspond to each other or one of the LOD, the layer, and the slice may be included in another one. Also, a unit according to embodiments may include an LOD, a layer, a slice, a layer group, or a subgroup, and may be referred to interchangeably with each other. According to embodiments, in an octree structure, a layer, a depth, a level, and a depth level may have the same meaning.

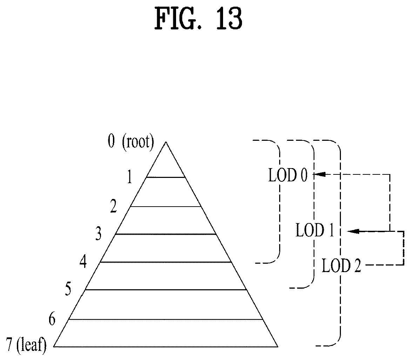

FIG. 13 is a diagram illustrating an example of a layer-based point cloud data configuration according to embodiments. FIG. 13 illustrating an example of an octree structure in which the depth level of a root node is set to 0 and the depth level of a leaf node is set to 7.

The methods/devices according to the embodiments may configure layer-based point cloud data as shown in FIG. 13 to encode and decode the point cloud data.

Layering of point cloud data according to embodiments may have a layer structure in terms of SNR, spatial resolution, color, temporal frequency, bit depth, or the like depending on the application field, and may configure layers in a direction in which data density increases based on the octree structure or LOD structure.

That is, when the LOD is generated based on the octree structure, the LOD may be defined to increase in a direction in which the detail increases, that is, in a direction in which the octree depth level increases. In the present disclosure, a layer may have the same meaning as a level, a depth, and a depth level.

Referring to FIG. 13, for example, in an octree structure having 7 depth levels except the root node level (or root level), LOD 0 is configured to include levels from the root node level to the octree depth level 4, and LOD 1 is configured to include levels from the root node level to octree depth level 5, and LOD 2 is configured to include levels from root node level to octree depth level 7.

FIG. 13-(a) illustrates a bitstream structure of geometry data according to embodiments, and FIG. 13-(b) illustrates a bitstream structure of attribute data according to embodiments.

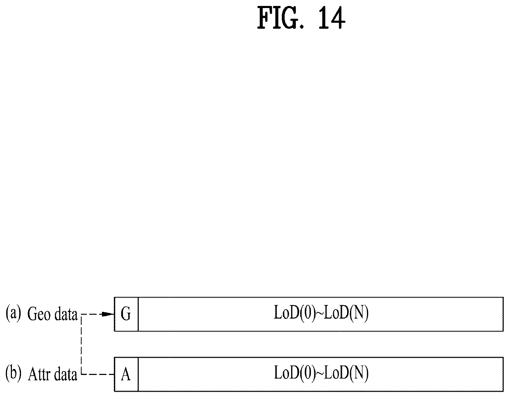

A method/device according to embodiments may generate LODs based on the layering of the octree structure as shown in FIG. 13 and configure a geometry bitstream and an attribute bitstream as shown in FIGS. 14-(a) and 14-(b).

The transmission device according to the embodiments may divide a bitstream acquired through point cloud compression into a geometry bitstream and an attribute bitstream according to data types to transmit the bitstream.

In this case, each bitstream may be composed of slices and transmitted. According to embodiments, each of the geometry bitstream (e.g. FIG. 14-(a)) and the attribute bitstream (e.g. FIG. 14-(b)) may be configured as one slice and delivered regardless of the layer information or LoD information. In this case, to use only some of the layers or LoDs, an operation of decoding the bitstream, an operation of selecting only a part to be used and removing unnecessary parts, and an operation of re-encoding based on only necessary information should be performed.

The present disclosure proposes a method of dividing a bitstream into layers (or LoDs) to avoid such unnecessary intermediate operations.

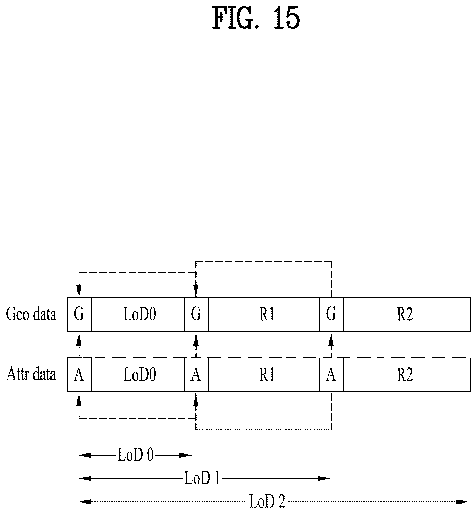

FIG. 15 is a diagram illustrating an example of a bitstream configuration for delivering a bitstream divided into layers (or LoDs) according to embodiments.

For example, in the case of LoD-based PCC technology, a lower LoD is included in a higher LoD. That is, the higher LoD includes all points of the lower LoD. In addition, when information on points included in the current LoD but not included in the previous LoD, namely, new points added to each LoD is defined as R (rest or retained), the transmission device may divide the initial LoD information and the information R newly included in each LoD into independent units (e.g. slices) and transmit the same, as shown in FIG. 15.

In other words, a set of new points added to configure each LoD compared to the previous LoD may be defined as information R. FIG. 15 illustrates an example in which LoD1 includes LoD0 and information R1, and LoD2 includes LoD1 and information R2.

According to an embodiment, points sampled for one or more octree depth levels may be determined as data belonging to information R. That is, a set of points sampled for one or more octree depth levels (that is, points matched to an occupied node) may be defined as information R. According to another embodiment, points sampled for one octree depth level may be divided into a plurality of pieces of information R according to a predetermined criterion. In this case, various criteria for dividing one octree depth level into a plurality of pieces of information R may be considered as follows. For example, when one octree depth level is divided into M pieces of information R, the M pieces of information R may be configured such that the data in information R may have consecutive Morton codes, or may be grouped such that the data in information R have the same remainder obtained by dividing the Morton code order index by M. Alternatively, M pieces of information R may be configured by grouping data at the same position when grouped as sibling nodes. According to another embodiment, if necessary, some of the sampled points at a plurality of octree depth levels may be determined as information R.

In the example of FIG. 15, a geometry bitstream and an attribute bitstream are each divided into three slices according to embodiments. Each slice includes a header and a payload (also called a data unit) containing actual data (e.g., geometry data, attribute data). The header may contain information about a corresponding slice. In addition, the header may further contain reference information related to a previous slice, a previous LoD, or a previous layer for LoD configuration.

For example, referring to FIG. 15, the geometry bitstream is divided into a slice carrying geometry data belonging to LoD0, a slice carrying geometry data belonging to information R1, and a slice carrying geometry data belonging to information R2. The attribute bitstream is divided into a slice carrying attribute data belonging to LoD0, a slice carrying attribute data belonging to information R1, and a slice carrying attribute data belonging to information R2.

The reception method/device according to the embodiments may receive a bitstream divided into LODs or layers, and may efficiently decode only data to be used without a complicated intermediate process.

In this regard, various embodiments may be applied to transmit the bitstream.

For example, the geometry bitstream and the attribute bitstream may be delivered respectively. Alternatively, the geometry bitstream and the attribute bitstream may be multiplexed into one bitstream to be delivered.

When each bitstream contains LoD0 and one or more pieces of information R, the order of delivery of LoD0 and the one or more pieces of information R may vary.

In the example of FIG. 15, the geometry bitstream and the attribute bitstream are delivered, respectively. In this case, LoD0 including the geometry bitstream and two pieces of information R (R1, R2) are delivered sequentially, and LoD0 including the attribute bitstream and two pieces of information R (R1, R2) are delivered sequentially.

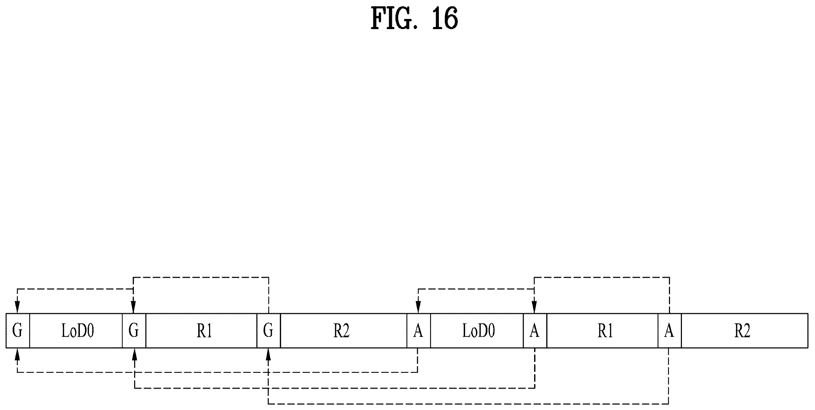

FIG. 16 illustrates an exemplary bitstream sorting used when a geometry bitstream and an attribute bitstream are multiplexed into one bitstream according to embodiments.

The transmission method/device according to the embodiments may serially transmit geometry data and attribute data as shown in FIG. 16 in transmitting a bitstream. In this operation, depending on the type of data, the entire geometry data (or geometry information) may be transmitted first, and then attribute data (or referred to as attribute information) may be transmitted. In this case, the geometry data may be quickly reconstructed based on the transmitted bitstream information.

Referring to FIG. 16, for example, the layers (LODs) containing the geometry data may be positioned first in the bitstream, and the layers (LODs) containing the attribute data may be positioned after the geometry layers. Since the attribute data is dependent on the geometry data, the layers (LODs) containing the geometry data may be positioned before the layers (LODs) containing the attribute data. FIG. 16 illustrates an example in which LoD0 containing geometry data and two pieces of information R (R1, R2) are sequentially delivered, and then LoD0 containing attribute data and two pieces of information R (R1, R2) are sequentially delivered. In this regard, the positions may be changed according to embodiments. In addition, reference may be made between the geometry headers, and may also be made between the attribute headers and the geometry headers.

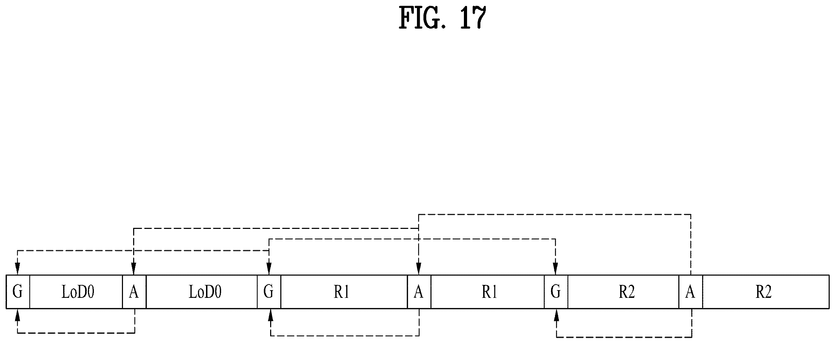

FIG. 17 illustrates another exemplary bitstream sorting method when a geometry bitstream and an attribute bitstream are multiplexed into one bitstream according to embodiments.

In transmitting a bitstream, the transmission method/device according to the embodiments may serially transmit geometry data and attribute data as shown in FIG. 17. In this case, bitstreams constituting the same layer containing geometry data and attribute data may be bundled and transmitted. In this case, when a compression technique for parallel decoding of geometry and attributes is used, the decoding execution time may be shortened. In this regard, information that needs to be processed first (low LoD and geometry should precede attributes) may be disposed first.

FIG. 17 illustrates an example of transmitting LoD0 containing geometry data, LoD0 containing attribute data, information R1 containing geometry data, information R1 containing attribute data, information R2 containing geometry data, and information R2 containing attribute data in this order. In this case, the positions may be changed according to embodiments. In addition, reference may be made between the geometry headers and may also be made between the attribute headers and the geometry headers.

The transmission/reception method/device according to the embodiments may efficiently select a layer (or LoD) desired in the application field at a bitstream level in transmitting and receiving a bitstream. In the bitstream sorting method according to the embodiments, when grouping and transmitting geometry information as shown in FIG. 16, there may be an empty part in the middle after selecting the bitstream level. In this case, the bitstream may need to be re-disposed.

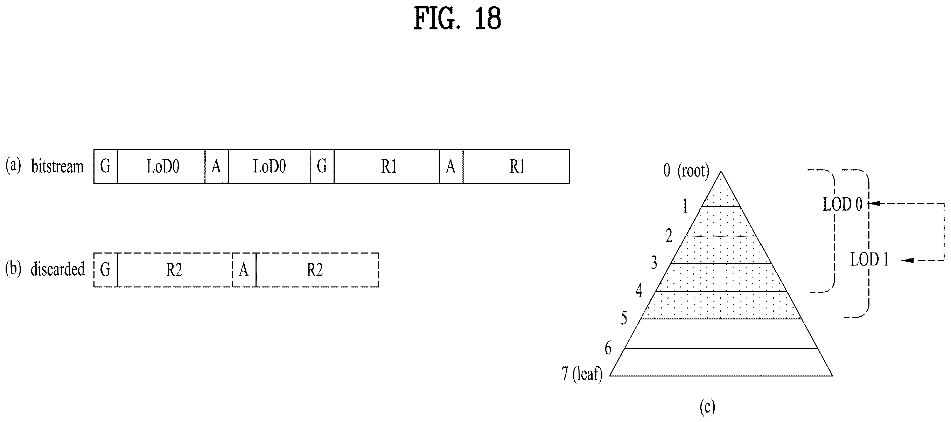

By bundling and transmitting the geometry data and attribute data according to layers as shown in FIG. 17, necessary information may be selectively delivered and/or unnecessary information may be selectively removed according to an application field, as shown in FIGS. 18-(a) to 18-(c) or FIGS. 19-(a) to 19-(c).

FIGS. 18-(a) to 18-(c) are diagrams illustrating an example of symmetric geometry-attribute selection according to embodiments.

For example, referring to FIGS. 18-(a) to 18-(c), when a part of the bitstream needs to be selected according to embodiments, the transmission device selects and transmits data only up to LoD1 (i.e., LoD0+R1), and information R2 corresponding to the upper layer (i.e., the new part of LoD2) is removed from the bitstream and not transmitted. In the case of symmetric geometry-attribute selection, geometry data and attribute data of the same layer are simultaneously selected and transmitted, or simultaneously selected and removed.

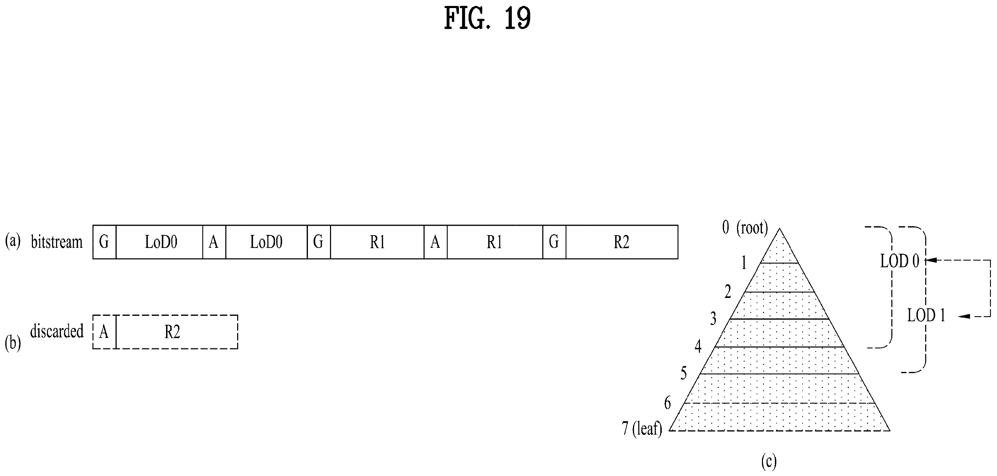

FIGS. 19-(a) to 19-(c) are diagrams illustrating an example of asymmetric geometry-attribute selection according to embodiments. In the case of asymmetric geometry-attribute selection, only one of the geometry data and the attribute data of the same layer is selected and transmitted or removed.

For example, referring to FIGS. 19-(a) to 19-(c), when a part of the bitstream needs to be selected according to embodiments, the transmission device selects and transmits LoD1 (LoD0 +R1) containing geometry data and attribute data, LoD1 (LoD0 +R1) containing attribute data, and R2 containing geometry data, and removes R2 containing attribute data from the bitstream so as not to be transmitted. In other words, for the attribute data, data other than the data of the upper layer (R2) is selected and transmitted. For the geometry data, data of all layers (from level 0 (root level) to level 7 (leaf level) in the octree structure) is transmitted.

When a part of a bitstream needs to be selected according to embodiments, a part of the bitstream may be selected using the symmetric geometry-attribute selection method of FIGS. 18-(a) to 18-(c), the asymmetric geometry-attribute selection method of FIGS. 19-(a) to 19-(c), or the combination of the symmetric geometry-attribute selection method and the asymmetric geometry-attribute selection method.

The segmentation of a bitstream, selection of a part of the bitstream, and the like described above are intended to support scalability of point cloud data.

Referring to FIG. 13, when point cloud data is represented in an octree structure and divided into LODs (or layers), scalable encoding/decoding (scalability) may be supported.

The scalability function according to the embodiments may include slice-level scalability and/or octree-level scalability.

LoD according to the embodiments may be used as a unit indicating a set of one or more octree layers. Also, the LoD may mean a bundle of octree layers to be configured on a slice-by-slice basis.

The LOD according to the embodiments may be used in a broad sense, such as a unit for dividing data in detail, beyond the meaning of the LOD in attribute encoding/decoding.

That is, spatial scalability by an actual octree layer (or scalable attribute layer) may be provided for each octree layer. However, when scalability is configured in the slice level before bitstream parsing, the selection may be performed in the LoD level.

For example, referring to FIG. 13, in an octree structure, the levels from the root level to level 4 correspond to LoD0, and the levels from the root level to level 5 correspond to LoD1. Also, the levels from the root level to level 8 (i.e., leaf level) correspond to LoD2.

In other words, in the example of FIG. 13, when scalability is used in the slice level, the provided scalable operation corresponds to three steps of LoD0, LoD1, and LoD2, and a scalable operation that may be provided in the decoding operation by the octree structure corresponds to 8 steps from the root level to the leaf level.

According to embodiments, when LoD0 to LoD2 are composed of respective slices, the transcoder (see FIG. 11) of the receiver or transmitter may select only LoD0, select only LoD1, or select LoD2 for scalable processing. In FIG. 13, LoD1 includes LoD0, and LOD2 includes LoD1 and LoD2.

For example, when only LoD0 is selected, the maximum octree level is 4, and one scalable layer may be selected from among octree layers 0 to 4 in the decoding operation. In this case, the reception device may consider a node size obtainable through the maximum octree level (or depth) as a leaf node, and may transmit the node size through signaling information.

For example, when LoD1 is selected, layer 5 may be added. Thus, the maximum octree level may be 5, and one scalable layer may be selected from among octree layers 0 to 5 in the decoding operation. In this case, the reception device may consider a node size obtainable through the maximum octree level (or depth) as a leaf node, and may transmit the node size through signaling information. According to embodiments, octree depths, octree layers, and octree levels may be units into which data is divided in detail.

For example, when LoD2 is selected, layers 6 and 7 may be added. Thus, the maximum octree level may be 7, and one scalable layer may be selected from among octree layers 0 to 7 in the decoding operation. In this case, the reception device may consider a node size obtainable through the maximum octree level (or depth) as a leaf node, and may transmit the node size through signaling information.

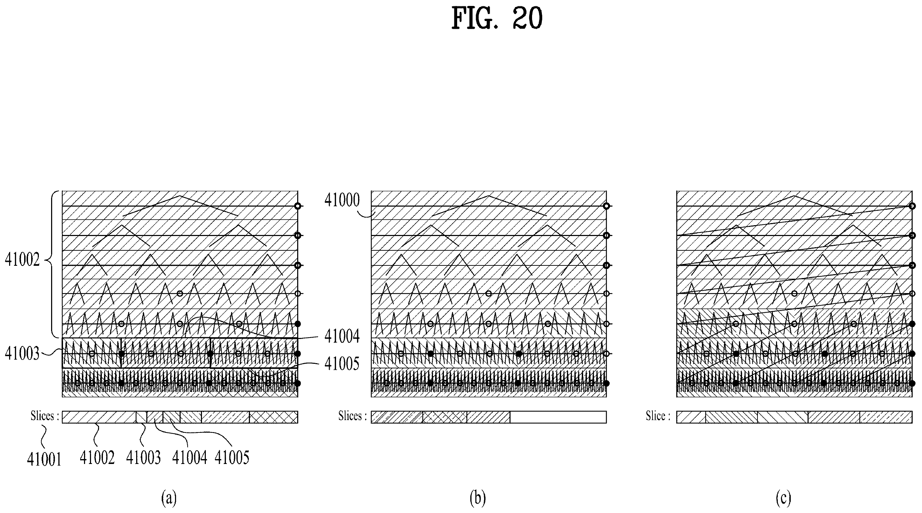

FIGS. 20-(a) to 20-(c) illustrate exemplary methods of configuring slices including point cloud data according to embodiments.

The transmission method/device/encoder according to the embodiments may configure a G-PCC bitstream by segmenting the bitstream in a slice structure. A data unit for detailed data representation may be a slice.

For example, one or more octree layers (or depths) may be matched to one slice.

The transmission method/device according to the embodiments, for example, the encoder, may configure a bitstream based on slices 41001 by scanning nodes (points) included in an octree in the direction of a scan order 41000. A slice may include nodes of one or more levels in the octree structure, may include only nodes of a specific level, or may include only some nodes of a specific level. Alternatively, it may include only some nodes of one or more levels.

FIG. 20-(a) illustrates an exemplary octree structure composed of 7 slices. In this example, a slice 41002 may include nodes of level 0 to level 4, and a slice 41003 may include some nodes of level 5. A slice 41004 may include some other nodes of level 5, and a slice 41005 may include some other nodes of level 5. That is, in FIG. 20-(a), level 5 is divided into three slices. Similarly, in FIG. 20-(a), level 6 (i.e., the leaf level) is also divided into three slices. In other words, a slice may be composed of some nodes of a specific level.

FIG. 20-(b) illustrates an exemplary octree structure composed of four slices. In this example, one slice includes the nodes of level 0 to level 3 and some nodes of level 4, and another slice includes the other nodes of level 4 and some nodes of level 5. In addition, another slice includes the other nodes of level 5 and some nodes of level 6, and the other slice includes the other nodes of level 6.

FIG. 20-(c) illustrates an exemplary octree structure composed of five slices. One slice is composed of the nodes of level 0 to level 3, and four slices are composed of the nodes of level 4 to level 6. That is, a slice includes some nodes of level 4, some nodes of level 5, and some nodes of level 6. In other words, in levels 4 to 6, a slice may include some data of level 4 and data of level 5 or level 6 corresponding to a child node of the data.

In other words, as shown in FIGS. 20-(b) and 20-(c), when multiple octree layers are matched to a slice, only some nodes of each of the layers may be included in the slice. When multiple slices constitute a geometry/attribute frame in this way, information necessary for the reception device to configure layers may be transmitted to the reception device through signaling information. For example, the signaling information may include information about the layers included in each slice and information about the nodes included in each layer.

The encoder and the device corresponding to the encoder according to the embodiments may encode the point cloud data, and generate and transmit a bitstream containing the encoded data and signaling information (or parameter information) related to the point cloud data.

Further, in generating a bitstream, the bitstream may be generated based on the bitstream structure (e.g., see FIGS. 14 to 20, etc.) according to the embodiments. Accordingly, the reception device, the decoder, a corresponding device, or the like according to the embodiments may receive and parse the bitstream configured to be suitable for selective decoding of some data, thereby decoding and efficiently providing only a part of the point cloud data.

Next, scalable transmission of point cloud data will be described.

The point cloud data transmission method/device according to the embodiments may scalably transmit a bitstream containing point cloud data, and the point cloud data reception method/device according to the embodiments may scalably receive the bitstream and decode the same.

When the bitstream having the structure illustrated in FIGS. 11 to 20 is used for scalable transmission, signaling information for selecting a slice required by the reception device may be transmitted to the reception device. The scalable transmission may not mean transmitting or decoding the entire bitstream, but may mean transmitting or decoding only a part of the bitstream. Accordingly, low-resolution point cloud data may be provided.

When the scalable transmission is applied to an octree-based geometry bitstream according to embodiments, point cloud data should be allowed to be configured based on only information about layers up to a specific octree layer for the bitstream of each octree layer (FIG. 13) from the root node to the leaf node.

To this end, a target octree layer should not have a dependency on lower octree layer information. This may be a constraint applied to geometry coding/attribute coding in common.

In addition, in scalable transmission, a scalable structure used for the transmission/reception device to select a scalable layer needs to be transmitted to the reception device. Considering the octree structure according to the embodiments, all octree layers may support scalable transmission, or scalable transmission may be allowed only for a specific octree layer and lower layers. For example, when some of the octree layers are included, signaling information may be delivered to the reception device to indicate a scalable layer in which the slice is included. Thus, the reception device may determine whether the slice is necessary/unnecessary in the bitstream stage. In the example of FIG. 20-(a), level 0 (i.e., root level) to level 4 41002 may constitute one scalable layer without supporting scalable transmission, and the lower octree layers may be matched to scalable layers in a one-to-one correspondence manner. In general, scalability may be supported for a part corresponding to the leaf node. As shown in FIG. 20-(c), when multiple octree layers are included in a slice, it may be defined that one scalable layer shall be configured for the layers.

In this case, scalable transmission and scalable decoding may be used separately depending on the purpose. According to embodiments, the scalable transmission may be used in order for the transmitting/reception device to select information up to a specific layer without involving the decoder. According to embodiments, scalable decoding may be used to select a specific layer during coding. That is, the scalable transmission may support selection of necessary information in a compressed state without involving the decoder (i.e., in the bitstream stage), such that the transmission or reception device may determine a specific layer. On the other hand, in the case of scalable decoding, encoding/decoding may be supported for information only up to a necessary part in the encoding/decoding process. Therefore, scalable decoding may be used in an operation such as scalable representation.

In this case, the layer configuration for scalable transmission may be different from the layer configuration for scalable decoding. For example, the lower three octree layers including the leaf node may constitute one layer in terms of scalable transmission. On the other hand, in terms of scalable decoding, when all layer information is included, scalable decoding may be enabled for each of the leaf node layer, leaf node layer-1 and leaf node layer-2.

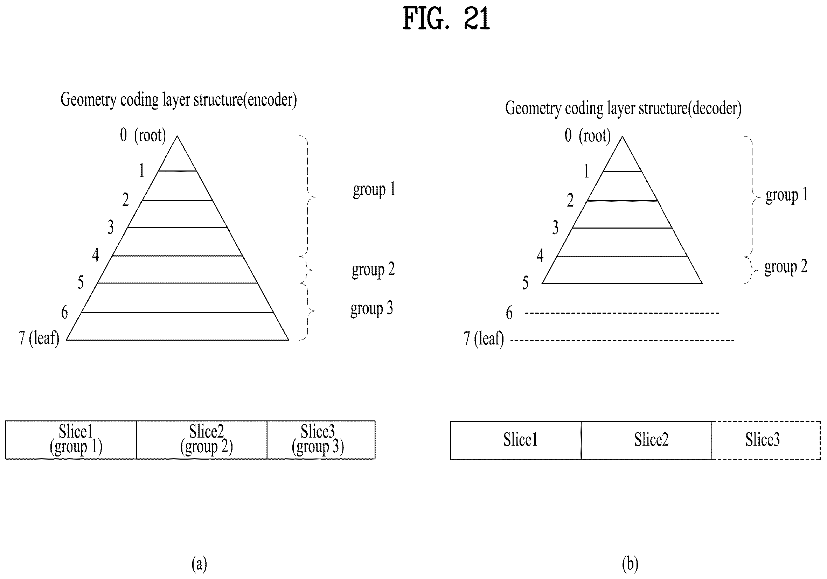

FIGS. 21-(a) and 21-(b) illustrate geometry coding layer structures according to embodiments. In particular, FIG. 21-(a) illustrates an example of three slices generated by the layer group structure at an encoder at the transmitter side, and FIG. 21-(b) illustrates an example of a partially decoded output using two slices at a decoder at the receiving side.

When fine granularity slicing(FGS) is enabled, a G-PCC bitstream may be sliced into multiple sub-bitstreams. Here, fine granularity slicing may be referred to as layer group based slicing. To effectively use the layering structure of G-PCC, each slice may include coded data from a partial coding layer or a partial region. Using the segmentation or partitioning of slices paired with the coding layer structure, use cases of scalable transmission or spatial random access may be supported in an efficient manner.

Layer group based slice segmentation

In fine granularity slicing, each slice segment may contain data coded from a layer group defined as follows.

A layer group may be defined as a group of contiguous tree layers, wherein the start and end depths of the group of tree layers may be arbitrary numbers in the tree depth, and the start depth may be less than the end depth. The order of the data coded in a slice segment may be the same as the order of the data coded in a single slice.

For example, considering a geometry coding layer structure with eight coding layers as shown in FIG. 21-(a), there are three layer groups, each of which is matched to a different slice. More specifically, layer group 1 for coding layers 0 to 4 is matched to slice 1, layer group 2 for coding layer 54 is matched to slice 2, and layer group 3 for coding layers 6 and 7 4 is matched to slice 3. When the first two slices (i.e., slices 1 and 2) are transmitted or selected, the decoded output will be partial layers 0 to 5, as shown in FIG. 21-(b). By using slices in the layer group structure, partial decoding of coding layers may be supported without accessing the entire bitstream.

The bitstream and point cloud data according to the embodiments may be generated based on coding layer-based slice segmentation. By slicing the bitstream at the end of the coding layer in the encoding process, the method/device according to the embodiments may select a related slice, thereby supporting scalable transmission or partial decoding.

FIG. 21-(a) shows a geometry coding layer structure with 8 layers in which each slice corresponds to a layer group. Layer group 1 includes coding layers 0 to 4. Layer group 2 includes coding layer 5. Layer group 3 is a group for coding layers 6 and 7. When a geometry (or attribute) has a tree structure having eight levels (depths), a bitstream may be hierarchically configured by grouping data corresponding to one or more levels (depths). Each group may be included in one slice.

FIG. 21-(b) shows the decoded output when selecting two slices from among three slices. When the decoder selects group 1 and group 2, partial layers of levels (depths) 0 to 5 of the tree are selected. That is, partial decoding of coding layers may be supported by using the slices of the layer group structure, even without accessing the entire bitstream.

For the partial decoding process according to the embodiments, the encoder may generate three slices based on the layer group structure. The decoder according to the embodiments may select two slices from among the three slices and perform partial decoding.

A bitstream according to embodiments may include layer group-based slices. Each slice may include a header containing signaling information related to point cloud data (i.e., geometry data and/or attribute data) included in the slice. The reception method/device according to the embodiments may select slices and decode point cloud data contained in the payload of the slices based on the header included in the selected slices.

A method/device according to embodiments may further divide the layer group into several subgroups in consideration of use cases of spatial random access in addition to the layer group structure. The subgroups are mutually exclusive, and a set of subgroups may be the same as a layer group. Since the points of each subgroup form a boundary in the spatial domain, a subgroup may be represented by subgroup bounding box information. Based on spatial information, the layer group and subgroup structure may support access to a region of interest (ROI) by selecting slices that cover the ROI. By efficiently comparing the ROI with the bounding box information about each slice, spatial random access within a frame or tile may be supported.

A method/device according to embodiments may configure slices for delivering point cloud data, as shown in FIG. 21-(a).

According to embodiments, the entire coded bitstream may be included in a single slice. For multiple slices, each slice may contain a sub-bitstream. The order of the slices may be the same as the order of the sub-bitstreams. Also, each slice may be matched to a layer group in a tree structure.

Further, slices may not affect previous slices, just as higher layers of the geometry tree do not affect lower layers.

The segmented slices according to the embodiments are efficient in terms of error robustness, effective transmission, support of region of interest, and the like.

1) Error resilience

Compared to a single slice structure, segmented slices may be more robust to errors. In other words, when a slice contains the entire bitstream of a frame, data loss may affect the entire frame data. On the other hand, when the bitstream is segmented into multiple slices, at least one slice that is not affected by a loss even when at least one slice is lost may be decoded.

2) Scalable transmission

In the present disclosure, multiple decoders having different capabilities may be supported.

When coded point cloud data (i.e., a point cloud compression (PCC) bitstream) is contained in a single slice, the LOD of the coded point cloud data may be determined prior to encoding. Accordingly, multiple pre-encoded bitstreams having different resolutions of the point cloud data may be independently transmitted, which may be inefficient in terms of large bandwidth or storage space.

When the coded point cloud data (i.e., the PCC bitstream) is contained in segmented slices, the single bitstream may support decoders of different levels. From the decoder perspective, the reception device may select target layers and may deliver the partially selected bitstream to the decoder. Similarly, by using a single bitstream without partitioning the entire bitstream, a partial bitstream may be efficiently generated by the transmission device.

3) Region based spatial scalability

In terms of the G-PCC requirement according to embodiments, region based spatial scalability may be defined as follows: a compressed bitstream is composed of one or more layers, and thus a specific ROI may have a higher density with additional layers, and layers may be predicted from lower layers.

To support this requirement, it is necessary to support region-wise different detailed representation of regions. For example, in VR/AR applications, in a VR/AR application, far objects may be represented with lower precision, and nearer objects may be represented with higher precision. Further, the decoder may increase the resolution of the interested area at the request. This operation may be implemented using the geometry octree and the scalable structure of G-PCC such as the scalable attribute coding scheme.

According to embodiments, decoders should access the entire bitstream based on the current slice structure containing the entire geometry or attributes, which may cause inefficiency in terms of bandwidth, memory, and decoder. On the other hand, when the bitstream is segmented into multiple slices, and each slice contains sub-bitstreams according to scalable layers, the decoder according to the embodiments may efficiently select slices before parsing the bitstream, as needed.

A method/device according to embodiments may generate a layer group using a tree structure (or layer structure) of the point cloud data.

Referring to FIG. 21-(a) as an example, there are eight layers in a geometry coding layer structure (e.g., an octree structure), and three slices may be used to contain one or more layers. A group represents a group of layers. When scalable attribute coding is used, the tree structure is identical to the geometry tree structure. The same octree-slice mapping may be used to create attribute slice segments.

A layer group according to the embodiments represents a bundle of layer structure units generated in G-PCC coding, such as an octree layer or an LoD layer.

A sub-group may be represented as a set of neighboring nodes within a layer group. For example, it may be configured as a set of nodes neighboring each other by Morton code order, a set of neighboring nodes based on distance, or a set of neighboring nodes based on coding order. Nodes in a parent-child relationship may also be present within a subgroup.

When subgroups are defined, a boundary occurs in the middle of the layer, and a parameter such as entropy_continuation_enabled_flag may be signaled to indicate whether entropy continuation is maintained at the boundary. Continuation may also be maintained by referencing the previous slice through ref_slice_id.

The tree structure according to the embodiments may be an octree structure, and the attribute layer structure or attribute coding tree according to the embodiments may include a level of detail (LOD) structure. In other words, the tree structure for the point cloud data may include layers corresponding to depths or levels, and the layers may be grouped.

A method/device according to the embodiments (e.g., the octree analyzer 30002 or LOD generator 30009 of FIG. 3, the octree synthesizer 7002 or LOD generator 7008 of FIG. 7) may generate an octree structure of geometry or an LOD tree structure of attributes. Further, the point cloud data may be grouped based on layers of the tree structure.

Referring to FIG. 21-(a), multiple layers are grouped into first to third groups. A group may be further divided to form subgroups.

According to embodiments, a slice may contain coded data from a layer group. Here, the layer group is defined as a group of consecutive tree layers. The start and end depths of the tree layers may be specific numbers in the tree depth, wherein the number for the start is less than that for the end.

While FIG. 21-(a) illustrates the geometry coding layer structure as an example of a tree structure, a coding layer structure for attributes may also be created in a similar manner.

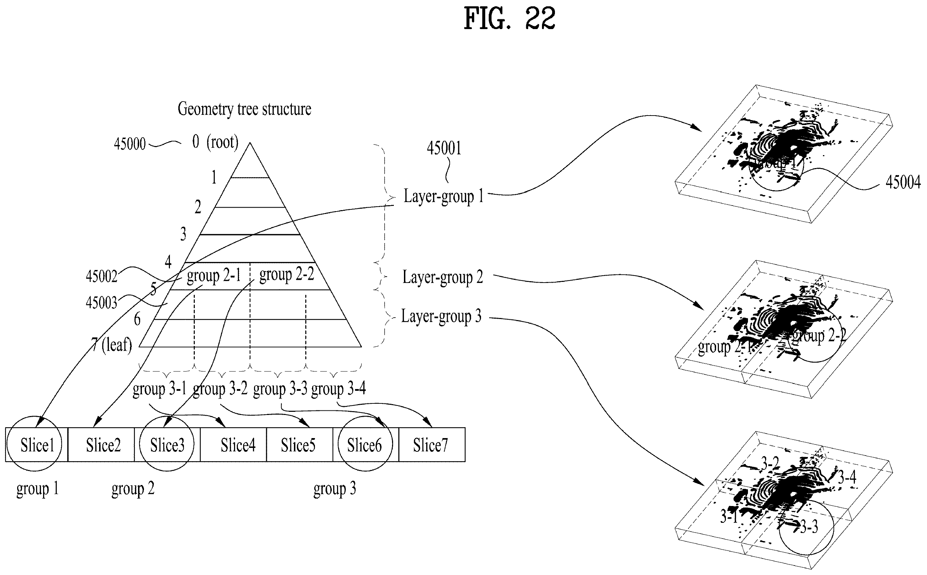

FIG. 22 is a diagram illustrating a layer group and subgroup structure according to embodiments.

Referring to FIG. 22, point cloud data and bitstreams may be distinguished and represented by bounding boxes.

In FIG. 22, a subgroup structure and bounding boxes corresponding to the subgroups are shown. Layer group 2 is divided into two subgroups (group2-1 and group2-2), which are included in different slices, and layer group 3 is divided into four subgroups (group3-1, group3-2, group3-3, and group3-4), which are contained in different slices. Given the slices of the layer groups and subgroups along with the bounding box information, spatial access may be performed by 1) comparing the bounding box of each slice with the ROI, 2) selecting a slice where the subgroup bounding box overlaps with the ROI, and 3) decoding the selected slice.

When an ROI is considered in region 3-3, slices 1, 3, and 6 are selected as subgroup bounding boxes of layer group 1 and subgroups 2-2 and 3-3 that cover the ROI. It is assumed for effective spatial access that there is no dependency between subgroups from the same layer group. In live streaming or low-latency use cases, time efficiency may be increased by performing selection and decoding when each slice segment is received.

In encoding geometry and/or attributes, a method/device according to embodiments may present data as a tree 2200 composed of layers (which may be referred to as depths, levels, or the like). Point cloud data corresponding to layers (depths/levels) may be grouped into layer groups (or groups) 45000. Layer group 2 may be further divided (segmented) into two subgroups 45002, and layer group 3 may be further divided (segmented) into four subgroups 45003. Each subgroup may be configured as a slice to generate a bitstream.

The reception device according to the embodiments may receive a bitstream, select a specific slice from the bitstream, and decode a bounding box corresponding to a subgroup included in the selected slice. For example, when slice 1 is selected, a bounding box 45004 corresponding to layer group 1 may be decoded. Layer group 1 may be data corresponding to the largest region. When additionally displaying an detailed region for layer group 1, a method/device according to the embodiments may select slice 3 and/or slice 6, and hierarchically and partially access the bounding box (point cloud data) of subgroup 2-2 and/or subgroup 3-3 for the detailed region included in the region of layer group 1.

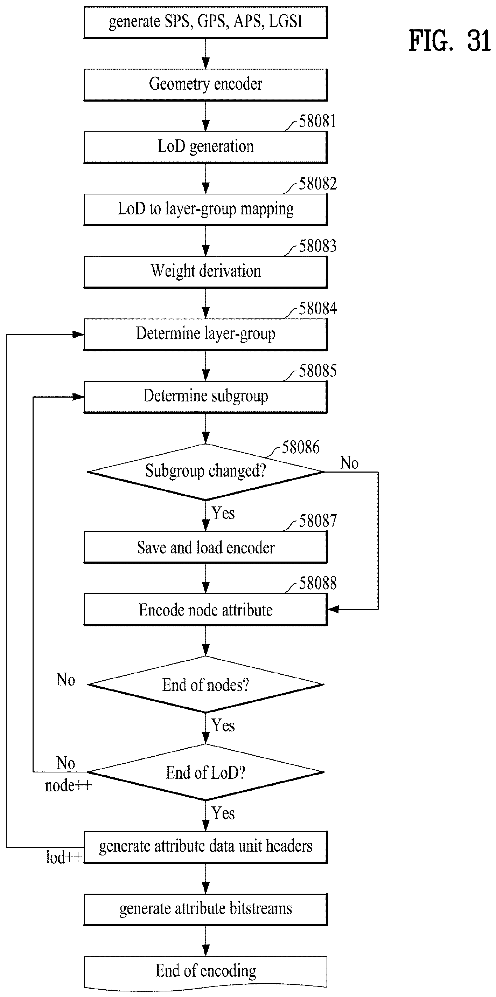

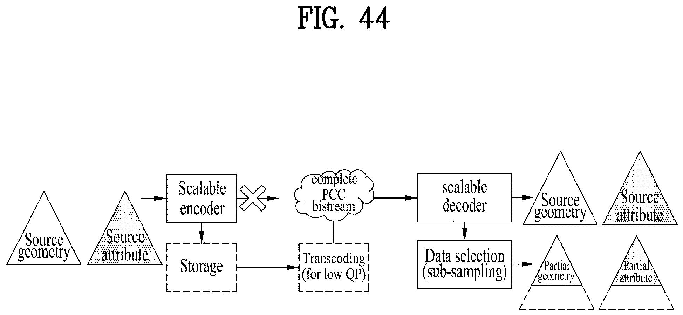

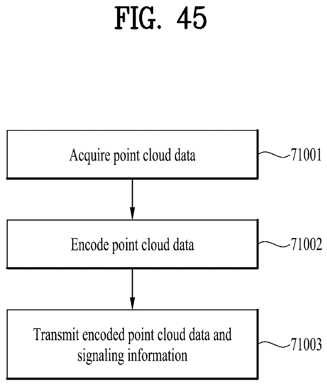

The encoding and decoding of point cloud data using the layer groups and subgroups of FIG. 22 may be performed by the transmission/reception devices of FIG. 1, the encoding and decoding of FIG. 2, the transmission device/method of FIG. 3, the reception device/method of FIG. 7, the transmission/reception device/method of FIGS. 8 and 9, the devices of FIG. 10, the transmission/reception methods of FIGS. 31, 33 and 34, the transmission/reception devices of FIGS. 30 and 32, and the transmission/reception methods of FIGS. 44 and 45.

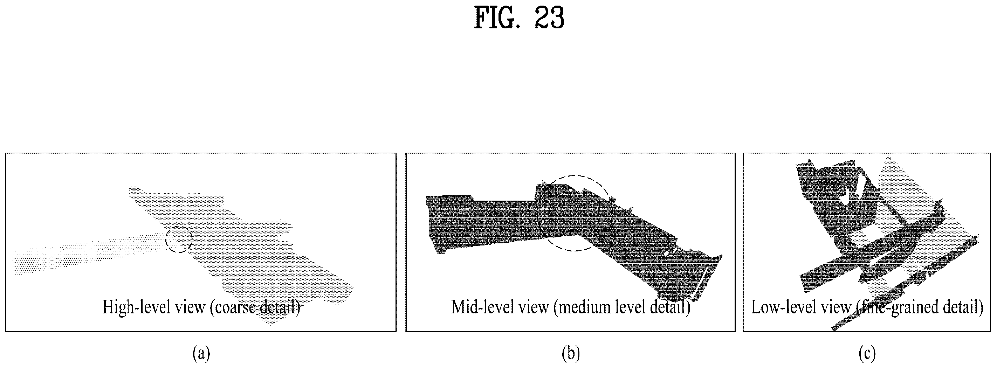

FIGS. 23-(a) to 23-(c) illustrate representations of layer group-based point cloud data according to embodiments.

Devices/methods according to embodiments may provide efficient access to large-scale point cloud data or dense point cloud data through layer group slicing based on scalability and spatial access capabilities. Point cloud data may take a significant amount of time to render or display content due to the high number of points and the large size of the data. Therefore, as an alternative approach, the level of detail may be adjusted based on the viewer's interest. For example, when the viewer is far away from a scene or object, structural or global region information is more important than local detailed information. On the other hand, when the viewer moves closer to a specific region or object, detailed information about the ROI is needed. Using an adaptive approach, the renderer according to embodiments may efficiently provide data of sufficient quality to the viewer. FIGS. 23-(a) to 23-(c) illustrate an example of increasing detail for three levels of viewing distance that changes based on ROI.

The high-level view in FIG. 23-(a) shows a coarse detail, the mid-level view in FIG. 23-(b) shows a medium-level detail, and the low-level view in FIG. 23-(c) shows a fine-grained detail.

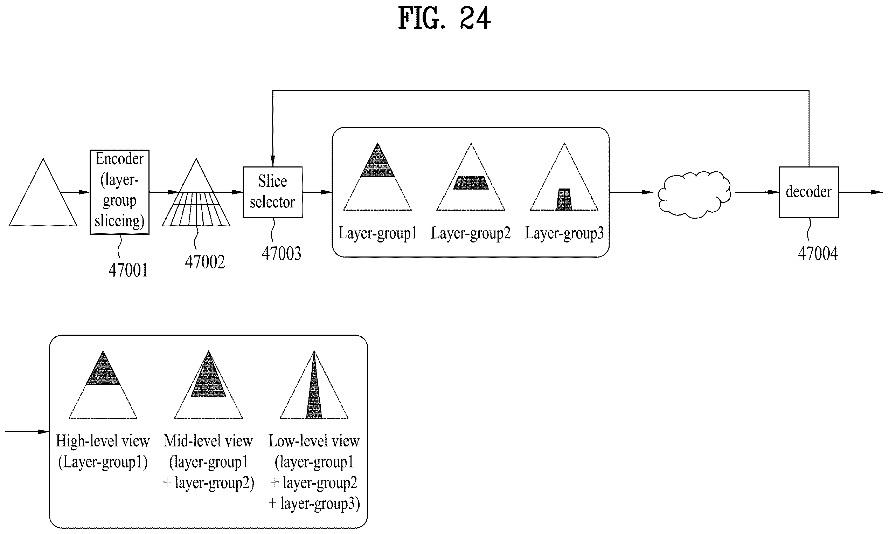

FIG. 24 illustrates a point cloud data transmission/reception device/method according to embodiments.

Multi-resolution ROI may be supported when layer group slicing is used to generate a G-PCC bitstream.

Referring to FIG. 24, multi-resolution ROIs may be supported by the scalability and spatial accessibility of hierarchical slicing. In FIG. 24, the encoder 47001 at the transmitting side may generate bitstream slices of spatial subgroups of each layer group or bitstream slices of octree layer groups. Upon request, slices matching the ROI of each resolution are selected and transmitted to the receiving side. The size of the entire bitstream is reduced compared to the tile-based approach, as it does not include details beyond the requested ROI. At the receiving side, the decoder 47004 may combine the slices to produce three outputs, for example, 1) a high-level view output from a layer group; 2) a mid-level view output from selected subgroups of layer group 1 and layer group 2; and 3) a low-level view output of good quality details from selected subgroups of layer groups 2 and 3 and layer group 1. The outputs may be generated progressively, and therefore the receiver may provide a viewing experience such as zooming that progressively increases the resolution from the high-level view to the low-level view.

The encoder 47001 may correspond to a geometry encoder and/or an attribute encoder as a point cloud encoder according to embodiments. The encoder may slice the point cloud data based on layer groups (or groups). A layer may be referred to as a depth of a tree, a level of LOD, or the like. As shown in part 47002, the depth of the octree of the geometry and/or the level of the attribute layer may be divided into layer groups (or subgroups).

The slice selector 47003, in connection with the encoder 47001, may select a segmented slice (or sub-slices) and selectively and partially transmit data such as layer group 1 to layer group 3.

The decoder 47004 may decode the selectively and partially transmitted point cloud data. For example, it may decode layer group 1 (which has a high depth/layer/level or an index of 0, or is close to the root) for the high-level view. Also, decoding may be performed by increasing the index of the depth/level over layer group 1 alone based on layer group 1 and layer group 2 for the mid-level view. Further, decoding may be performed based on layer group 1 to layer group 3 for the low-level view.

Referring to FIG. 24, the encoder 47001 according to the embodiments may receive point cloud data as input and slice the same into layer groups. That is, the point cloud data may be hierarchically structured and divided into layer groups. The hierarchical structure may refer to an octree structure or a level of detail (LoD). Part 47002 represents the point cloud data divided into layer groups. The slice selector 47003 may select layer groups (or corresponding slices), and the selected slices are transmitted to the decoder 47004 at the receiving side. The decoder 47004 may reconstruct only layer group 1, reconstruct layer groups 1 and 2, or reconstruct all received layer groups by combining the received slices as desired by the user. The layer groups are hierarchical and have different levels of detail. Reconstructing only layer group 1 may result in a broader range of reconstruction and coarse detail. Reconstructing all layer groups 1 to 3 may result in a narrower range of reconstruction and fine detail.

Scalable coding and decoding of geometry data has been described above.

According to embodiments, scalable coding and decoding may also be applied to attribute data.

The present disclosure describes a layer-based attribute compression method for improving the transmission efficiency of scalable attribute compression.

In particular, the present disclosure proposes an LoD generation method for partial coding or partial decoding of attribute data.

More specifically, the present disclosure proposes methods for efficiently performing LoD generation and nearest neighbor (NN) search in the event of a missing slice.

Further, the present disclosure proposes methods for performing NN search and position correction on a per subgroup basis.

In the present disclosure, a layer group may be further divided into multiple subgroups. The subgroups according to the embodiments are mutually exclusive and a set of subgroups may be the same as the layer group. The points in each subgroup are bounded in a spatial region, and therefore the subgroups may be indicated by subgroup bounding box information. Also, a layer group may be referred to as a subgroup. In the present disclosure, the terms subgroup may be used interchangeably with slice or FGS. Thus, a missing (or vanishing) slice may be referred to as a missing subgroup or a missing FGS.

For example, a sub-group (or subgroup or sub group) may be represented as a set of neighboring nodes in a layer group. In this case, it may be configured as a set of nodes neighboring each other by Morton code order, a set of nodes neighboring each other based on distance, or a set of nodes neighboring each other according to coding order.

A subgroup may correspond to one LOD, or may correspond to two or more LODs. Further, a slice may correspond to one LOD, or may correspond to two or more LODs. Thus, subgroups may be used interchangeably with slices or FGSs in the present disclosure. According to embodiments, the terms layer, depth, level, and depth level may be used interchangeably in an octree structure.

In the present disclosure, subgroups may have a parent-child relationship. In other words, a parent subgroup may have one or more child subgroups. In addition, child subgroups at the same level may be referred to as sibling subgroups.

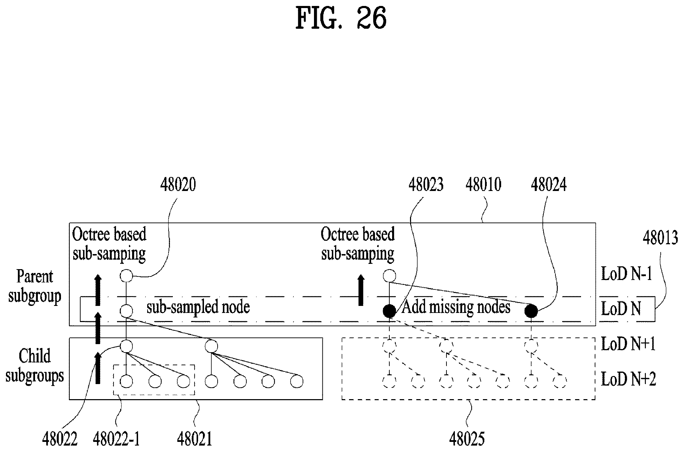

Furthermore, while octree-based geometry coding proceeds from the root level toward the leaf level with gradual segmentation, sub-sampling performed to generate LoDs proceeds from the leaf level to the root level. In FIG. 26, for example, the arrows indicate the direction of sub-sampling. The LOD is a level of detail of the point cloud content, where a decrease in the value of LOD indicates degradation of the detail of the point cloud content, while an increase in the value of LOD indicates enhancement of the detail of the point cloud content. In FIG. 26, LoD N-1 is the lowest level of detail and LoD N+2 is the highest level of detail.

In one embodiment, the LoD generation and NN search performed by the transmission device of the present disclosure is performed by the LoD generator 30009 of FIG. 3 or the prediction/lifting/RAHT transform processor 8010 of FIG. 8. This embodiment is merely intended to provide understanding for those skilled in the art, and the LoD generation and NN search may be performed by respective blocks or modules. In one embodiment, the LoD generation and NN search may be performed by the LoD generator 7008 of FIG. 7 or the prediction/lifting/RAHT inverse transform processor 9009 of FIG. 9 in the reception device of the present disclosure. This embodiment is merely intended to provide understanding for those skilled in the art, and the LoD generation and NN search may be performed by respective blocks or modules.

The present disclosure describes a method of generating LoDs when geometry information is encoded (or decoded) based on a geometry tree (e.g., an octree) and there is a missing slice (i.e., missing FGS). Also, an NN search method used in this case is described.

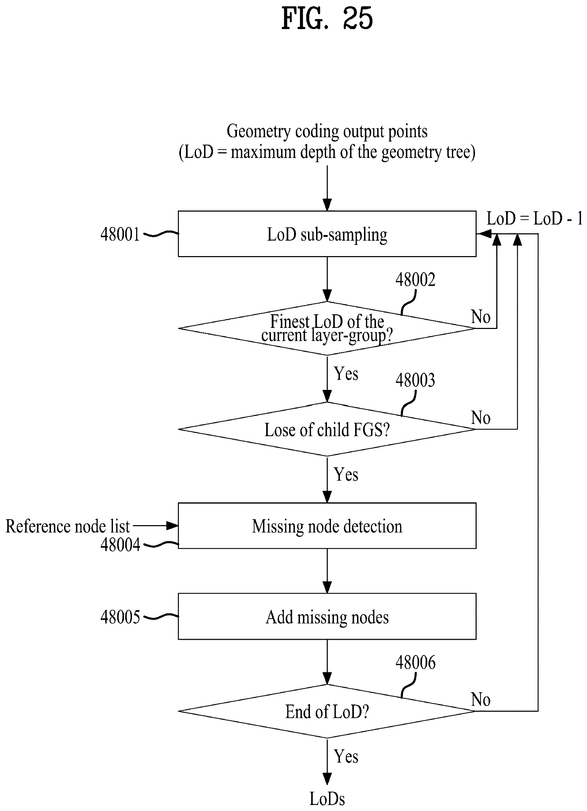

FIG. 25 is a flowchart illustrating an exemplary LoD generation method according to embodiments.

In FIG. 25, it is assumed that geometry-coded (or decoded) points are input for attribute coding (or attribute decoding). In this case, the LoD may be the maximum depth of the geometry tree.

That is, sub-sampling for LOD generation is performed (operation 48001). Then, it is determined whether the current LoD is the finest LOD of the current layer-group (operation 48002). Here, FGS (or layer-group-based slicing) refers to dividing a slice (i.e., layer-group) into multiple slices (i.e., subgroups). In operation 48002, it is determined whether the current LoD is the bottom in the layer-group.

When the LoD is not the finest LOD of the current layer-group, operation 48001 is performed. When the LoD is the finest LOD of the current layer-group, operation 48003 is performed to determine whether the child FGS (also referred to as a child slice or child subgroup) is missing (operation 48003). That is, it is determined whether there is a missing FGS (or slice or subgroup).

When it is determined in operation 48003 that there is no missing FGS, operation 48001 is performed. When it is determined that there is a missing FGS, missing nodes are detected (operation 48004). Then, alternative nodes for the detected missing nodes are added to the corresponding LOD (operation 48005). In other words, if there is a missing FGS, nodes that are needed for the LoD generation are searched for.

Then, it is determined whether the end of the LoDs has been reached (operation 48006). When it is determined that the end of the LoDs has not been reached, operation 48001 is performed. When it is determined that the end of the LoDs has been reached, the LOD generation is terminated, and NN search is performed based on the generated LoDs.

Operation 48003 and operation 48004 are described in detail below.

As described above, the point cloud data transmission method/device may scalably transmit a bitstream containing point cloud data on a per slice (or subgroup) basis, and a point cloud data reception method/device according to embodiments may scalably receive and decode the bitstream on a per slice (or subgroup) basis.

Thus, in the decoding operation, the decoder on the receiving side may have all slices or may have some missing slices. For example, when partial decoding is performed by the decoder, some slices (or subgroups or FGSs) may not be present. These slices may be referred to as missing (i.e., lost) slices (or subgroups or FGSs).

Accordingly, the encoder on the transmitting side according to the present disclosure generates LoDs in consideration of such cases.

FIG. 26 is a diagram illustrating an exemplary LoD generation method used when there is a missing FGS (i.e., a missing subgroup).

In FIG. 26, 48010 represents a parent subgroup, and 48021 and 48025 represent child subgroups of the parent subgroup 48010. For simplicity, 48021 will be referred to as a first child subgroup and 48025 will be referred to as a second child subgroup. It is assumed that the second child subgroup 48025 is missing.

As described above, sub-sampling proceeds from the leaf level to the root level. Thus, in sub-sampling, the nodes in part 48022-1 in layer LoD N+2 in the first child subgroup 48021 are sibling nodes, and one of the three sibling nodes is selected as a parent node 48022. Similarly, in the right part, one of the four sibling nodes is selected as a parent node. Then, one of the two parent nodes in layer LoD N+1 is selected as a parent node 48020 of the parent subgroup 48010. In other words, the node 48020 in the parent subgroup 48010 is a node generated by sub-sampling the nodes in a child subgroup in the lower layer.

However, the second child subgroup 48025 is missing. Accordingly, nodes 48023 and 48024 in the parent subgroup 48010 may not be generated by sub-sampling the nodes in the child subgroup in the lower layer. In other words, the nodes 48023 and 48024 are missing nodes in the parent subgroup that may not be generated by sub-sampling because the child subgroup is missing.

In one embodiment, when a child FGS is missing or lost, the missing nodes may be detected at the finest LoD of the parent subgroup (i.e., the bottom LoD of the parent subgroup). For this process, the interim (or provisional) output nodes of a geometry FGS corresponding to the parent subgroup of the current attribute may be used as a reference node list (see operation 48004). In other words, in one embodiment, when there is a missing subgroup (or FGS or slice) in relation to the attribute information, at least one missing node of the parent subgroup may be detected using a corresponding subgroup of geometry (or FGS of geometry). To this end, it is assumed in the present disclosure that the layer-group structure and/or subgroup structure is the same for the geometry and attributes.

According to embodiments, after comparing the subsampled nodes from the current child subgroups and the interim geometry slice output nodes, the nodes that are in the geometry output but not in the sub-sampling output are determined to be missing nodes, and the nodes of the geometry corresponding to the missing nodes are appended to the LoD of the current subgroup. In other words, LoD N is generated by the subsampled nodes from LoD N+1 and/or the missing nodes of the current layer-group. The missing nodes of the current layer-group are detected from the nodes of the corresponding geometry layer-group and appended to the LoD. In other words, LoD N is generated using the subsampled nodes from the child subgroups of the current attribute and/or the nodes from the geometry parent subgroup corresponding to the parent subgroup of the current attribute.

In the present disclosure, the subsampled nodes from LoD N+1 are indexes to LoD N by the octree based sub-sampling process in G-PCCv1. Then, the missing nodes caused by the missing child FGSs are detected from the geometry FGS interim output. The detected missing nodes are appended to LoD N. In the present disclosure, it is assumed that the LODs of the attribute correspond to the octree layers of the geometry. In other words, LOD N of the attribute corresponds to octree layer N of the geometry. Therefore, in the present disclosure, one of the nodes in the octree N of the geometry is set as a missing node in LOD N of the attribute.

As such, since the missing subgroup of the attribute is present in a layer-group of the geometry, LoD N is generated using the missing nodes of the parent subgroup (LoD N+1) of the missing subgroup (LoD N) from among the nodes of the corresponding subgroup of the geometry. In other words, nodes from the corresponding subgroup of the geometry are appended to LoD N.

In other words, LoD N of the attribute may include at least one subsampled node from LoD N+1 and/or at least one node (i.e., missing node) from the corresponding subgroup of the geometry.

Next, the process of performing nearest neighbor (NN) search based on the LoDs generated as described above is described below.

In other words, according to the present disclosure, when performing NN search, the NN of a point is searched for using only points that are in the same layer group (or subgroup or slice). This is because, as described above, there may be a missing slice (or missing FGS or missing subgroup). For example, a slice may be missing as the slice is not transmitted to the receiving side during scalable transmission. And, when there is a missing slice, the nodes in the missing slice cannot be referenced during the NN search. Accordingly, in one embodiment, the NN search may be performed by referencing only the nodes in the subgroup to which the current point to be decoded (or encoded) belongs.

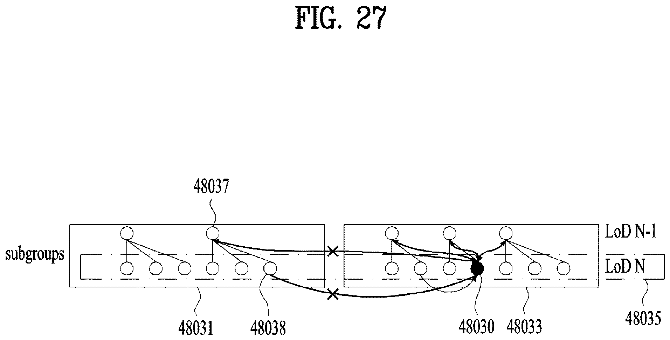

FIG. 27 is a diagram illustrating an exemplary method of searching for the nearest neighbor according to embodiments.

In NN search, the Indexes subgroup includes at least one LOD to which the points to be encoded (or decoded) belong, and the Retained subgroup includes at least one lower LOD based on the at least one LOD included in the Indexes subgroup. According to embodiments, the points of the at least one LOD in the Indexes subgroup are sorted in ascending order based on the size of the Morton code, and the points of the at least one LoD in the Retained subgroup are also sorted in ascending order based on the size of the Morton code. In one embodiment, the NN of the current point (i.e., the point to be encoded or decoded) in the Indexes subgroup is searched for among the points belonging to the at least one LOD in the Retained subgroup and/or the points belonging to the at least one LOD in the Indexes subgroup.

In FIG. 27, 48030 is the current point to be encoded (or decoded) in the Indexes subgroup. In one embodiment, in performing the NN search, the NN of the current point 48030 may be searched for among the points belonging to at least one LOD in the Retained subgroup in the subgroup 48033 to which the current point 48030 belongs, and/or the points belonging to the subgroup to which the current point 48030 belongs. In other words, the points belonging to the other subgroup 48031 to which the current point 48030 does not belong are not referenced in the search for the NN of the current point 48030.

In other words, points (i.e., nodes) outside the boundary of the subgroup to which the current point 48030 for which at least one neighbor node is searched for belongs (i.e., outside the boundary of the subgroup to which the current point 48030 belongs) are not considered as neighbors of the current point 48030 in performing the NN search. This is because the subgroup 48031 may be missing.

As such, in the present disclosure, the search for the NN of the point 48030 belonging to the current LoD includes searching for prediction candidates among neighbor nodes selected from at least one higher LoD than the current LoD and for coded nodes in the current LoD. In particular, in one embodiment, for quick search, the search range is bounded by the cubic boundary and the number of points in the Morton coding order. In this regard, the present disclosure proposes an additional constraint considering subgroup boundaries, referred to as intra-layer-group search boundaries, when the neighbor candidates are in the same layer group as the current node. In other words, the search for the NN of the current point is performed only in the subgroup to which the current point belongs, which is referred to as intra-layer-group search.

Intra-layer-group search boundary: When the neighbor candidate is in the same layer group as the current node, it is restricted to use the neighbor nodes in the same subgroup boundary.

In other words, in the present disclosure, neighbor nodes 48037 and 48038 that are outside the subgroup bounding box 48033 cannot be neighbor candidates (i.e., neighbor nodes or neighbor points) of the current node 48030.

Additionally, in the present disclosure, a layer group adapted position may be used in subgroup estimation and calculation of a neighbor distance. Considering the case of missing child subgroups, this may prevent mismatches between encoders and decoders.

In other words, for scalable transmission, the attribute encoder creates a down-sampled geometry grid by performing sampling with the remaining layers except for one or more skipped layers, and corrects the positions of the occupied nodes including a neighbor search target node by performing up-sampling based on information related to the skipped layers. Then, NN search is performed based on the corrected positions to obtain the distance between nodes. Then, attribute prediction and compression may be performed based on the obtained NN nodes.

According to embodiments, a layer group adapted position is a coded position right shifted by the number of LoDs in the coded descendant (e.g., child) subgroups, and then left shifted by the number of LODs in the coded descendant subgroups and the skipped descendant subgroups.

In other embodiments of the present disclosure, in performing the NN search for the current point to find at least one neighbor node, nodes belonging to the parent slice for the slice (i.e., child subgroup) to which the current point belongs may be used as reference nodes even when they are outside the boundary of the child slice (i.e., subgroup).

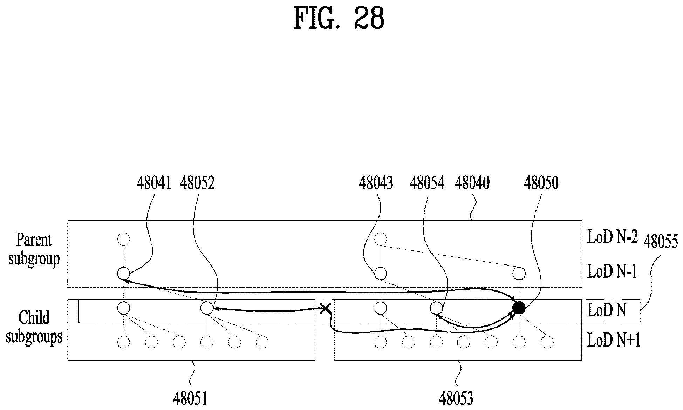

FIG. 28 is a diagram illustrating another exemplary method of searching for the nearest neighbor according to embodiments.

In one embodiment, the NN search may be performed by referencing nodes 48054 in a subgroup 48053 to which the current point 48050 belongs and nodes 48041 and 48043 in the parent subgroup 48040 for the subgroup 48053 to which the current point 48050 belongs. This NN search is referred to herein as an inter-layer-group search. In this case, the nodes 48052 in the other subgroup 48051 (i.e., a sibling subgroup of the subgroup to which the current point 48050 belongs) in the same layer as the subgroup 48053 to which the current point 48050 belongs are not considered (or used) as reference nodes in the NN search for the current point 48050.

In other words, when the current LoD (LoD N) 48055 is at the coarsest level of the current layer-group, the neighbor candidate may be in the other layer-group. In this case, it is allowed to find the neighbors across the subgroup boundary if the nodes (or neighbor candidates) are in the parent subgroup boundary.

According to embodiments, for the inter-layer-group search boundary, when the neighbor candidate is in the parent layer-group, it is restricted to use the neighbor nodes in the parent subgroup boundary.

Also, in FIG. 28, when a layer-group adapted position is used, the coded position of the node within the parent node may be processed differently when the nodes are in the subgroup bounding box of the current node.

The layer-group adapted position is described below.

Nodes within the child subgroup bounding box: coded position right shifted by the number of LoDs in the coded descendent subgroups of the current subgroup, and then left shifted by the number of LoDs in the coded descendent subgroups of the current subgroup and skipped descendent subgroups.

Nodes out of the child subgroup bounding box: coded position right shifted by the number of LoDs in the coded descendent (e.g., child) subgroups of the parent subgroup, and then left shifted by the number of LoDs in the coded descendent subgroups of the parent subgroup and skipped descendent subgroups.

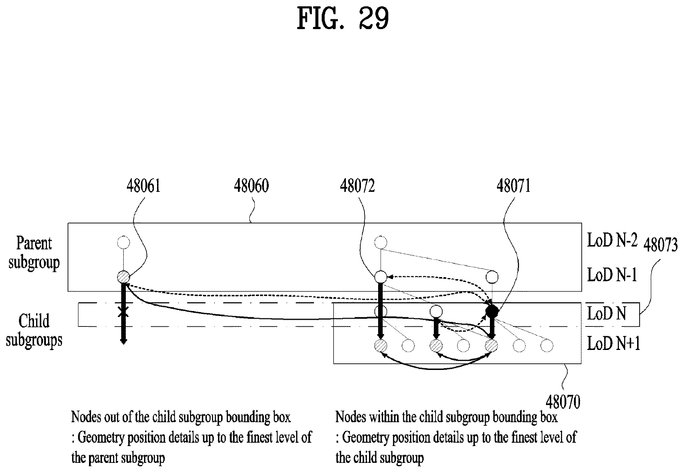

FIG. 29 is a diagram illustrating yet another exemplary method of searching for the nearest neighbor according to embodiments.

In FIG. 29, 48060 represents the parent subgroup, 48061 represents neighbor candidates outside the bounding box of a subgroup 48070, 48070 represents the current point to be encoded (or decoded) within the subgroup 48070, and 48072 represents neighbor candidates within the bounding box of the subgroup 48070. In other words, 48061 represents nodes out of the child subgroup bounding box, and 48072 represents nodes within the child subgroup bounding box.

According to embodiments, in the NN search, when neighbor candidates are within the subgroup bounding box (48072), the detail of the geometry position is considered down to the finest level (e.g., bottom level) of the child subgroup (48070). On the other hand, when neighbor candidates are outside the subgroup bounding box (48061), the detail of the geometry position is considered down to the finest level (e.g., the bottom level) of the parent subgroup. In other words, when the neighbor candidates are outside the subgroup bounding box (48061), the child subgroup is not considered in determining the position of a point in the NN search.

FIG. 30 illustrates another exemplary point cloud transmission device according to embodiments. The elements of the point cloud transmission device illustrated in FIG. 30 may be implemented as hardware, software, processors, and/or combinations thereof.

According to embodiments, the point cloud transmission device may include a data input unit 51001, a signaling processor 51002, a geometry encoder 51003, an attribute encoder 51004, and a transmission processor 51005.

The geometry encoder 51003 and attribute encoder 51004 may perform some or all of the operations described in relation to the point cloud video encoder 10002 of FIG. 1, the encoding 20001 of FIG. 2, the point cloud video encoder of FIG. 3, the point cloud video encoder of FIG. 8, the attribute encoding of FIG. 25 and the attribute encoding of FIG. 31.

The data input unit 51001 according to the embodiments receives or acquires point cloud data. The data input unit 51001 may perform some or all of operations of the point cloud video acquisition unit 10001 of FIG. 1, or may perform some or all of the operations of the data input unit 8000 in FIG. 8.

The data input unit 51001 outputs the positions of the points in the point cloud data to the geometry encoder 51003 and outputs the attributes of the points in the point cloud data to the attribute encoder 51004. In addition, it outputs the parameters to the signaling processor 51002. According to embodiments, the parameters may be provided to the geometry encoder 51003 and the attribute encoder 51004.

The geometry encoder 51003 constructs an octree based on the positions of the input points, and performs geometry compression based on the octree. The geometry encoder 51003 performs entropy encoding on the compressed geometry information and outputs the encoded information to the transmission processor 51005 in the form of a geometry bitstream.

The geometry encoder 51003 reconstructs the geometry information based on the positions changed by the compression, and outputs the reconstructed (or decoded) geometry information to the attribute encoder 51004.

According to embodiments, the geometry encoder 51003 constructs an octree based on the positions of the input points, performs layer-group-based slicing in the octree, selects one or more slices, and then compresses the geometry information about the one or more selected slices. The layer-group-based slicing and slice-by-slice geometry compression according to the embodiments have been described in detail with reference to FIGS. 11 to 24, and thus a description thereof is skipped below to avoid redundancy.

The attribute encoder 51004 compresses attribute information based on positions for which geometry encoding has not been performed and/or reconstructed geometry information. According to an embodiment, the attribute information may be coded using any one or a combination of one or more of RAHT coding, LOD-based predictive transform coding, and lifting transform coding. The attribute encoder 51004 performs entropy encoding on the compressed attribute information and outputs the information to the transmission processor 51005 in the form of an attribute bitstream.

According to embodiments, the attribute encoder 51004 performs the LoD generation and NN search described with reference to FIGS. 11 to 29. In other words, in one embodiment, when there is a missing subgroup (or FGS or slice) in relation to the attribute information, the attribute encoder 51004 may detect at least one missing node of the parent subgroup using a corresponding subgroup of geometry (or FGS of geometry). According to embodiments, after comparing the subsampled nodes from the current child subgroups and the interim geometry slice output nodes, the missing nodes that are in the geometry output but not in the sub-sampling output are appended to the LoD of the current subgroup. In other words, LoD N may include the subsampled nodes from the child subgroups of the current attribute and/or the nodes from the geometry parent subgroup corresponding to the parent subgroup of the current attribute.

Further, in the NN search for the current point, neighbors may be selected based on distance, which may include neighbor nodes outside the subgroup to which the current point belongs.

According to embodiments, the attribute encoder 51004 does not consider a neighbor node outside the subgroup to which the current point belongs as a neighbor of the current point when the neighbor node belongs to a sibling subgroup of the subgroup, i.e., a subgroup of the same level. In other words, based on the child-level subgroup boundary, nodes outside the boundary are not selected as neighbors. Thus, by imposing a restriction that only nodes within the same subgroup bounding box (or boundary) should be used in generating a predictor based on the aforementioned criterion, accurate decoding may be performed even in the case of partial decoding on a segmented slice. In this case, the root layer group may be allowed to be referenced in all cases.

According to embodiments, when a neighbor node outside the subgroup to which the current point belongs to the parent subgroup of the subgroup, the attribute encoder 51004 considers the neighbor node as a neighbor node of the current point.

According to embodiments, in performing the NN search, when neighbor candidates are within the subgroup bounding box, the attribute encoder 51004 considers the detail of the geometry position down to the finest level (e.g., bottom level) of the child subgroup. On the other hand, when neighbor candidates are outside the subgroup bounding box, the detail of the geometry position is considered down to the finest level (e.g., the bottom level) of the parent subgroup.

Then, the attribute encoder 51004 performs attribute prediction and compression based on the NN nodes obtained as described above.

The signaling processor 51002 may generate and/or process signaling information needed for encoding/decoding/rendering of the geometry information and attribute information, and provide the processed information to the geometry encoder 51003, the attribute encoder 51004, and/or the transmission processor 51005. Alternatively, the signaling processor 51002 may be provided with signaling information generated by the geometry encoder 51003, the attribute encoder 51004, and/or the transmission processor 51005. The signaling processor 51002 may provide information (e.g., head orientation information and/or viewport information) fed back from the reception device to the geometry encoder 51003, the attribute encoder 51004, and/or the transmission processor 51005.

In the present disclosure, signaling information (LGSI) including information related to layer-group-based slicing may be signaled and transmitted at the level of a parameter set (sequence parameter set (SPS), geometry parameter set (GPS), attribute parameter set (APS), tile parameter set (TPS) (or tile inventory), etc.), and/or an attribute data unit (i.e., attribute slice). In other words, it may also be signaled and transmitted per coding unit (or compression unit or prediction unit) of each image, such as slice or tile.

The transmission processor 51005 may perform the same or similar operation and/or transmission method as the operation and/or transmission method of the transmission processor 8012 of FIG. 8 and perform the same or similar operation and/or transmission method as the operation and/or transmission method of the transmitter 10003 of FIG. 1. For details, which will not be described below, refer to the description of FIG. 1 or FIG. 8.

The transmission processor 51005 may multiplex the geometry bitstream output from the geometry encoder 51003, the attribute bitstream output from the attribute encoder 51004, and the signaling bitstream output from the signaling processor 51002 into one bitstream. The multiplexed bitstream may be transmitted without being changed or may be encapsulated in a file or a segment and transmitted. In one embodiment of the present disclosure, the file may be in an ISOBMFF file format.

According to embodiments, the file or the segment may be transmitted to the reception device or stored in a digital storage medium (e.g., a USB drive, SD, CD, DVD, Blu-ray disc, HDD, SSD, etc.). The transmission processor 51005 according to the embodiments may communicate with the reception device through wired/wireless communication over a network such as 4G, 5G, or 6G. In addition, the transmission processor 51005 may perform necessary data processing according to the network system (e.g., a 4G, 5G, or 6G communication network system). The transmission processor 51005 may transmit the encapsulated data in an on-demand manner.

FIG. 31 is a flowchart illustrating an exemplary method of encoding point cloud data according to embodiments. More specifically, FIG. 31 is a flowchart illustrating an exemplary encoding method by which the attribute encoder 51004 of FIG. 30 performs LoD-based attribute coding.

The encoding of the point cloud data of FIG. 31 may be performed by the transmission device of FIG. 1, the encoding of FIG. 2, the transmission device/method of FIG. 3, the transmission device/method of FIG. 8, the devices of FIG. 10, the encoder of FIG. 15, the transmission device of FIG. 30, or a combination thereof.

In the encoding method according to the embodiments, parameters such as a sequence parameter set (SPS), a geometry parameter set (GPS), an attribute parameter set (APS), and an LGSI are generated and a layer-group structure is configured. The configuration of the layer-group structure may be performed during or before generation of the LGSI. After geometry coding is performed, LoD generation is performed based on the restored (or reconstructed or derived) geometry nodes (operation 58081).

In particular, in operation 58081, the LoD generation and NN search described with reference to FIGS. 11 to 30 are performed. According to one embodiment, operation 58081 may include detecting, based on a missing subgroup (or FGS or slice) being present in relation to the attribute information, at least one missing node of the parent subgroup using a corresponding subgroup of geometry (or FGS of geometry). According to embodiments, after comparing the subsampled nodes from the present child subgroups and the interim geometry slice output nodes, the missing nodes that are in the geometry output but not in the subsampling output are appended to the LoD of the current subgroup. In other words, LoD N is generated by the subsampled nodes from LoD N+1 and/or the missing nodes of the current layer-group. The missing nodes of the current layer-group are detected from the nodes of the corresponding geometry layer-group. In other words, LoD N is generated using the subsampled nodes from the child subgroups of the current attribute and/or the nodes from the geometry parent subgroup corresponding to the parent subgroup of the current attribute. Then, in the NN search for the current point, neighbors may be selected based on distance, which may include neighbor nodes outside the subgroup to which the current point belongs.

According to embodiments, a neighbor node outside the subgroup to which the current point belongs is not considered as a neighbor of the current point when the neighbor node belongs to a sibling subgroup of the subgroup, i.e., a subgroup of the same level. In other words, based on the child-level subgroup boundary, nodes outside the boundary are not selected as neighbors. Thus, by imposing a restriction that only nodes within the same subgroup bounding box should be used in generating a predictor based on the aforementioned criterion, accurate decoding may be performed even in the case of partial decoding on a segmented slice. In this case, the root layer group may be allowed to be referenced in all cases.

According to embodiments, when a neighbor node outside the subgroup to which the current point belongs to the parent subgroup of the subgroup, the neighbor node is considered as a neighbor node of the current point.

After the LoD generation and NN search are performed in operation 58081, the LoD is mapped to a layer-group (operation 58082).

In other words, by applying layer-group slicing to the attribute bitstream, attributes corresponding to the partially decoded geometry bitstream may be provided. In this case, attribute coding layers may be configured as follows, considering that layer-groups are configured based on geometry coding layers. According to embodiments, in the case where partial decoding is performed by matching LoDs with layer-groups based on the layer-group structure configured based on the geometry coding layers, the geometry output and the attribute output may be matched.

As an example, the geometry coding layers may be matched to the attribute coding layers in a one-to-one correspondence. In this case, octree-based subsampling and RAHT-based attribute coding may be performed. As another example, layer groups may be matched to the attribute coding layers in a one-to-one correspondence, and the layer groups may include multiple attribute coding layers. In other words, in the case of LoD-based attribute coding, the method of generating a layer-group may affect compression efficiency because performance may vary due to changes in nearest neighbors (NNs) depending on the LoD configuration.

Then, a quantization weight is derived based on the LoD (operation 58083).

For example, when nodes are delivered in a separated manner due to layer group slicing, a subgroup boundary and a layer group boundary should be considered for quantization weights as well. In other words, a layer group and sub-layer group to which a node to be encoded (or to which quantization weights are to be applied) belongs are determined (operations 58084 and 58085). The present disclosure may support partial decoding by limiting the quantization weight update to be performed only within subgroup boundaries in a leaf layer group. That is, in the present disclosure, parent-child subgroup boundaries may be aligned and a restriction may be imposed such that only nodes within the child subgroup boundaries are selected as neighbors. In layer group slicing, the root layer group may not be subdivided, and a fixed weight may be used for the root layer group as a method to support partial decoding. As another example, quantization weights may also be adaptively applied on a subgroup-by-subgroup basis.

Thereafter, whenever an attribute coding layer is changed, it is checked whether the layer-group has changed, and it is also checked whether the subgroup has changed for each node in the attribute coding layer (operation 58086). In other words, one or more attribute coding layers constitute a layer group. Thus, when the attribute coding layer is changed, the layer group to which the changed attribute coding layer belongs may or may not be changed. Further, the subgroup to which the changed attribute coding layer belongs may or may not be changed. For example, nodes to be encoded in an attribute coding layer before the change may belong to subgroup 3-1. However, nodes to be encoded in the changed attribute coding layer may belong to subgroup 3-2. Therefore, when the subgroup or layer group is changed, the attribute encoder information related to the previous subgroup may be stored, and the attribute encoder for the current subgroup may be used to ensure the continuity of contexts, zeroruns, etc. within the subgroup, and ensure independence from neighboring subgroups (operation 58087). In particular, for the zerorun, when zeros appear consecutively, higher compression efficiency may be provided. By maintaining the continuity of zeroruns within the same layer group and subgroup, additional compression efficiency may be provided when the attribute coding layer is changed. Once the compression of nodes belonging to all attribute coding layers is completed, the encoded bitstreams for the respective subgroups are packaged into respective slices.

While FIG. 31 is described based on LoD-based attribute coding, the encoding according to the embodiments may also be applied to other attribute coding methods such as RAHT.

A transmission device/method according to embodiments may perform operations including generating a LoD (operation 58081), mapping the LoD to a layer group (operation 58082), and deriving a quantization weight (operation 58083). The operations may further include determining a layer group (operation 58084), determining a subgroup (operation 58085), checking whether the subgroup has changed (operation 58086), storing and retrieving context information (operation 58087), and encoding attribute information (operation 58088). The aforementioned operations may be performed per node or per LoD level.

The generation of the LoD according to the embodiments may include subsampling, building a predictor, or performing neighbor search. In the LoD generation, the building of the predictor or the neighbor search (i.e., NN search) may be performed based on subgroup boundaries. For example, the neighbors of a first node may be selected from among the nodes located within the boundary of the subgroup to which the first node belongs.

When attribute layer group slicing may be applied. In this case, a delay may occur in the partial decoding use case if all LoD layers are generated from full-depth geometry data and then attribute slices are decoded. To address this issue, the present disclosure proposes a method of generating LoDs on a subgroup basis.

In other words, in one embodiment of the present disclosure, when attribute layer group slicing is applied, LoD generation may be performed on a subgroup basis. In this case, the input nodes (or points) for LoD generation in the current subgroup may include not only nodes of the current subgroup but also nodes of the parent subgroup of the current subgroup. That is, the nodes of the current subgroup are input to the partial LoD generator. Further, the nodes of the parent subgroup are also used in decoding the current subgroup. In particular, in one embodiment of the present disclosure, the parent nodes (or parent points) belonging to the parent subgroup selected for LoD generation in the current subgroup may be nodes outside the bounding box of the current subgroup. In other words, the nodes belonging to the parent subgroup that are selected for LoD generation in the current subgroup are nodes not included in the range of the current subgroup. Here, the term "not included in the range of the current subgroup" means being outside the boundary of the current subgroup. For example, when it is assumed that the parent subgroup includes a first child subgroup and a second child subgroup, and that the first child subgroup is the current subgroup, the second child subgroup corresponds to a subgroup that is not included in the range of the current subgroup or is outside the boundary of the current subgroup. In other words, the input to the LoD generator (LoD generation input) for the current subgroup includes nodes belonging to the current subgroup and nodes belonging to the parent subgroup (current points+parent points), excluding any duplicate nodes. In other words, from the perspective of the LoD, the nodes belonging to the bottom LoD layer (e.g., LoDn-1) of the parent subgroup are nodes sub-sampled from the top LoDs (i.e., nodes) of the child subgroup (e.g., LoDn). To avoid the redundant use of the nodes in both LoDs in the layer-group boundary, the nodes of the parent subgroup out of the current subgroup bounding box are included.

To this end, the subgroup-based LoD generation of the present disclosure may include operations such as generation of input to a subgroup decoder (or LoD generator for the current subgroup, or partial LoD generator) and parent attribute inheritance. Thereafter, prediction or lifting transform or inverse transform is performed. In one embodiment, the subgroup LoD generation and attribute transform (or inverse transform) are performed for all selected slices.

In the present disclosure, the generation of the LoD for the current subgroup and the NN search based on the nodes of the current subgroup and the nodes of the parent subgroup of the current subgroup may be performed identically or differently by the encoder of the transmission device and the decoder of the reception device. For example, the encoder of the transmission device may perform LoD generation and NN search on a layer group basis, while the decoder of the reception device may perform LoD generation and NN search on a subgroup basis, based on the nodes of the current subgroup and the nodes of the parent subgroup of the current subgroup.

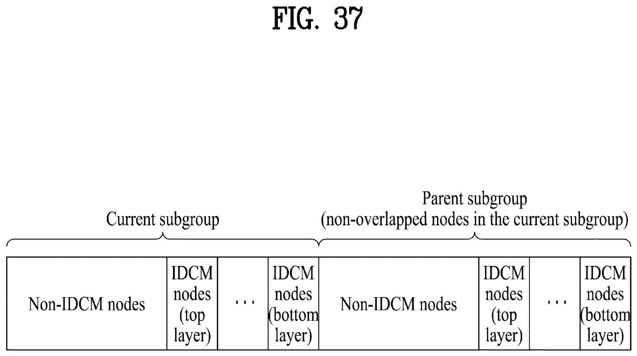

FIG. 37 illustrates another example of a point cloud reception device according to embodiments. The elements of the point cloud reception device shown in FIG. 32 may be implemented as hardware, software, processors, and/or combinations thereof.

According to embodiments, the point cloud reception device may include a reception processor 61001, a signaling processor 61002, a geometry decoder 61003, an attribute decoder 61004, a geometry buffer 61005, an attribute buffer 61006, and a post-processor 61007.

According to embodiments, the reception processor 61001 may receive a single bitstream or may receive a geometry bitstream, an attribute bitstream, and a signaling bitstream separately. When a file and/or segment is received, the reception processor 61001 may decapsulate the received file and/or segment into bitstreams.

When a single bitstream is received or decapsulated, the reception processor 61001 may demultiplex the same into a geometry bitstream, an attribute bitstream, and/or a signaling bitstream. The demultiplexed signaling bitstream may be output to the signaling processor 61002, the geometry bitstream to the geometry decoder 61003, and the attribute bitstream to the attribute decoder 61004.

When the geometry bitstream, attribute bitstream, and/or signaling bitstream are separately received (or decapsulated), the reception processor 61001 may deliver the signaling bitstream to the signaling processor 61002, the geometry bitstream to the geometry decoder 61003, and the attribute bitstream to the attribute decoder 61004.

The reception processor 61001 may divide the geometry bitstream and attribute bitstream into slices or subgroups based on the signaling information processed by the signaling processor 61002. The slice/subgroup-level geometry bitstream may be delivered to the geometry decoder 61003, and the slice/subgroup-level attribute bitstream may be delivered to the attribute decoder 61004. For example, the input to the attribute decoder 61004 may include an attribute fine granularity slice bitstream (or attribute layer group-based slice bitstream), decoded geometry data, and a layer-group structure.

The signaling processor 61002 may parse and process information contained in the signaling information, such as SPS, GPS, APS, TPS, and metadata, from the input signaling bitstream, and provide the same to the reception processor 61001, geometry decoder 61003, attribute decoder 61004, geometry buffer 61005, attribute buffer 61006, and post-processor 61007. In another embodiment, signaling information contained in the geometry data unit header and/or attribute data unit header may be pre-parsed by the signaling processor 61002 before decoding the corresponding slice (or subgroup) data. In the present disclosure, the geometry buffer 61005 may store the nodes belonging to the current subgroup and/or the nodes belonging to the parent subgroup of the current subgroup for geometry decoding. Similarly, the attribute buffer 61006 may include the nodes belonging to the current subgroup and/or the nodes belonging to the parent subgroup of the current subgroup for attribute decoding. The attribute buffer 61005 may be used as an input buffer for LoD generation.

According to embodiments, the signaling processor 61002 may parse and process signaling information signaled in the sequence parameter set and/or the attribute data unit header (e.g., information related to layer group-based slicing) and provide the same to the attribute decoder 61004 and the attribute buffer 61006.

According to embodiments, the geometry decoder 61003 may perform the reverse process of the operations of the geometry encoder 51003 of FIG. 30 on the compressed geometry bitstream based on the signaling information to reconstruct geometry. The geometry information restored (or reconstructed or derived) by the geometry decoder 61003 is provided to the attribute decoder 61004. The attribute decoder 61004 may perform the reverse process of the operations of the attribute encoder 51004 of FIG. 30 on the compressed attribute bitstream based on the signaling information and the reconstructed geometry information to restore(or derive) attributes.

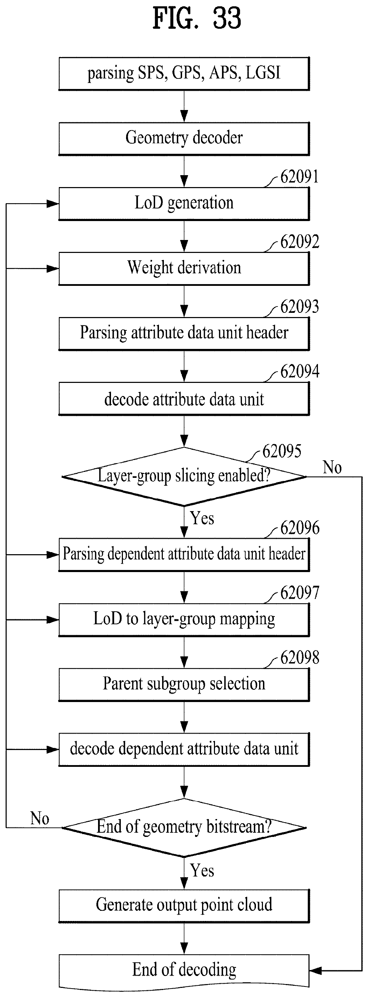

According to embodiments, the attribute decoder 61004 may perform LoD generation and nearest neighbor (NN) search on a subgroup basis. The detailed process will be described later with reference to FIGS. 33 to 38.

According to embodiments, the post-processor 61007 may reconstruct and display/render point cloud data by matching the geometry information (i.e., positions) reconstructed and output by the geometry decoder 61003 with the attribute information restored(or derived) and output by the attribute decoder 61004.

FIG. 33 illustrates a method of decoding point cloud data according to embodiments. More specifically, FIG. 33 is a flowchart illustrating an exemplary decoding method for performing LoD-based attribute decoding by the attribute decoder 61004 of FIG. 32.

The decoding of the point cloud data in FIG. 33 may be performed by the reception device of FIG. 1, the decoding of FIG. 2, the reception device/method of FIG. 7, the reception device/method of FIG. 9, the devices of FIG. 10, the decoder of FIG. 32, or any combination thereof.

The inputs to the attribute decoder 61004 are an attribute fine granularity slice bitstream or an attribute layer-group based slice bitstream, decoded geometry data, and a layer-group structure. After geometry decoding, LoD generation and NN search are performed based on the decoded geometry data. Here, the LoD generation and NN search have been described in detail with reference to FIGS. 1 to 31, and thus the description thereof will be omitted below to avoid redundancy. That is, the LoD generation and NN search may be performed in the same manner by the encoder on the transmitting side and the decoder on the receiving side. In other words, the LOD generation and NN search process is performed not only by the point cloud encoder but also by the point cloud decoder.

Then, weight derivation is performed based on the relationship of the nodes according to the LoD. The information generated at this time may be used in the subsequent attribute decoding process. The first attribute slice may be operated in the same manner as the previous attribute slice. Then, when layer-group slicing is enabled, the dependent attribute data unit header may be parsed and the layer group identification information (dadu_layer_group_id) and subgroup identification information (dadu_subgroup_id) may be acquired. When necessary, information about the LoD may be signaled. Based on the information, a layer-group that matches the current LoD may be searched for, and a parent subgroup may be selected. When the layer-group structure is applied to geometry and attributes in the same manner according to the present disclosure, the reference and parent information used in geometry decoding may be used. Based on this information, the information in the dependent attribute data unit may be decoded and the point cloud data may be reconstructed.

The LoD generation and weight derivation methods used by the encoder 51004 may be used for decoding according to embodiments.

Referring to FIG. 33, a method of decoding point cloud data according to embodiments may include generating a LoD (operation 62091) and deriving a quantization weight (operation 62092). Operations 62091 and 62092 may correspond to the LoD generation, NN search, and weight derivation by the attribute encoder 51004 of the transmission device. The decoding method according to the embodiments may generate a LoD and derive a quantization weight considering the subgroup boundaries, similar to the LoD generation, NN search and weight derivation performed during the encoding process. The operation of generating the LoD may include building a predictor and searching for NNs. Since the building of the predictor and the neighbor search are described above in detail with reference to FIGS. 25 to 31, a detailed description thereof is skipped below.

The decoding method according to the embodiments may include parsing an attribute data unit header (operation 62093) and decoding an attribute data unit (operation 62094). It is then determined whether layer group slicing is enabled (operation 62095). When the layer group slicing is enabled, a dependent attribute data unit header is parsed (operation 62096). Then, the LoD may be mapped to the layer group (operation 62097), and a parent subgroup may be selected (operation 62098) to decode the dependent attribute data unit.

Referring to FIG. 33, in operation 62095, whether layer group slicing is enabled may be determined through layer_group_enabled_flag. Layer_group_enabled_flag set to 1 indicates that layer group slicing is enabled. Enabling layer group slicing may indicate that the point cloud data (geometry or attributes) is grouped into layer groups or subgroups for processing.

Once the dependent attribute data unit header is parsed in operation 62096, the LoD may be mapped to the layer group (operation 62097), a parent subgroup may be selected (operation 62098), and the attributes contained in the dependent data unit may be decoded.

The dependent attribute data unit header may include layer group identification information (dadu_layer_group_id) and subgroup identification information (dadu_subgroup_id) to specify a layer group index and a subgroup index. The dependent attribute data unit header may further include subgroup-specific bounding box origin and size information. The dependent attribute data unit header may further include information about a reference layer group and a reference subgroup, and quantization weight information related to the current subgroup.

According to the embodiments, dadu_layer_group_id and dadu_subgroup_id may be used in mapping the LoD to the layer group (operation 62097). Also, the bounding box origin and size information related to the subgroup may be used in selecting the parent subgroup to compare bounding box information (operation 62098).

The decoding method according to the embodiments may include performing decoding by referencing context information based on layer groups and subgroups. The context information may be referred to as context state information, state information, or the like. Reference to the context information may be made using signaling information such as the information about the reference layer group and reference subgroup, or by deriving a parent subgroup based on the bounding box information related to the subgroup.

As described above, LoD-based attribute coding may be performed as follows. That is, after generating LoDs based on geometry-decoded points, attribute coding is performed through prediction based on the neighbor relationships among the nodes belonging to each LoD. In particular, the LoD generation may be performed after geometry decoding is completed. Accordingly, even when the geometry/attribute bitstream is composed of slices, the attribute slice decoding starts only after all geometry slices in the region of interest are decoded, thus introducing a delay factor in quickly decoding the slice of interest.

To address this issue, the present disclosure proposes a method of generating LoDs on a subgroup basis. In other words, in the present disclosure, geometry coding, LoD generation, and attribute coding may be performed on a slice/subgroup basis, which may help to cope more aggressively with low-latency environments.

Further, the present disclosure may improve attribute decoding speed by performing LoD generation and NN search considering Inferred Direct Coding Mode (IDCM) (or direct compression mode) nodes. In the present disclosure, IDCM nodes may be referred to as direct compression nodes.

In one embodiment of the present disclosure, the slice/subgroup-based geometry coding, LoD generation, and attribute coding may be performed by the encoder of the transmission device, while the slice/subgroup-based geometry decoding, LoD generation, and attribute decoding may be performed by the decoder of the reception device.

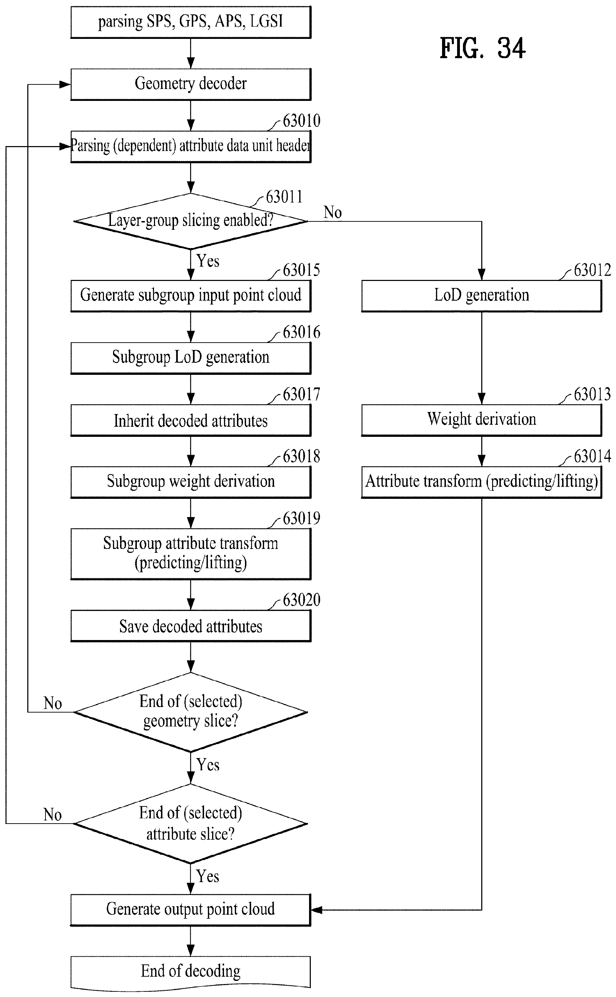

FIG. 34 illustrates another example of a method of decoding point cloud data according to embodiments. More specifically, FIG. 34 is a flowchart illustrating another example of the decoding method for performing LoD-based attribute decoding by the attribute decoder 61004 of FIG. 32. That is, FIG. 34 illustrates an example method of performing geometry decoding, LoD generation, and attribute decoding on a slice/subgroup basis considering IDCM nodes.

The point cloud data decoding of FIG. 34 may be performed by the reception device of FIG. 1, the decoding of FIG. 2, the reception device/method of FIG. 7, the reception device/method of FIG. 9, the devices of FIG. 10, the decoder of FIG. 32, or a combination thereof.

According to embodiments, the input to the attribute decoder may include an attribute fine granularity slice bitstream (or attribute layer group-based slice bitstream), decoded geometry data, and a layer-group structure.

Also, the attribute decoder may include an LoD generator to perform LoD generation and NN search on a subgroup basis considering IDCM nodes (or direct compression nodes). In the present disclosure, the LoD generator may include an input node selector configured to select (or generate or determine) input nodes from the current subgroup and the parent subgroup of the current subgroup for LoD generation of the current subgroup, a partial LoD generator configured to generate an LoD of the current subgroup based on the selected input nodes, and a parent attribute inheritor configured to inherit parent attributes as attributes of some nodes in the current subgroup. FIG. 34 shows a flowchart illustrating an example of LoD generation performed by the input node selector, partial LoD generator, and parent attribute inheritor.

In the layered structure (e.g., a tree structure) of the present disclosure, nodes may be used interchangeably with points. That is, depending on the positions of nodes in the hierarchical structure, a node may correspond to a single point, or may include two or more points.

That is, in FIG. 34, when layer group slicing is enabled, LoD is generated on a subgroup basis in consideration of IDCM nodes, weights are derived based on the LoD generated on the subgroup basis, and attribute transform (e.g., prediction/lifting inverse transform) is performed on the nodes within the LoD to restore(or derive) attributes.

Further, in FIG. 34, geometry slices and corresponding attribute slices may be delivered alternately. In this case, if there are geometry slices remaining, the geometry decoder is restarted, and then the corresponding attribute decoder is operated. In the case where the attribute slices are delivered after delivering geometry slices, all attribute slices may be decoded after all geometry slices are decoded.

In FIG. 34, in one embodiment, the SPS, GPS, APS, and LGSI may be parsed by the signaling processor 61002, and the geometry decoding may be performed by the geometry decoder of FIG. 7 or 9 or the geometry decoder 61003 of FIG. 32 based on signaling information and geometry buffer 61005. In one embodiment, the remaining operations (e.g., operations 63010 to 63020), including the parsing of the attribute data unit header (or dependent attribute data unit header), are performed by the attribute decoder of FIG. 7 or 9 or the attribute decoder 61004 of FIG. 32 based on the attribute buffer 61006.

According to embodiments, signaling information including layer group-based slicing related information may be signaled in at least one of the SPS, GPS, APS, TPS (also referred to as tile inventory), or attribute data unit (i.e., attribute slice).

According to embodiments, the layer group-based slicing related information may include layer_group_enabled_flag. layer_group_enabled_flag set to 1 indicates that layer group slicing is performed, while layer_group_enabled_flag set to 0 indicates that layer group slicing is skipped. In the present disclosure, performing layer group slicing means that point cloud data (geometry and/or attributes) is grouped into layer groups or subgroups for processing.

According to embodiments, in operation 63010, the attribute data unit header is parsed. In operation 63011, when the value of layer_group_enabled_flag is 1, the attribute decoder 61004 generates LoDs on a subgroup basis.

In one embodiment of the present disclosure, the subgroup-based LoD generation may be performed by the LoD generator in the attribute decoder. The LoD generator may correspond to the LoD generator 7008 of FIG. 7 or the prediction/lifting/RAHT inverse transform processor 9009 of FIG. 9.

In the present disclosure, the LoD generator must first receive input of nodes (or points) for the subgroups in order to generate LoDs on a subgroup basis (operation 63015). That is, when layer group slicing is enabled (e.g., the value of layer_group_enabled_flag is 1) in operation 63011, operation 63015 is performed to generate a subgroup input point cloud.

According to embodiments, in operation 63015, to increase compression efficiency of subgroup-based attribute coding, at least one node (or point) in a subgroup related to the current subgroup may be utilized.

In one embodiment, the point cloud input to the subgroup decoder (i.e., an LoD generator for the current subgroup, which is also referred to as a partial LoD generator) may include nodes(s) in the current subgroup and nodes(s) in the parent subgroup of the current subgroup. In the present disclosure, a nodes may be used interchangeably with a point depending on the position of the current subgroup.

The operation of selecting (or determining) the input nodes to perform LoD generation in the current subgroup in operation 63015 is referred to herein as pre-processing. Further, in one embodiment, operation 63015 may be performed by an input node selector (not shown). The input node selector may be referred to as a pre-processor.

According to embodiments, in operation 63015, position correction may be performed on the nodes belonging to the current subgroup. That is, because geometry tree decoding may be performed without the geometry tree depth reaching a full depth, the difference between the final geometry tree depth and the geometry tree depth for the current subgroup may be compensated for. In other words, since attribute decoding may be performed without fully decoding the geometry, the difference between the final geometry tree depth and the maximum geometry tree depth for the current subgroup is compensated for.

According to the present disclosure, the positions of the nodes input to the LoD generator (or referred to as a subgroup decoder or partial LoD generator) for the current subgroup may be corrected as shown in Equation 1 below.

$$\text{treeLvlGap} = \text{Final geometry tree depth} - \text{Maximum geometry tree depth for the current subgroup} \qquad [\text{Equation 1}]$$

For example, when the final geometry tree depth is 10 and the maximum geometry tree depth for the current subgroup is 7, LoD generation is performed after compensating for the depth 3 using zero padding through shift, or the like.

The code below shows an example of correcting (using treeLvlGap) the positions of the nodes input to the LoD generator (also referred to as the subgroup decoder) for the current subgroup (curSubgroup).

```
if   (curLayerGroup   <   layerGroupParams.numLayerGroupsMinus1   -

_params.numSkipLayerGroups) {

        auto                      pointCloud_subgroup_fifo                      =
_layerGroupParams.pointCloud_tempNodes[curLayerGroup][curSubgroup];

        tempPointCloud.resize(pointCloud_subgroup_fifo.getPointCount());

        for (int i = 0; i < pointCloud_subgroup_fifo.getPointCount(); i++) {

        tempPointCloud[i] = pointCloud_subgroup_fifo[i] << treeLvlGap;

        tempIdxToPointIdx.push_back(-1);

        }

        tempPointCloudIdx.push_back(tempPointCloud.getPointCount());

        }
```

According to embodiments, operation 63015 (or the input node selector) may perform position precision correction between different layer groups through the above process, and then generate node(s) belonging to the parent subgroup and node(s) belonging to the current subgroup as input to the LoD generator (i.e., the subgroup decoder or partial LoD generator) for the current subgroup. This is intended to consider nodes in the parent subgroup as neighbor candidates in performing the NN search after the LoD generation.

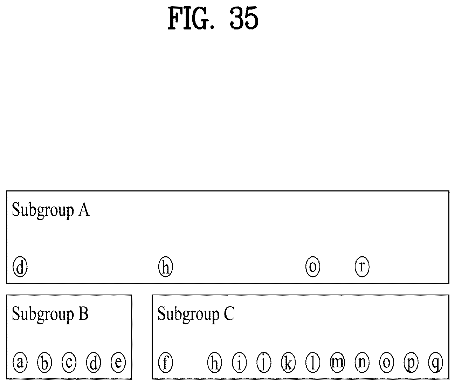

FIG. 35 illustrates an example of points (or nodes) included in each subgroup according to embodiments.

In FIG. 35, assuming that the current subgroup is subgroup C, the parent subgroup of subgroup C may be considered as subgroup A. In this case, subgroup A includes two child subgroups (subgroup B and subgroup C), and the two child subgroups (subgroup B and subgroup C) are siblings. The input to the partial LoD generator (i.e., subgroup decoder) for the current subgroup (e.g., subgroup C) may include nodes f and h to q belonging to the current subgroup (i.e., subgroup C), and nodes d, h, o and r belonging to the parent subgroup (i.e., subgroup A). In other words, nodes a to e belonging to the sibling subgroup (i.e., subgroup B) for the current subgroup (i.e., subgroup C) are not included in (i.e., are excluded from) the input nodes for the partial LoD generator (i.e., subgroup decoder) for the current subgroup (e.g., subgroup C). In one embodiment of the present disclosure, there is no dependency between subgroup B and subgroup C.

According to embodiments, when nodes(s) belonging to the parent subgroup related to the current subgroup are included in input, operation 63015 (or the input node selector) may add only points not included in the range of the current subgroup. This is because, according to the definition of LoD that a lower LoD shall include all nodes(s) of a higher LoD, the nodes(s) belonging to the bottom LoD (or bottom layer or bottom LoD layer) of the parent subgroup are all included in the top LoD (or top layer or top LoD layer) of the child subgroup. For IDCM nodes, the LoD definition disclosed above may not be applied. The processing of IDCM nodes will be described in detail later.

In other words, any node(s) included in the parent subgroup that are duplicates of the node(s) included in the current subgroup are not included in (i.e., are excluded from) the input to the partial LoD generator (i.e., subgroup decoder) for the current subgroup. In this case, IDCM nodes belonging to the parent subgroup may be included in the input to the partial LoD generator for the current subgroup.

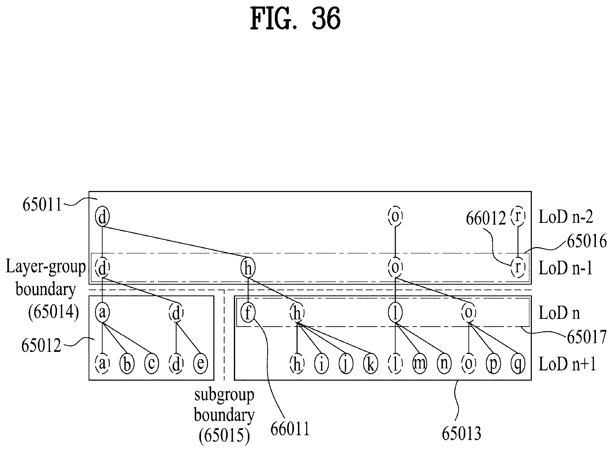

FIG. 36 illustrates an example of LoDs generated through subsampling according to embodiments. For simplicity, element 65011 corresponds to subgroup A in FIG. 35 and is referred to herein as the parent subgroup. Element 65012 corresponds to subgroup B in FIG. 35 and is referred to as a first child subgroup or first subgroup, and element 65013 corresponds to subgroup C in FIG. 35 and is referred to as a second child subgroup or second subgroup. In other words, the first subgroup 65012 and the second subgroup 65013 are sibling subgroups, and 65011 corresponds to the parent subgroup of the first and second subgroups 65012 and 65013. In one embodiment of the present disclosure, there is no dependency between the first subgroup 65012 and the second subgroup 65013. That is, it is assumed that there is no dependency between the sibling subgroups. Also, 65014 corresponds a layer group boundary separating the two layer groups, and 65015 corresponds to a subgroup boundary separating the two subgroups (e.g., the first subgroup 65012 and second subgroup 65012). That is, the first subgroup 65012 and second subgroup 65012 constitute one layer group, and the parent subgroup 65011 constitutes another layer group. In other words, a layer group may correspond to a single subgroup or may be divided into two or more subgroups. Here, "first" and "second" are terms used only to distinguish between the two child subgroups.

Further, in the hierarchical structure (e.g., tree structure) for attribute decoding, a layer group (or subgroup) may be defined as a group of consecutive layers. In each group, the highest layer is referred to as the top layer (or top LoD layer), and the lowest layer is referred to as the bottom layer (or bottom LoD layer). For example, in the parent subgroup 65011, 65016 corresponds to the bottom layer (or bottom LoD layer) of the parent subgroup 65011. In the second subgroup 65013, 65016 corresponds to the top layer (top LoD layer) of the second subgroup 65013.

Further, in a subgroup, layers may correspond to LoDs. That is, when a subgroup has two layers, two LoDs may be generated in the subgroup. For example, in FIG. 36, in the second subgroup 65013, two LoDs (i.e., LoDn+1 and LoDn) are generated. Similarly, in the first subgroup 65012 two LoDs (i.e., LoDn+1 and LoDn) are generated. This is because LoDs are generated on a per-subgroup basis.

In this case, when the subsampling in the LoD generation operation is considered, some of the nodes belonging to the lower LoD are subsampled and included in a higher LoD, as shown in FIG. 36. In FIG. 36, the dashed circles represent nodes that are subsampled in the corresponding LoD.

For example, referring to FIG. 36, in the first subgroup 65012, node a among nodes a, b, and c and node d between nodes d and e in LoDn+1 are subsampled to be included in LoDn. Also, between nodes a and d in LoDn, node d is subsampled to be included in the bottom LoD of the parent subgroup 65011, i.e., LoDn-1. Similarly, in the second subgroup 65013, node f in LoDn+1, node h among nodes h to k, node 1 among nodes 1 to n, and node o among nodes o to q are subsampled and included in LoDn. Also, node h between nodes f and h and node o between nodes 1 and o in LoDn are subsampled to be included in the bottom LoD of the parent subgroup, i.e., LoDn-1. In one embodiment of the present disclosure, when subsampling is performed in a tree structure, at least one of the child nodes having the same parent may be subsampled.

Referring to FIG. 36, among nodes d, h, and o, which belong to the parent subgroup 65011, node d is a node subsampled from the first subgroup 65012, and nodes h and o are nodes subsampled from the second subgroup 65013.

In this case, when nodes belonging to the parent subgroup 65011 are included as input to the partial LoD generator of the second subgroup 65013, assuming that the current subgroup is the second subgroup 65013, nodes h and o that are subsampled from the second subgroup 65013 are excluded.

In other words, when all nodes in the parent subgroup are included without considering subsampling, nodes h and o are redundantly included. That is, nodes h and o are included in both the second subgroup 65013 and the parent subgroup 65011. In this case, a mismatch with the encoder may occur, resulting in a decoding error in the attribute decoder.

Accordingly, in one embodiment, in order to generate input for the subgroup decoder (or partial LoD generator) while avoiding redundancy of nodes, operation 63015 (or the input node selector) may include only node(s) outside the bounding box of the current subgroup among the nodes belonging to the parent subgroup, as shown in the code below. That is, among the nodes in the parent subgroup, only node(s) outside the bounding box of the current subgroup are selected as input nodes for the partial LoD generator for the current subgroup. The selected node(s) may be used as neighbor candidates in the NN search after LoD generation. In the parent subgroup of FIG. 36, node d is selected from among nodes d, h, and o for the LoD generation for the second subgroup 65013. This is intended to avoid redundancy because nodes f and h to q belonging to the second subgroup 65013 are all included as input nodes for the partial LoD generator for the current subgroup (e.g., the second subgroup 65013). In one embodiment, nodes generated for the LoD of the current subgroup in operation 63015 (or by the input node generator) may be stored in an input buffer (the attribute buffer of FIG. 32) for LoD generation. In one embodiment of the present disclosure, the input nodes for the current subgroup stored in the input buffer are provided to the partial LoD generator for the LoD generation in the current subgroup.

According to embodiments, in the code below, the underlined portions are configured to select, from among the points in the parent subgroup, only point(s) that are outside the bounding box of the current subgroup as input points for the partial LoD generator for the current subgroup.

```
if (curLayerGroup > 0) {
    // parent subgroup nodes out of the current bbox
    auto bbox_min = _layerGroupParams.subgrpBboxOrigin[curLayerGroup][curSubgroup];
    auto bbox_max = bbox_min + _layerGroupParams.subgrpBboxSize[curLayerGroup][curSubgroup];
    int treeLvlGap_parent = _sps->root_node_size_log2.max() - accLayer[parentLayerGroup];
    auto pointCloud_subgroup_fifo_parent = _layerGroupParams.pointCloud_tempNodes[parentLayerGroup][parentSubgroup];
    int pointCount_parentNonIdcm = pointCloud_subgroup_fifo_parent.getPointCount();
    auto bbox_min_parent = _layerGroupParams.subgrpBboxOrigin[parentLayerGroup][parentSubgroup];
    auto bbox_max_parent = bbox_min_parent + _layerGroupParams.subgrpBboxSize[parentLayerGroup][parentSubgroup];
    int pointCount = tempPointCloud.getPointCount();
    tempPointCloud.resize(pointCount + pointCount_parentNonIdcm);
    int count = 0;
    if (!(bbox_min == bbox_min_parent && bbox_max == bbox_max_parent) {
    for (int i = 0; i < pointCount_parentNonIdcm; i++) {
```

```
auto pos = pointCloud_subgroup_fifo_parent[i] << treeLvlGap_parent;
if (!(pos >= bbox_min && pos < bbox_max)) {
int tempIdx = pointCount + count++;
tempPointCloud[tempIdx] = pos;
if (attr_sps.attr_num_dimensions_minus1 == 0)
tempPointCloud.setReflectance(tempIdx,
pointCloud_subgroup_fifo_parent.getReflectance(i));
else if (attr_sps.attr_num_dimensions_minus1 == 2)
tempPointCloud.setColor(tempIdx,
pointCloud_subgroup_fifo_parent.getColor(i));
tempIdxToPointIdx.push_back(-1);
}
}
}
else
tempPointCloud.resize(pointCount + count);
tempPointCloudIdx.push_back(tempPointCloud.getPointCount());
}
```

In this manner, when attribute layer group slicing is applied, the input for generating an LoD in the current subgroup may include not only the nodes of the current subgroup but also the nodes of the parent subgroup of the current subgroup. That is, the nodes of the current subgroup are input to the partial LoD generator. The nodes of the parent subgroup of the current subgroup are also input to the partial LoD generator to generate an LoD in the current subgroup. In one embodiment, the nodes belonging to the parent subgroup (parent nodes or parent points) selected to generate an LoD for the current subgroup are nodes outside the bounding box of the current subgroup. In other words, the nodes belonging to the parent subgroup that are selected to generate the LoD for the current subgroup are nodes not included in the range of the current subgroup. The term "not included in the range of the current subgroup" means being outside the boundary of the current subgroup. For example, when a parent subgroup includes a first child subgroup and a second child subgroup, the first child subgroup is the current subgroup, and the second child subgroup corresponds to a subgroup not included in the range of the current subgroup or is outside the boundary of the current subgroup. In other words, from the LoD perspective, the nodes belonging to the bottom LoD layer (e.g., LoDn-1) of the parent subgroup are nodes subsampled from the top LoD (i.e., nodes) of the child subgroup (e.g., LoDn). Therefore, to avoid redundant use of both LoDs at the layer group boundary, the nodes in the parent subgroup that are outside the bounding box of the current subgroup are included.
According to embodiments, when there are no IDCM nodes (or direct compression nodes) in any of the current subgroup and the parent subgroup, the nodes in the current subgroup and the nodes in the parent subgroup are sequentially stored in the input buffer 61006 so as to be provided as input to the partial LoD generator as described above. To prevent the same node from being redundantly used by the partial LoD generator, nodes in the parent subgroup that are outside the bounding box of the current subgroup are selected as input for the partial LoD generation in the current subgroup.
In this case, the current subgroup and/or the parent subgroup of the current subgroup may include no or one or more IDCM nodes.
For example, in FIG. 36, node 66011 may be an IDCM node belonging to the top layer of the current subgroup, and node 66012 may be an IDCM node belonging to the bottom layer of the parent subgroup.
That is, when the layered structure for attribute decoding is in a tree form, some subgroups may include at least one IDCM node.

According to embodiments, the present disclosure defines a node satisfying the following conditions as an IDCM node, and some subgroups may include at least one IDCM node that satisfies the conditions.

1) Condition for parent-based eligibility: From the perspective of the parent node of the current node (point), the current node is the only occupied child. From the perspective of the grandparent node, occupied children (i.e., the occupied siblings of the parent) are at most one (which means two occupied children).

2) Condition for 6N eligibility: From the perspective of the parent node, the current node is the only occupied child, and none of the six neighbors (nodes sharing a face) are occupied.

Nodes that satisfy the above conditions are referred to herein as IDCM nodes (or points), and nodes that do not satisfy the above conditions are referred to herein as non-IDCM nodes (or points). In each subgroup, one layer may include no or one or more IDCM nodes.

In the present disclosure, the layer group structure is assumed to be applied equally for geometry and attributes. This means that the geometry tree structure for geometry decoding is aligned with the attribute tree structure for attribute decoding. In other words, the geometry coding layer structure (i.e., layer group structure) for geometry decoding is identical to the attribute coding layer structure (i.e., layer group structure) for attribute decoding. That is, the layer group/subgroup structure in the geometry tree is identical to the layer group/subgroup structure in the attribute tree. This may imply that when an IDCM node is included in a specific geometry layer in the geometry tree, the same attribute layer in the attribute tree may also include an IDCM node.

As an example, referring to FIG. 22, suppose that the geometry tree structure includes eight geometry layers 0 to 7 and three layer groups, wherein layer group 2 is divided into two subgroups, layer group 3 is divided into four subgroups, and layer group 1, the two subgroups divided from layer group 2, and the four subgroups divided from layer group 3 each constitute a geometry slice. In this case, the attribute tree structure also includes eight attribute layers 0 to 7 and three layer groups, wherein layer group 2 is divided into two subgroups, layer group 3 is divided into four subgroups. Also, layer group 1, the two subgroups divided from layer group 2, and the four subgroups divided from layer group 3 each constitute an attribute slice.

In FIG. 22, the undivided layer group, for example, layer group 1, may be referred to as a single subgroup. Also, a geometry layer may be referred to as a geometry coding layer, and an attribute layer may be referred to as an attribute coding layer.

Even when scalable decoding is performed, geometry decoding is first performed on a selected slice. Thus, by referencing signaling information, the layer group and subgroup to which the geometry-decoded nodes belong may be identified, and whether the nodes are non-IDCM nodes or IDCM nodes may also be identified. In this case, the layer group and subgroup to which a node to be attribute-decoded belongs, and whether the node is a non-IDCM or IDCM node, may be identified based on the decoded geometry and/or signaling information.

In one embodiment, when the nodes are stored in the input buffer 61006 for LoD generation according to the features described above, the attribute decoder 61004 may assign an index to each node. In description below, the index may be referred to as a pointer. In one embodiment, the index assigned to each node may be a value that identifies the layer group and subgroup to which the node belongs, and also identifies whether the node is a non-IDCM node or an IDCM node.

In other words, since geometry decoding has already been performed and each subgroup and non-IDCM and IDCM nodes included in each subgroup have been decoded during geometry decoding, indexes may be assigned to the nodes stored in the input buffer 61006 with reference to the geometry decoding order. This is merely an embodiment, and any indexes may be assigned to the nodes as along as they have values that may identify whether the nodes stored in the input buffer belong to the current subgroup or the parent subgroup, or whether the nodes are non-IDCM or IDCM nodes, may be assigned.

In one embodiment of the present disclosure, subgroup-based LoD generation and NN search may be performed based on the index of each node stored in the input buffer 61006.

By performing LoD generation and NN search based on the value of the index of each node stored in the input buffer 61006, the speed of attribute decoding may be improved because the process of determining the position of each node, determining the layer group/subgroup to which each node belongs based in the determined posision, and determining whether the node is a non-IDCM node or IDCM node may be skipped.

In one embodiment, when there are IDCM node(s) (also referred to as direct compression node node(s)) in the current subgroup and/or the parent subgroup, the IDCM node(s) belonging to the current subgroup and the parent subgroup may be additionally input to the partial LoD generator for the current subgroup.

The IDCM nodes are input sequentially to the partial LoD generator for the current subgroup in order of the geometry layers thereof. To this end, as shown in FIG. 37, nodes belonging to the current subgroup or the parent subgroup may be stored sequentially in the input buffer 61006.

FIG. 37 illustrates an example of nodes of the current subgroup and parent subgroup stored in the input buffer according to embodiments.

According to embodiments, the input buffer 61006 may include a storage area for the current subgroup and a storage area for the parent subgroup of the current subgroup. The storage area for the current subgroup may be divided into a non-IDCM node storage area and an IDCM node storage area. Similarly, the storage area for the parent subgroup may be divided into a non-IDCM node storage area and an IDCM node storage area.

The non-IDCM nodes stored in the non-IDCM node storage area and the IDCM nodes stored in the IDCM node storage area for the parent subgroup do not overlap with (or are not duplicates of) the nodes belonging to the current subgroup.

In one embodiment of the present disclosure, the non-IDCM node storage area for the current subgroup may sequentially store the non-IDCM nodes from the current subgroup, and the non-IDCM node storage area for the parent subgroup may sequentially store the non-IDCM nodes from the parent subgroup. In one embodiment, the non-IDCM nodes stored in the non-IDCM node storage area for the current subgroup and the non-IDCM nodes in the non-IDCM node storage area for the parent subgroup are distinguished by the index assigned to each non-IDCM node.

In one embodiment, the IDCM node storage area for the current subgroup may divide and store the IDCM nodes of the current subgroup by layers, and the IDCM node storage area for the parent subgroup may divide and store the IDCM nodes of the parent subgroup by layers.

For example, when the current subgroup is composed of two layers, the IDCM node storage area for the current subgroup in the input buffer 61006 is further divided into a first area and a second area. The first area sequentially stores the IDCM nodes from the top layer of the current subgroup, and the second area sequentially stores the IDCM nodes from the bottom layer of the current subgroup. When the current subgroup is composed of multiple layers, the IDCM node storage area may be divided into multiple areas. In this case, in one embodiment, the IDCM nodes in each area may be identified by the index assigned to each IDCM node.

As another example, when the parent subgroup includes two layers, the IDCM node storage area for the parent subgroup in the input buffer 61006 is further divided into a first area and a second area. The first area may store the IDCM nodes from the top layer of the parent subgroup, and the second area may store the IDCM nodes from the bottom layer of the parent subgroup. When the parent subgroup includes multiple layers, the IDCM node storage area may be divided into multiple areas. In this case, in one embodiment, the IDCM nodes in each area may be identified by the index assigned to each IDCM node.

In one embodiment, the index assigned to each node may be used to identify whether each node stored in the input buffer 61006 belongs to the current subgroup or the parent subgroup, and whether it is a non-IDCM node or an IDCM node. Based on the index assigned to each node, each node may be identified and LoD generation and NN search may be performed. Thereby, the speed of attribute decoding may be improved.

In the present disclosure, the input buffer 61006 is configured in the form of an array, and the index of each node stored in the input buffer 61006 may be referred to as a pointer.

The code given below shows an example for storing the IDCM nodes belonging to the current subgroup in the input buffer 61006. In the code below, tempPointCloudIdx may be used as a pointer (or index) for access to the nodes belonging to each block (or area) illustrated in FIG. 37. It may be used as many times as the nodes (or points) belonging to the input buffer 61006 at each boundary. That is, in the code below, tempPointCloud is the data about the current subgroup that is stored in the input buffer 61006 and then input to the partial LoD generator. The tempPointCloud may be identified by tempPointCloudIdx (i.e., index).

```
// 1-2. idcm nodes : current
```

```
int numLayers = _layerGroupParams.numLayersPerLayerGroup[curLayerGroup];

int accLayer_prev = accLayer[curLayerGroup] - numLayers;

for (int i = 0; i < numLayers; i++) {

if (curLayerGroup == _layerGroupParams.numLayerGroupsMinus1 && i ==
numLayers - 1) {

}

else {

auto dcmNodesIdx = _layerGroupParams.dcmNodesIdx[accLayer_prev +
i][curSubgroup];

int pointCount_add = dcmNodesIdx.size();

if (pointCount_add) {

int pointCount = tempPointCloud.getPointCount();

tempPointCloud.resize(pointCount + pointCount_add);

for (int n = 0; n < pointCount_add; n++) {

int pointIdx = dcmNodesIdx[n];

tempPointCloud[pointCount + n] = _currentPointCloud[pointIdx];

tempIdxToPointIdx.push_back(pointIdx);

}

}

}

tempPointCloudIdx.push_back(tempPointCloud.getPointCount());

}
```

The code given below shows an example for storing IDCM nodes belonging to the parent subgroup in the input buffer 61006. In one embodiment, because the attribute decoding has already been performed on the IDCM nodes belonging to the parent subgroup, the IDCM nodes may be stored in the input buffer 61006 along with the attribute components (e.g., reflectance and/or color) thereof. In one embodiment, in the case where an IDCM node in the bottom layer of the parent subgroup is not acquirable from the child subgroup through sub-sampling, the IDCM node may be separately stored in the input buffer 61006. In other words, in the case where an IDCM node belonging to the bottom layer of the parent subgroup has no child nodes, the IDCM node (e.g., 66012 in FIG. 36) may not be acquired from a lower LoD through sub-sampling. In this case, the IDCM node is stored separately in the input buffer 61006 along with the index thereof. In the code below, tempPointCloud is the data about the parent subgroup that is stored in the input buffer 61006 and then input to the partial LoD generator. The tempPointCloud may be identified by tempPointCloudIdx (i.e., the index).

```
// 2-2. idcm nodes in the parent subgroups
// find parent subgroup list
std::vector<int> subgroupList;
subgroupList.resize(curLayerGroup);
int childSubgroup = curSubgroup;
int childLayerGroup = curLayerGroup;
for (int prtLayerGroup = curLayerGroup - 1; prtLayerGroup >= 0; prtLayerGroup-
-) {
        int                          prtSubgroup                          =
_layerGroupParams.parentSubgroupId[childLayerGroup][childSubgroup];
        subgroupList[prtLayerGroup] = prtSubgroup;
        childLayerGroup = prtLayerGroup;
        childSubgroup = prtSubgroup;
        }
        for (int prtLayerGroup = 0; prtLayerGroup < curLayerGroup; prtLayerGroup++) {
        int prtSubgroup = subgroupList[prtLayerGroup];
        /Compare the parent subgroup bounding box (bbox_parent) with the current
subgroup bounding box (bbox). If they are of the same size, skip the following process (for
speed-up).
        auto                         bbox_min_parent                         =
_layerGroupParams.subgrpBboxOrigin[prtLayerGroup][prtSubgroup];
        auto        bbox_max_parent        =        bbox_min_parent        +
_layerGroupParams.subgrpBboxSize[prtLayerGroup][prtSubgroup];
        bool sameBboxFlag = false;
        int numLayers = _layerGroupParams.numLayersPerLayerGroup[prtLayerGroup];
        int accLayer_prev = accLayer[prtLayerGroup] - numLayers;
        for (int i = 0; i < numLayers; i++) {
        if(i<numLayers - 1 && !sameBboxFlag) {
        int pointCount = tempPointCloud.getPointCount();
        int pointCount_add = dcmNodesIdx.size();
        if (pointCount_add) {
        tempPointCloud.resize(pointCount + pointCount_add);
        int count = 0;
```

```
for (int n = 0; n < pointCount_add; ++)

int pointIdx = dcmNodesIdx[n];

auto pos = _currentPointCloud[pointIdx];

int tempIdx = pointCount + count++;

if (attr_sps.attr_num_dimensions_minus1 == 0)

tempPointCloud.setReflectance(tempIdx,
_currentPointCloud.getReflectance(pointIdx));

else if (attr_sps.attr_num_dimensions_minus1 == 2)

tempPointCloud.setColor(tempIdx, _currentPointCloud.getColor(pointIdx));

tempIdxToPointIdx.push_back(-1);

}

tempPointCloud.resize(pointCount + count);

}

}

else if (i == numLayers - 1) {

//IDCM nodes in the bottom layer of the parent subgroup cannot be obtained
through sub-sampling, and thus they should be separately stored in the input buffer.

auto dcmNodesIdx = _layerGroupParams.dcmNodesIdx[accLayer_prev +
i][prtSubgroup];

int pointCount = tempPointCloud.getPointCount();

int pointCount_add = dcmNodesIdx.size();

std::cout << "layerIdx = " << i << "\tpointCount_add = " << pointCount_add;

if (pointCount_add) {

tempPointCloud.resize(pointCount + pointCount_add);

int count = 0;

for (int n = 0; n < pointCount_add; n++) {

int pointIdx = dcmNodesIdx[n];

auto pos = _currentPointCloud[pointIdx];

int tempIdx = pointCount + count++;

tempPointCloud[tempIdx] = _currentPointCloud[pointIdx];

if (attr_sps.attr_num_dimensions_minus1 == 0)

tempPointCloud.setReflectance(tempIdx,
_currentPointCloud.getReflectance(pointIdx));

else if (attr_sps.attr_num_dimensions_minus1 == 2)
```

```
tempPointCloud.setColor(tempIdx, _currentPointCloud.getColor(pointIdx));

tempIdxToPointIdx.push_back(-1);

}

tempPointCloud.resize(pointCount + count);

}

}

tempPointCloudIdx.push_back(tempPointCloud.getPointCount());}

}
```

As described above, once input nodes for LoD generation in the current subgroup are selected (or determined) in operation 63015 (or by the input node selector) as described above, the partial LoD generator for the current subgroup generates an LoD in the current subgroup based on the selected nodes (operation 63016).

That is, the input node selector reads the non-IDCM nodes/IDCM nodes of the current subgroup stored in the current subgroup storage area in the input buffer 61006 and the non-IDCM nodes/IDCM nodes of the parent subgroup stored in the parent subgroup storage area, based on the indexes assigned to the respective nodes, and inputs the same to the partial LoD generator for LoD generation in the current subgroup. In one embodiment, to avoid the use of the nodes out of the subgroup boundary, the neighbor search (i.e., NN search) is constrained to the nodes in the same subgroup or the parent subgroup.

In the present disclosure, partial LoD generation is used when the start and end LoDs are changed to the bottom LoD layer of the current subgroup and the LoD layer above the top LoD layer of the current subgroup, respectively. That is, the partial LoD generation input for the current subgroup includes nodes belonging to the current subgroup and nodes belonging to the parent subgroup (current nodes + parent nodes). In one embodiment, among the nodes belonging to the parent subgroup (parent nodes or parent points), the nodes selected for the current subgroup may be node(s) outside the bounding box of the current subgroup and/or IDCM node(s). In other words, nodes of the parent subgroup that are selected for LoD generation in the current subgroup are nodes that are not included in the range of the current subgroup. Here, the term "not included in the range of the current subgroup" means being outside the boundary of the current subgroup. For example, when it is assumed that the parent subgroup includes a first child subgroup and a second child subgroup, and that the first child subgroup is the current subgroup, the second child subgroup corresponds to a subgroup that is not included in the range of the current subgroup or is outside the boundary of the current subgroup.

In other words, the input to the partial LoD generator for the current subgroup includes nodes belonging to the current subgroup and nodes belonging to the parent subgroup, wherein node(s) belonging to the parent subgroup that are duplicates of the nodes belonging to the current subgroup are not selected.

Further, when the input to the partial LoD generator for the current subgroup includes nodes belonging to the current subgroup and nodes belonging to the parent subgroup, the LoD generation output may include the bottom LoD of the parent subgroup and the LoDs of the current subgroup (parent bottom LoD + current LoDs).

According to embodiments, for each LoD, the partial LoD generator may include an IDCM node generated in the geometry layer corresponding to each LoD, such that the attribute layer structure has a one-to-one correspondence with the geometry layer structure. To this end, non-IDCM nodes belonging to each LoD may be identified (or selected) using sub-sampling that is used in the existing LoD generation, while IDCM nodes may be added to the corresponding LoD.

In this regard, an operation is needed in which whether nodes included in the input to the partial LoD generator are IDCM nodes or non-IDCM nodes is identified (or determined). To this end, the input node selector may divide the nodes of the current subgroup/parent subgroup stored in the input buffer 61006 into non-IDCM nodes and IDCM nodes based on the index of each node and deliver the same to the partial LoD generator as shown in the code below. Thereby, LoD generation in the current subgroup may be efficiently performed. In the code below, tempPointCloud is the input data for the partial LoD generator, and the input node selector may identify (or select) non-IDCM nodes based on the index (or pointer) of tempPointCloud (i.e., tempPointCloudIdx) to configure the sub-sampling input.

```
for (uint32_t i = 0; i < pointCount; ++i) {
    int pointIdx = packedVoxel[i].index;
    if (pointIdx < tempPointCloudIdx[curNonidcmArrayIdx] // current non-idcm nodes
        || (sliceLayerGroup > 0
            && pointIdx >= tempPointCloudIdx[curIdcmArrayIdx] && pointIdx < tempPointCloudIdx[parentNonidcmArrayIdx])
        || (sliceLayerGroup < layerGroupParams.numLayerGroupsMinus1 && numIdcmNodesCurrentSubgroup
            && pointIdx >= tempPointCloudIdx[curIdcmArrayIdx - 1] && pointIdx < tempPointCloudIdx[curIdcmArrayIdx]))

                                        input[idx++] = i;
                                        Else
                                        dcmIdx++;
    }
```

The top LoD of the partial LoD generator is a subset of nodes belonging to the bottom layer of the parent subgroup in the input point cloud data. In this regard, when there are no IDCM nodes, it only needs to include all nodes belonging to the retained. On the other hand,, when there are IDCM nodes, the IDCM nodes belonging to the parent subgroup are provided as input to the partial LoD generator. In this case, the IDCM nodes of the parent subgroup may be identified and added based on the index of tempPointCloud (i.e., tempPointCloudIdx) as shown in the code below.

```
auto numInput = input.size();
for (int i = 0; i < numInput; i++) {
    auto pointIndex = packedVoxel[input[i]].index;
    indexes.push_back(pointIndex);
    predictors[--predIndex].neighborCount = 0;
    pointIndexToPredictorIndex[pointIndex] = predIndex;
}


if (numIdcmNodesParentSubgroup) {
    int parentIdcmIdx_start = tempPointCloudIdx[parentNonidcmArrayIdx];
    int parentIdcmIdx_end = tempPointCloudIdx[parentIdcmArrayIdx];
    for (int pointIndex = parentIdcmIdx_start; pointIndex < parentIdcmIdx_end;
    pointIndex++) {
        indexes.push_back(pointIndex);
        predictors[--predIndex].neighborCount = 0;
        pointIndexToPredictorIndex[pointIndex] = predIndex;
    }
}
```

That is, through the pre-processing performed in operation 63015 (or by the input node selector), the input to the subgroup LoD generator (or subgroup LoD generation input) includes both the nodes of the current subgroup and nodes of the parent subgroup that are outside the current subgroup boundary. In addition, the IDCM node(s) of the parent subgroup are also included. Also, the node(s) newly included in each LoD through LoD generation are included in the indexes.

According to embodiments, the partial LoD generator for the current subgroup generates one or more LoDs in the current subgroup based on the non-IDCM node(s)/IDCM node(s) of the current subgroup that the input node selector reads from the input buffer 61006 based on the index of each node and provide, and node(s)/IDCM node(s) of the parent subgroup that are outside the boundary of the current subgroup. In one embodiment, the node(s) outside the boundary of the current subgroup among the nodes of the parent subgroup include node(s) and/or IDCM node(s) sub-sampled from a sibling subgroup of the current subgroup.

According to the present disclosure, once LoDs are generated for each subgroup, neighbor search (or NN search) is performed for each subgroup based on the generated LoDs.

Before performing neighbor search based on the generated LoDs, only the node(s) within the subgroup boundary are selected for the neighbor search (i.e., NN search) as shown in the code below. In one embodiment, for the point position resolution, the geometry resolution of the current subgroup may be considered.

When LoDs are generated and sorted on a subgroup basis, the code below includes code for finding the start position of the neighbor search (i.e., NN search).

Specifically, when the position of the node to be currently decoded is greater than or equal to the minimum value of the bounding box and less than the maximum value of the bounding box (pos >= bbox_min && pos < bbox_max), NN search starts from the current bounding box.

```
for (int i = startIndex; i < endIndex; i++) {
int packedVoxelIdx = indexes[i];
int pointIndex = packedVoxel[packedVoxelIdx].index;
auto pos = pointCloud[pointIndex];
if (pos >= bbox_min && pos < bbox_max)
indexes_subgroup.push_back(packedVoxelIdx);
}
for (int k = 0; k < indexes_subgroup.size(); k++) {
auto point = pointCloud[packedVoxel[indexes_subgroup[k]].index];
biasedPos_indexes.push_back(times((point        >>        shiftLayerGroup)        <<
(shiftLayerGroup + treeLvlGap), aps.lodNeighBias));
}
```

During the sub-sampling operation, nodes present in the upper LoD are included in retained. In one embodiment, only the node(s) that are within the boundary of the subgroup to which the parent LoD belongs may be selectively used for NN search (or neighbor search) as shown in the code below. Alternatively, for all parent LoDs, whether to use a node for NN search may be determined based on the bounding box of the parent subgroup.

```
for (int i = 0; i < retained.size(); i++) {
int packedVoxelIdx = retained[i];
int pointIdx = packedVoxel[packedVoxelIdx].index;
auto pos = pointCloud[pointIdx];
if (pos >= parent_bbox_min && pos < parent_bbox_max)
retained_subgroup.push_back(packedVoxelIdx);
}
```

Additionally, in the neighbor search, adjacent node(s) may be found among the nodes belonging to the upper LoD for the current LoD. Since IDCM nodes are included in the LoD, it is necessary to include IDCM nodes in the upper LoD. In this case, the partial LoD generator may include, in the neighbor search (i.e., neighbor candidates), the IDCM nodes belonging to the upper layer of the geometry layer that matches the current LoD, as shown in the code below.

```
if (idcmNodesPresentFlag) {

if(currentGeomLayerIndex > 0) {

if (sliceLayerGroup > 0 && numLayersParentSubgroups) {

int startIdx = tempPointCloudIdx[parentNonidcmArrayIdx];

int    endIdx    =    tempPointCloudIdx[parentNonidcmArrayIdx    +
numLayersParentSubgroups];

for (int pointIdx = startIdx; pointIdx < endIdx; pointIdx++) {

auto packedVoxelIndex = pointIdxToPackedVoxelIdx[pointIdx];

}

}

if    (currentGeomLayerIndex    -    numLayersParentSubgroups    >    0    &&
numLayersCurrentSubgroup) {

int endIdx = tempPointCloudIdx[curNonidcmArrayIdx + currentGeomLayerIndex
- numLayersParentSubgroups];

for (int pointIdx = startIdx; pointIdx < endIdx; pointIdx++) {

auto    packedVoxelIndex    =    pointIdxToPackedVoxelIdx[pointIdx];
dcmNodeList_ParentLayers.push_back(packedVoxelIndex);

}
```

```
                }
            }
        }
        for (int i = 0; i < retained.size(); i++) {
        int packedVoxelIdx = retained[i];
        int pointIdx = packedVoxel[packedVoxelIdx].index;
        auto pos = pointCloud[pointIdx];
        if (pos.x() >= parent_bbox_min.x() && pos.x() < parent_bbox_max.x()
        && pos.y() >= parent_bbox_min.y() && pos.y() < parent_bbox_max.y()
        && pos.z() >= parent_bbox_min.z() && pos.z() < parent_bbox_max.z())
        retained_subgroup.push_back(packedVoxelIdx);
        if (dcmNodeList_ParentLayers.size()) {
        for (int j = 0; j < dcmNodeList_ParentLayers.size(); j++)
        retained_subgroup.push_back(dcmNodeList_ParentLayers[j]);
        std::sort(retained_subgroup.begin(), retained_subgroup.end());
        }
```

Additionally, as input for sub-sampling of the next LoD, the IDCM nodes of the geometry layer corresponding to the next LoD may be added together with the nodes delivered to the current LoD from sub-sampling of the previous LoD, as shown in the code below. Even in this case, the IDCM nodes may be identified based on the index (or pointer) of tempPointCloud (i.e., tempPointCloudIdx) without any additional process. In other words, in this case, the IDCM nodes may be identified based on the index assigned to each node, and the IDCM nodes in the geometry layer corresponding to the next LoD may be added.

```
        if (idcmNodesPresentFlag) {
        / The IDCM nodes in the immediate upper layer are put in retained (so as to be
    used as input in the next turn)
        if(parentGeomLayerIndex >= numLayersParentSubgroups) { auto prev =
    retained.size();
        / The start of the current layer should be subtracted.
        int startArrayIdx = curNonidcmArrayIdx + (parentGeomLayerIndex -
    numLayersParentSubgroups);
        int endArrayIdx = curNonidcmArrayIdx + (currentGeomLayerIndex -
    numLayersParentSubgroups);
        for (int pointIndex = tempPointCloudIdx[startArrayIdx]; pointIndex <
```

```
tempPointCloudIdx[endArrayIdx]; pointIndex++) {

            auto packedVoxelIndex = pointIdxToPackedVoxelIdx[pointIndex];

            retained.push_back(packedVoxelIndex); / input[n-1] = retained[n] + idcm[n-1]

        }

        std::sort(retained.begin(), retained.end());

    }

}
```

According to embodiments, for geometry precision, the geometry precision of the parent subgroup may be used for the node(s) outside the bounding box of the current subgroup, as shown in the code below. In the case of FIG. 36 as an example, the underlined portions in the code below correspond to nodes h and o, and the bold portions in the code correspond to node d.

```
for (int k = 0; k < retained_subgroup.size(); k++) {

    auto point = pointCloud[packedVoxel[retained_subgroup[k]].index];

    if (prtLayerGroup != curLayerGroup) {

    if (pos >= cur_bbox_min && pos.x() < cur_bbox_max)

    biasedPos_retained.push_back(times((point    >>    shiftLayerGroup)    <<
(shiftLayerGroup + treeLvlGap), aps.lodNeighBias));

    else

    biasedPos_retained.push_back(times((point   >>   shiftPrtLayerGroup)   <<
(shiftPrtLayerGroup + treeLvlGap), aps.lodNeighBias));

    }

    else

    biasedPos_retained.push_back(times((point    >>    shiftLayerGroup)    <<
(shiftLayerGroup + treeLvlGap), aps.lodNeighBias));

}
```

Next, once the LoD generation and NN search are performed on a subgroup basis in operation 63016 (or the LoD generation) as described above, at least one node in the current subgroup may inherit attributes of at least one node in the parent subgroup (operation 63017). In present disclosure, the operation of at least one node in the current subgroup inheriting the attributes of at least one node in the parent subgroup in operation 63017 is referred to herein as post-processing. Further, in one embodiment, operation 63017 may be performed by an attribute inheritance part (not shown). The attribute inheritance part may be referred to as a post-processor.

According to embodiments, by the definition of LoD that a lower LoD shall include all node(s) of a higher LoD, the node(s) belonging to the bottom LoD of the parent subgroup are all included in the top LoD of the child subgroup. In other words, some nodes belonging to the top LoD of the child subgroup match the nodes in the bottom LoD of the parent subgroup. In this case, the attributes of nodes belonging to the top LoD of the child subgroup may inherit the attributes of the corresponding nodes belonging to the bottom LoD of the parent subgroup.

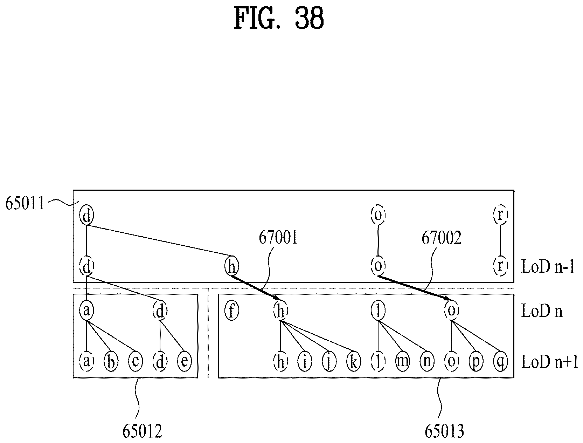

In other words, due to sub-sampling during LoD generation, some nodes in the top LoD of the current subgroup match nodes in the bottom LoD of the parent subgroup. To provide linkage between LoD layers at the layer group boundary, the attributes of decoded nodes of the parent subgroup are inherited by the child nodes in the top LoD layer of the current subgroup. The matching is performed considering the sampling direction in LoDn, as illustrated in FIG. 38.

FIG. 38 illustrates an example of an attribute inheritance process according to embodiments. For simplicity, in present disclosure, 65011 corresponds to subgroup A in FIG. 35 and is referred to herein as the parent subgroup. 65012 corresponds to subgroup B in FIG. 35 and is referred to herein as a first child subgroup or first subgroup, and 65013 corresponds to subgroup C in FIG. 35 and is referred to herein as a second child subgroup or second subgroup. In other words, the first subgroup 65012 and the second subgroup 65013 are sibling subgroups, and 65011 corresponds to the parent subgroup of the first and second subgroups 65012 and 65013. In one embodiment of the present disclosure, there is no dependency between the first subgroup 65012 and the second subgroup 65013. That is, it is assumed that there is no dependency between the sibling subgroups.

Referring to FIG. 38 as an example, among nodes d, h, and o belonging to the bottom layer (or bottom LoD) of the parent subgroup, nodes h and o match nodes f, h, i, and o belonging to the top layer (or top LoD) of the current subgroup 65013 (e.g., subgroup C). In this case, based on the subsampling relationship, the decoded attributes of nodes h and o are matched as indicated by arrows 67001 and 67002. In other words, based on the current subgroup 65013, attributes for the parent subgroup 65011 has already been decoded. Therefore, the attributes of nodes h and o in the current subgroup 65013 are matched to (or inherited from) the decoded attributes of nodes h and o in the parent subgroup 65011, and the attribute decoding is skipped for nodes h and o in the current subgroup 65013.

To this end, as shown in the code below, for nodes that fall within the bounding box of the current subgroup among the nodes belonging to the bottom layer (or bottom LoD) of the parent subgroup, the attributes of the parent subgroup may be referenced for the nodes whose positions match the nodes in the top layer (or top LoD) of the parent subgroup to find the attributes of the corresponding nodes in the current subgroup.

```
if (curLayerGroup > 0) {

    int parentLayerGroup = curLayerGroup - 1;

    int                           parentSubgroup                    =
layerGroupParams.parentSubgroupId[curLayerGroup][curSubgroup];

    int accLayer = 0;

    for (int i = 0; i <= parentLayerGroup; i++)

    accLayer += layerGroupParams.numLayersPerLayerGroup[i];

    int treeLvlGap_parent = sps.root_node_size_log2.max() -accLayer;

    auto                          bbox_min                          =
layerGroupParams.subgrpBboxOrigin[curLayerGroup][curSubgroup];

    auto          bbox_max        =          bbox_min              +
layerGroupParams.subgrpBboxSize[curLayerGroup][curSubgroup];

    std::vector<int> pointIndexInTheBbox;

    auto                  pointCloud_subgroup_fifo_parent           =
layerGroupParams.pointCloud_tempNodes[parentLayerGroup][parentSubgroup];

    int                       currentSubgroupIdxEnd                 =
tempPointCloudIdx[layerGroupParams.numLayersPerLayerGroup[curLayerGroup]];

    for (int i = 0; i < _lods.numPointsInLod[0]; i++) {

    int pointIdx = _lods.indexes[i];

    if (pointIdx < currentSubgroupIdxEnd)

    pointIndexInTheBbox.push_back(pointIdx);

    }

    int numParentNodesInTheBbox = pointIndexInTheBbox.size();

    int sampledNodeIdx = numParentNodesInTheBbox - 1;

    for (int fifoIdx = 0; fifoIdx < pointCloud_subgroup_fifo_parent.getPointCount();
fifoIdx++) {

    pcc::Vec3<int>  pos_parent   =  pointCloud_subgroup_fifo_parent[fifoIdx]   <<
treeLvlGap_parent;

    if (pos_parent >= bbox_min && pos_parent < bbox_max)

    int pointIdx = pointIndexInTheBbox[sampledNodeIdx];

    auto   pos_lod0   =   (pointCloud[pointIdx]   >>   treeLvlGap_parent)   <<
treeLvlGap_parent;
```

```
if (mortonAddr(pos_lod0) == mortonAddr(pos_parent)) {
    if (attr_desc.attr_num_dimensions_minus1 == 0)
        pointCloud.setReflectance(pointIdx,
    pointCloud_subgroup_fifo_parent.getReflectance(fifoIdx));
    else if (attr_desc.attr_num_dimensions_minus1 == 2)
        pointCloud.setColor(pointIdx,
    pointCloud_subgroup_fifo_parent.getColor(fifoIdx));
    if (!sampledNodeIdx)
    break;
    else
    sampledNodeIdx--;
}
else {
    fifoIdx--;
    sampledNodeIdx--;
}
```

The attributes found through the above process may be referenced as neighbors during a subsequent attribute transform operation.

For example, attribute transform is performed on nodes f to q in the current subgroup 65013 except for nodes h and o, which have inherited attributes from the parent subgroup 65011.

According to embodiments, after the operation of at least one node in the current subgroup inheriting the attributes of at least one node in the parent subgroup (i.e., a node at the same position) in operation 63017 (or the attribute inheritance), quantization weights may be derived on a subgroup basis (operation 63018), and attribute transform (e.g., prediction/lifting inverse transform) may be performed on the remaining nodes in the current subgroup (operation 63019). In other words, attribute transform, i.e., attribute decoding, is performed on a subgroup-by-subgroup basis to reconstruct the attributes of the remaining nodes in the current subgroup.

Then, the decoded attributes are stored on a subgroup-by-subgroup basis (operation 63020).

That is, after completing attribute decoding for the current subgroup, the attribute decoder 61004 may store IDCM nodes and non-IDCM nodes, respectively. Here, without a separate identification operation, the non-IDCM nodes belonging to the current subgroup may be selected based on the index of tempPointCloud, as shown in the code below.

```
        if  (curLayerGroup  <  _layerGroupParams.numLayerGroupsMinus1)  {  /
intermediate layer-groups
            auto&                  pointCloud_subgroup_fifo              =
_pointCloud_tempNodes[curLayerGroup][curSubgroup];
            for (int i = 0; i < pointCloud_subgroup_fifo.getPointCount(); i++) {

                if (attr_sps.attr_num_dimensions_minus1 == 0)
                pointCloud_subgroup_fifo.setReflectance(i, tempPointCloud.getReflectance(i));
                else if (attr_sps.attr_num_dimensions_minus1 == 2)
                pointCloud_subgroup_fifo.setColor(i, tempPointCloud.getColor(i));
                }
            }
```

Also, when tempPointCloud is configured, information indicating whether the IDCM nodes belong to the current subgroup may be pre-stored. In the code below, when the value of tempIdxToPointIdx is negative, it may indicate that the node is not an IDCM node of the current subgroup. When tempIdxToPointIdx is greater than 0, it may indicate the index of the IDCM node in the output point cloud data.

```
        int pointCount = tempPointCloud.getPointCount();
        for (int i = 0; i < pointCount; i++) {
        int pointIdx = tempIdxToPointIdx[i];
        if (pointIdx >= 0) {
        if (attr_sps.attr_num_dimensions_minus1 == 0)
        _currentPointCloud.setReflectance(pointIdx, tempPointCloud.getReflectance(i));
        else if (attr_sps.attr_num_dimensions_minus1 == 2)
        _currentPointCloud.setColor(pointIdx, tempPointCloud.getColor(i));
        }
        }
```

According to embodiments, in FIG. 34, geometry slices and corresponding attribute slices may be delivered alternately. In this case, if there are geometry slices remaining, the geometry decoder is restarted, and then the corresponding attribute decoder is operated. In the case where the attribute slices are delivered after delivering geometry slices, all attribute slices may be decoded after all geometry slices are decoded.

Through the aforementioned process, an output point cloud is generated, and the geometry decoding and attribute decoding are completed.

In the case where layer group slicing is not enabled, LoDs are generated based on the reconstructed geometry (operation 63012), weights are derived (operation 63013), and then attribute transform (e.g., prediction/lifting inverse transform) is performed (operation 63015). Operations 63012 and 63013 may correspond to the LoD generation, NN search, and weight derivation by the attribute encoder 51004 of the transmission device.

According to embodiments, the encoder of the transmission device and the decoder of the reception device may perform LoD generation, NN search, and attribute transform in the same way or in different ways.

For example, the encoder of the transmission device and the decoder of the reception device may perform LoD generation, NN search, and attribute transform on a subgroup basis based on FIGS. 34 to 38 and the respective codes. In another example, the encoder of the transmission device may perform LoD generation, NN search, and attribute transform according to a method as illustrated in FIG. 31, and the decoder of the reception device may perform LoD generation, NN search, and attribute transform on a subgroup basis according to FIGS. 34 to 38 and the respective codes.

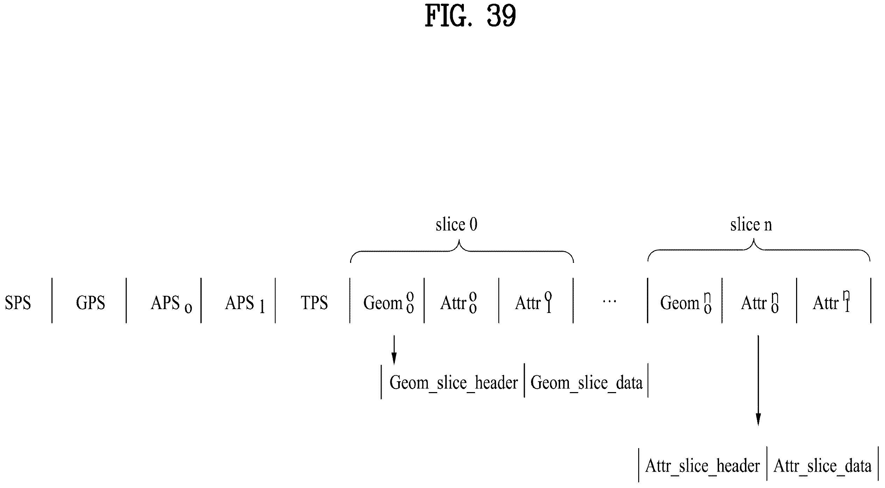

FIG. 39 illustrates an exemplary bitstream structure of point cloud data for transmission/reception according to embodiments. According to embodiments, the bitstream output from the point cloud video encoder of any one of FIG. 1, FIG. 2, FIG. 3, FIG. 8, and FIG. 30 may be in the form of FIG. 39.

According to embodiments, the bitstream of point cloud data provides tiles or slices to allow point cloud data to be divided into regions to be processed. Each region of the bitstream according to embodiments may have different importance. Therefore, when point cloud data is divided into tiles, different filters (encoding methods) and different filter units may be applied to the tiles, respectively. When point cloud data is divided into slices, different filters and different filter units may be applied to the slices, respectively.

The transmission device according to the embodiments may transmit point cloud data according to the bitstream structure as shown in FIG. 39, and may thus provide a method of applying different encoding operations according to the importance and using an encoding method with good quality in an important region. In addition, efficient encoding and transmission according to the characteristics of point cloud data may be supported and attribute values according to user requirements may be provided.

the reception device according to embodiments may receive point cloud data according to the bitstream structure as shown in FIG. 39, and thus a different filtering method (decoding method) may be applied for each region (region divided into tiles or slices) instead of using a complicated decoding (filtering) method for the entire point cloud data according to the processing capacity of the reception device. Accordingly, a better image quality may be ensured in a region important to a user and appropriate latency may be ensured on a system.

When a geometry bitstream, an attribute bitstream, and/or a signaling bitstream (or signaling information) according to embodiments constitute one bitstream (or G-PCC bitstream) as shown in FIG. 39, the bitstream may include one or more sub-bitstreams. According to embodiments, a bitstream may contain a sequence parameter set (SPS) for signaling of a sequence level, a geometry parameter set (GPS) for signaling of geometry information coding, one or more attribute parameter sets (APSs) (APS0 and APS 1) for signaling of attribute information coding, a tile inventory (also referred to as a TPS) for signaling at a tile level, and one or more slices (slice 0 to slice n). That is, a bitstream of point cloud data according to embodiments may include one or more tiles, wherein each tile may be a slice group including one or more slices (slice 0 to slice n). The tile inventory (i.e., TPS) may include information about each of the one or more tiles (e.g., coordinate value information and height/size information related to a tile bounding box). Each slice may include one geometry bitstream (Geom0) and/or one or more attribute bitstreams (Attr0 and Attr1). For example, slice 0 may include one geometry bitstream (Geom00) and one or more attribute bitstreams (Attr00 and Attr10).

The geometry bitstream in each slice may include a geometry slice header (geom_slice_header) and geometry slice data (geom_slice_data). According to embodiments, the geometry bitstream in each slice may be referred to as a geometry data unit, and the geometry slice header may be referred to as a geometry data unit header. Also, the geometry slice data may be referred to as geometry data unit data. According to embodiments, the geometry slice header (or geometry data unit header) may include identification information (geom_parameter_set_id) related to the parameter set included in the GPS, a tile identifier (geom_tile_id), a slice identifier (geom_slice_id), and information (geomBoxOrigin, geom_box_log2_scale, geom_max_node_size_log2, geom_num_points) related to data included in the geometry slice data (geom_slice_data). geomBoxOrigin is geometry box origin information indicating the box origin of the geometry slice data, geom_box_log2_scale is information indicating a log scale of the geometry slice data, geom_max_node_size_log2 is information indicating the size of the root geometry octree node, and geom_num_points is information related to the number of points of the geometry slice data. The geometry slice data (or geometry data unit data) may include geometry information (or geometry data) related to the point cloud data in a corresponding slice.

Each attribute bitstream in each slice may include an attribute slice header (attr_slice_header) and attribute slice data (attr_slice_data). According to embodiments, the attribute bitstream in each slice may be referred to as an attribute data unit. Also, the attribute slice header may be referred to as an attribute data unit header, and the attribute slice data may be referred to as attribute data unit data. According to embodiments, the attribute slice header (or attribute data unit header) may include information about the corresponding attribute slice data (or corresponding attribute data unit), and the attribute slice data may include attribute information (also referred to as attribute data or attribute value) related to the point cloud data in the corresponding slice. When multiple attribute bitstreams are present in one slice, each attribute bitstream may include different attribute information. For example, one attribute bitstream may include attribute information corresponding to color, and another attribute stream may include attribute information corresponding to reflectance.

According to embodiments, parameters required for encoding and/or decoding of point cloud data may be defined in parameter sets of point cloud data (e.g., SPS, GPS, APS, and TPS (also referred to as a tile inventory)) and/or a header of the corresponding slice. For example, in encoding and/or decoding of geometry information, the parameters may be added to the GPS. In tile-based encoding and/or decoding, the parameters may be added to a tile and/or slice header.

According to embodiments, the information (e.g., LGSI) related to layer-group-based slicing may be signaled in the SPS and/or the APS.

According to embodiments, the information related to layer-group-based slicing may be signaled in the TPS and/or the attribute data unit header.

According to embodiments, when the syntax elements defined below are applicable to multiple point cloud data streams as well as the current point cloud data stream, the information related to layer-group-based slicing may be carried in a higher parameter set.

According to embodiments, the information related to layer-group-based slicing may be defined in a corresponding position or a separate position depending on the application or the system to use different application range, a different application method, and the like. As used in the syntaxes described herein, a field may have the same meaning as a parameter or a syntax element.

According to embodiments, parameters (which may be referred to metadata, signaling information, or the like) containing the information related to layer-group-based slicing may be generated by the metadata processor (or metadata generator) or signaling processor of the transmission device, and may be delivered to the reception device so as to be used in the decoding/reconstruction operation. For example, a parameter generated and transmitted by the transmission device may be acquired by a metadata parser of the reception device.

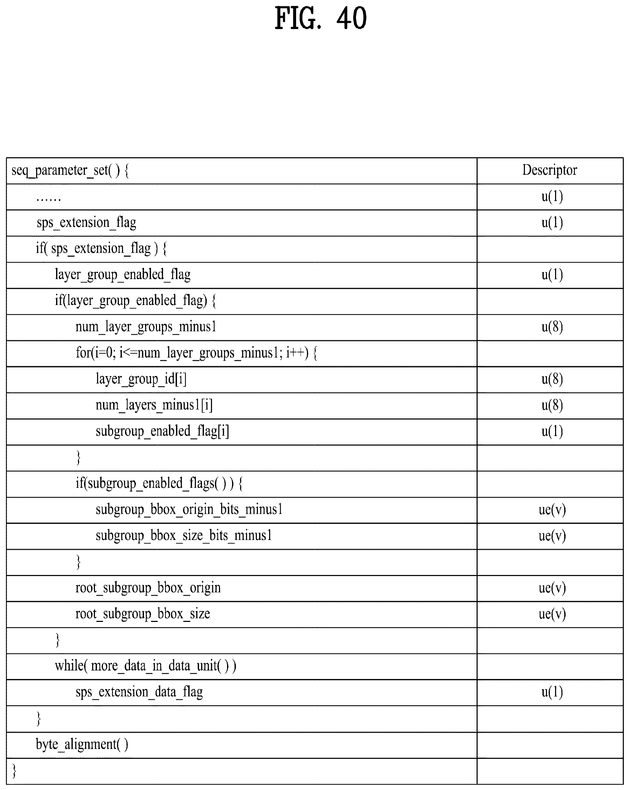

FIG. 40 illustrates one embodiment of a syntax structure of a sequence parameter set (seq_parameter_set()) (SPS) according to the present disclosure. The SPS may contain sequence information related to the point cloud data bitstream. In particular, it is exemplarily shown as including information related to layer-group-based slicing.

The syntaxes of FIG. 40 may be included in the bitstream of FIG. 39, and may be generated by a point cloud encoder and decoded by a point cloud decoder according to embodiments.

In FIG. 40, the simple_profile_compatibility_flag field may indicate whether the bitstream is compatible with the main profile. For example, simple_profile_compatibility_flag equal to 1 may indicate that the bitstream is compatible with a simple profile. For example, simple_profile_compatibility_flag equal to 0 may indicate that the bitstream is compatible with a profile other than the simple profile.

When unique_point_positions_constraint_flag is equal to 1, all output points may have unique positions in each point cloud frame that is referenced by the current SPS. When unique_point_positions_constraint_flag is equal to 0, two or more output points may have the same position in any point cloud frame that is referenced by the current SPS. For example, even when all points are unique in the respective slices, slices and other points in a frame may overlap. In this case, unique_point_positions_constraint_flag is set to 0.

level_idc indicates a level to which the bitstream conforms.

sps_seq_parameter_set_id provides an identifier for the SPS for reference by other syntax elements.

sps_num_attribute_sets indicates the number of coded attributes in the bitstream.

The SPS according to the embodiments includes an iteration statement iterating as many times as the value of the sps_num_attribute_sets field. In an embodiment, i is initialized to 0, and is incremented by 1 each time the iteration statement is executed. The iteration statement is repeated until the value of i becomes equal to the value of the sps_num_attribute_sets field. The iteration statement may include an attribute_dimension_minus1 [i] field and an attribute_instance_id[i] field. attribute_dimension_minus1[i] plus 1 indicates the number of components of the i-th attribute.

The attribute_instance_id[i] field specifies the instance ID of the i-th attribute.

The known_attribute_label_flag[i] field indicates whether a known_attribute_label[i] field or an attribute_label_four_bytes[i] field is signaled for the i-th attribute. For example, when known_attribute_label_flag[i] equal to 0 indicates the known_attribute_label[i] field is signaled for the i-th attribute. known_attribute_label_flag[i] equal to 1 indicates that the attribute_label_four_bytes[i] field is signaled for the i-th attribute.

known_attribute_label[i] specifies the type of the i-th attribute. For example, known_attribute_label[i] equal to 0 may specify that the i-th attribute is color. known_attribute_label[i] equal to 1 may specify that the i-th attribute is reflectance. known_attribute_label[i] equal to 2 may specify that the i-th attribute is frame index. Also, known_attribute_label[i] equal to 4 specifies that the i-th attribute is transparency. known_attribute_label[i] equal to 5 specifies that the i-th attribute is normals.

axis_coding_order indicates the correspondence between the X, Y, and Z output axis labels and the three position components in the reconstructed point cloud RecPic [pointidx] [axis] with and axis=0..2.

sps_bypass_stream_enabled_flag equal to 1 may indicate that the bypass coding mode is used in reading the bitstream. As another example, sps_bypass_stream_enabled_flag equal to 0 may indicate that the bypass coding mode is not used in reading the bitstream.

In FIG. 40, sps_extension_flag indicates whether the sps_extension_data syntax structure is present in the SPS syntax structure. For example, sps_extension_present_flag equal to 1 indicates that the sps_extension_data syntax structure is present in the SPS syntax structure. sps_extension_present_flag equal to 0 indicates that this syntax structure

EP 4 654 581 A1

is not present.

Below are examples of information related to layer group-based slicing included in sps_extension_data when the value of the sps_extension_present_flag field is 1.

layer_group_enabled_flag equal to 1 indicates that the geometry (or attribute) bitstream of the slice is contained in multiple slices that match a coding layer-group or a subgroup thereof. layer_group_enabled_flag equal to 0 indicates that the geometry (or attribute) bitstream is contained in a single slice.

When layer_group_enabled_flag is equal to 1, num_layer_groups_minus1 + 1 indicates the number of layer-groups, which represent the groups of consecutive tree layers that are part of the geometry coding tree structure. num_layer_groups_minus1 is in the range of 0 to the number of coding tree layers.

A loop that iterates by the value of num_layer_groups_minus1 may include layer_group_id[i], num_layers_minus1[i], and subgroup_enabled_flag[i] fields.

layer_group_id[i] indicates the identifier of the i-th layer-group. layer_group_id is in the range of 0 to num_layer_groups_minus1.

num_layers_minus1 [i] + 1 indicates the number of coding layers included in the i-th layer-group. The total number of layer-groups may be derived by adding all (num_layers_minus1[i] + 1) for i from 0 to num_layer_groups_minus1.

subgroup_enabled_flag[i] equal to 1 indicates that the i-th layer-group is divided into two or more subgroups. In this case, the set of points in the subgroups is the same as the set of points in the layer-group. When subgroup_enabled_flag[i] of the i-th layer-group is equal to 1, and j is greater than or equal to i, subgroup_enabled_flag of the j-th layer-group will be equal to 1. subgroup_enabled_flag equal to 0 indicates that the current layer-group is contained in a single slice without being divided into multiple subgroups.

When layer_group_enabled_flag is equal to 1, the SPS may include subgroup_bbox_origin_bits_minus1 and subgroup_bbox_size_bits_minus1.

subgroup_bbox_origin_bits_minus1 + 1 indicates the length in bits of the syntax element (i.e., field) subgroup_bbox_origin.

subgroup_bbox_size_bits_minus1 + 1 indicates the length in bits of the syntax element subgroup_bbox_size.

According to embodiments, when layer_group_enabled_flag is equal to 1, the SPS may further include root_subgroup_bbox_origin and root_subgroup_bbox_size.

root_subgroup_bbox_origin may indicate the location of the origin of the subgroup bounding box of the root subgroup.

root_subgroup_bbox_size may indicate the size of the subgroup bounding box of the root subgroup.

When sps_extension_flag is equal to 1, the SPS according to the embodiments may further include an sps_extension_data_flag field. The sps_extension_data_flag field may have any value.

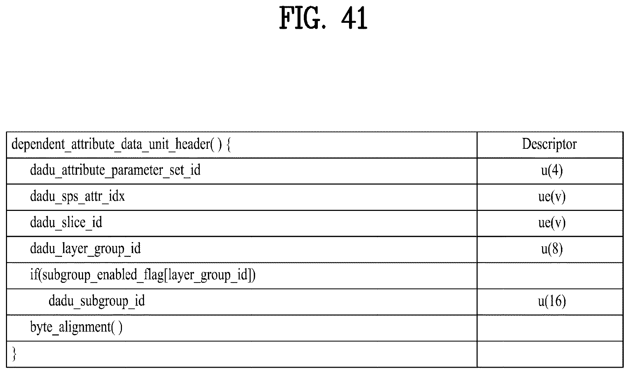

FIG. 41 illustrates an embodiment of a syntax structure of a dependent attribute data unit header (dependent_attribute_data_unit_header()) according to the present disclosure. FIG. 41 illustrates an example where the dependent attribute data unit header contains information related to layer-group-based slicing.

The syntaxes of FIG. 41 may be included in the bitstream of FIG. 39, and may be generated by a point cloud encoder and decoded by a point cloud decoder according to embodiments.

According to embodiments, the dependent attribute data unit header may be included in the attribute data unit. The term attribute data unit may be used interchangeably with a dependent attribute data unit or an attribute slice.

According to embodiments, the dependent attribute data unit header may be included in at least one of the SPS, APS, GPS, or TPS.

In FIG. 41, dadu_attribute_parameter_set_id indicates an active APS as indicated by aps_attr_parameter_set_id. The value of dgdu_attribute_parameter_set_id is equal to the value of adu_attribute_parameter_set_id in the corresponding slice.

dadu_sps_attr_idx identifies the coded attribute by its index into the active SPS attribute list.

dadu_slice_id specifies the attribute slice to which the current dependent attribute data unit belongs.

dadu_layer_group_id may be an indicator of the layer-group of the slice. dadu_layer_group_id may be in the range of 0 to num_layer_groups_minus1. When not present, it is inferred to be 0.

dadu_subgroup_id indicates the indicator of the subgroup of the layer group referenced by dadu_layer_group_id. dadu_subgroup_id may be in the range of 0 to num_subgroups_minus1[dadu_layer_group_id]. dadu_subgroup_id may indicate the order of slices having the same dadu_layer_group_id. When not present, it is inferred to be 0.

The reception method/device according to the embodiments may have the following effects.

The present disclosure describes a method of dividing and transmitting compressed data based on specific criteria for point cloud data. In particular, in one application for the present disclosure, when layered coding (or hierarchical coding) is used, compressed data may be divided according to layers for transmission, which may increase storage and transmission efficiency on the transmitting side. In particular, when scalable attribute coding is used, the entire coded geometry data should be sent, which is a disadvantage. In the present disclosure, only geometry layers that match the tree

60

level used in scalable attribute coding may delivered, which may further increase transmission efficiency.

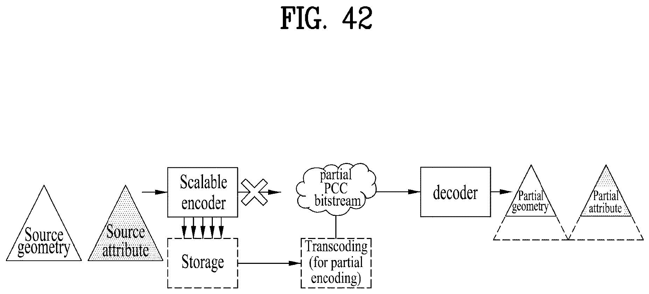

FIG. 42 is a diagram illustrating an example of compressing geometry and attributes of point cloud data for a service. In other words, in a PCC-based service, the compression rate or number of data may be adjusted and transmitted depending on the receiver performance or transmission environment. In the case where point cloud data is bundled on a slice-by-slice basis as shown in FIG. 42, the receiver performance or transmission environment may change. In this case, it is necessary to 1) pre-transcode the bitstreams into a form suitable for each environment, separately store the same, and select a bitstream at the time of transmission, or to 2) perform transcoding prior to the transmission. In this case, when the number of receiver environments to be supported increases or the transmission environment frequently changes, issues related to the storage space or a delay resulting from transcoding may be raised.

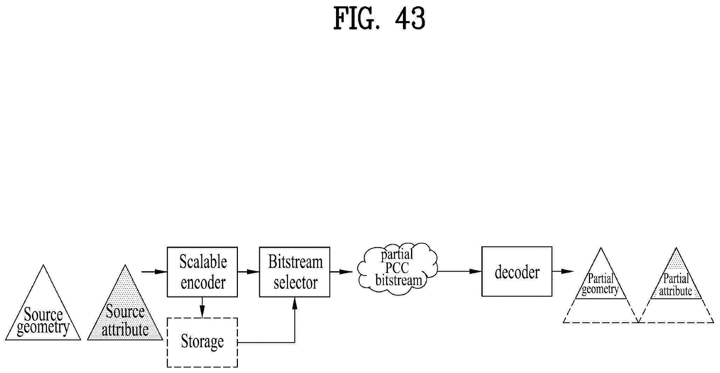

FIG. 43 is a diagram illustrating another example of compressing geometry and attributes of point cloud data for a service according to embodiments.

Dividing the compressed data according to layers for transmission, as proposed in the present disclosure, may enable only the necessary parts of the pre-compressed data to be selectively delivered through a bitstream selector at the bitstream stage without a separate transcoding operation. This is efficient in terms of storage space because only one storage space is needed per stream. It is also efficient in terms of bandwidth because the bitstream selector selects only necessary layers before transmission.

The effects of the features of the present disclosure from the perspective of the receiving side are described below. In one application for the present disclosure, when layered coding (or hierarchical coding) is used, the compressed data may be divided according to the layers, which may increase the efficiency on the receiving side. In particular, in the case of scalable attribute coding, receiving and decoding the entire coded geometry data may cause delay and burden the receiver computation. According to the present disclosure, only geometry layers that match the tree level used in scalable attribute coding may be decoded, which may reduce the delay factor and increase the efficiency of the decoder by saving the computing power needed for decoding.

FIG. 44 is a diagram illustrating the operation on the transmitting side/receiving side when layered point cloud data is transmitted. In the case, if information for reconstructing the entire point cloud data is delivered regardless of the performance of the receiver, the receiver may need to reconstruct the point cloud data through decoding and then select only the point cloud data corresponding to the necessary layer (e.g., data selection or sub-sampling). In this case, since the delivered bitstream has already been decoded, a delay may occur in the receiver targeting low delay, or decoding may not be performed depending on the receiver performance.

However, as proposed herein, when the receiver receives only the compressed data of the necessary layers, the receiver is allowed to selectively decode specific layers. Thereby, the decoder efficiency may be increased and decoders of different performance may be supported.

FIG. 45 is a flowchart of a method of transmitting point cloud data according to embodiments.

The method of transmitting point cloud data according to the embodiments may include acquiring point cloud data (71001), encoding the point cloud data (71002), and transmitting the encoded point cloud data and signaling information (71003). In this case, a bitstream containing the encoded point cloud data and the signaling information may be encapsulated in a file and transmitted.

In acquiring the point cloud data (71001), some or all of operations of the point cloud video acquisition unit 10001 of FIG. 1 or some or all of the operations of the data input unit 8000 in FIG. 8 may be performed.

In encoding the point cloud data (71002), some or all of the operations of the point cloud video encoder 10002 of FIG. 1, the encoding 20001 of FIG. 2, the point cloud video encoder of FIG. 3, the point cloud video encoder of FIG. 8, the attribute encoding of FIG. 25, the geometry encoder and attribute encoder of FIG. 30, and the attribute encoding of FIG. 31 may be performed to encode geometry information and attribute information.

The encoding of the point cloud data (71002) according to the embodiments may include compressing the geometry information related to the input point cloud data and compressing the attribute information.

According to embodiments, the compressing of the geometry information may include compressing the geometry information on a per layer group basis and/or per subgroup basis. At this time, geometry information can be compressed by distinguishing IDCM nodes and non-IDCM nodes.

The compressed geometry information may be entropy-encoded and output in the form of a geometry bitstream.

According to embodiments, the compressing of the attribute information includes compressing the attribute information based on based on positions for which geometry encoding has not been performed and/or reconstructed geometry information. In one embodiment, the attribute information may be coded using any one or a combination of one or more of RAHT coding, LOD-based predictive transform coding, and lifting transform coding.

According to embodiments, the compressing of the attribute information includes performing the LoD generation and NN search described with reference to FIGS. 11 to 31. In one embodiment, the compressing of the attribute information may include the compressing of the attribute information may include detecting, based on a missing subgroup (or FGS or slice) being present in relation to the attribute information, at least one missing node of the parent subgroup using a corresponding subgroup of geometry (or FGS of geometry). According to embodiments, after comparing the subsampled nodes from the present child subgroups and the interim geometry slice output nodes, the missing nodes that are in the geometry output but not in the subsampling output are appended to the LoD of the current subgroup. In other words, LoD N is generated using the subsampled nodes from the child subgroups of the current attribute and/or the nodes from the geometry parent subgroup corresponding to the parent subgroup of the current attribute. Then, in the NN search for the current point (or node), neighbors may be selected based on distance, which may include neighbor nodes outside the subgroup to which the current point (or node) belongs.

According to embodiments, in compressing the attribute information, a neighbor node outside the subgroup to which the current point belongs is not considered as a neighbor of the current point when the neighbor node belongs to a sibling subgroup of the subgroup, i.e., a subgroup of the same level. In other words, based on the child-level subgroup boundary, nodes outside the boundary are not selected as neighbors. Thus, by imposing a restriction that only nodes within the same subgroup bounding box should be used in generating a predictor based on the aforementioned criterion, accurate decoding may be performed even in the case of partial decoding on a segmented slice. In this case, the root layer group may be allowed to be referenced in all cases.

According to embodiments, in compressing the attribute information, when a neighbor node outside the subgroup to which the current point belongs to the parent subgroup of the subgroup, the neighbor node is considered as a neighbor node of the current point.

According to embodiments, in performing the NN search in the compressing of the attribute information, when neighbor candidates are within the subgroup bounding box, the attribute encoder 51004 considers the detail of the geometry position down to the finest level (e.g., bottom level) of the child subgroup. On the other hand, when neighbor candidates are outside the subgroup bounding box, the detail of the geometry position is considered down to the finest level (e.g., the bottom level) of the parent subgroup.

According to embodiments, when layer group slicing is enabled, the operation of compressing attribute information may include generating an LoD on a subgroup basis, deriving weights based on the LoD generated on the subgroup basis, and performing attribute transform (e.g., prediction/lifting transform) on the points in the LoD. Also, in one embodiment, when point(s) belonging to a parent subgroup related to the current subgroup are included in input points, only point(s) not included in the range of the current subgroup may be added. After this process, an LoD of the current subgroup is generated based on the determined input points, and NN search is performed based on the generated LoD. In the present disclosure, nodes and points may be used interchangeably.

According to embodiments, as described above, when the LoD generation and NN search are performed on a subgroup basis, an operation of of at least one point in the current subgroup inheriting the attribute of at least one point in the parent subgroup may be performed. In other words, some of the points belonging to the top LoD of the child subgroup may match the points in the bottom LoD of the parent subgroup. In this case, the attributes of the points belonging to the top LoD of the child subgroup may inherit the attributes of the corresponding points belonging to the bottom LoD of the parent subgroup.

The attribute information compressed through the above procedure is entropy encoded and output in the form of an attribute bitstream.

As described herein, signaling information may include layer group-based slicing-related information for encoding geometry information and attribute information on a layer group and/or subgroup basis and decoding the same at the receiving side.

The layer group-based slicing-related information may be included in at least one of the SPS, APS, and/or attribute data unit header (or dependent attribute data unit header) and transmitted to the receiving side. For details of the information included in the layer group-based slicing-related information, which are not described below, refer to FIGS. 40 and 41.

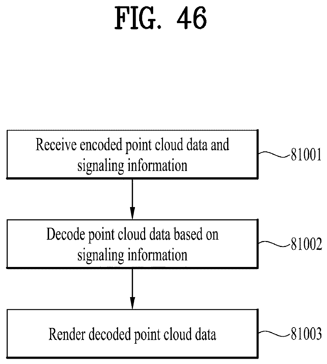

FIG. 46 is a flowchart illustrating a method of receiving point cloud data according to embodiments.

A method of receiving point cloud data according to embodiment, may include receiving encoded point cloud data and signaling information (operation 81001), decoding the point cloud data based on the signaling information (operation 81002), and rendering the decoded point cloud data (operation 81003).

Operation 81001 of receiving the point cloud data and signaling information according to the embodiments may be performed by the receiver 10005 of FIG. 1, the transmission 20002 or decoding 20003 of FIG. 2, or the receiver 9000 or reception processor 9001 of FIG. 9.

Operation 81002 of decoding the point cloud data according to the embodiments may include some or all of the operations of the point cloud video decoder 10006 of FIG. 1, the decoding 20003 of FIG. 2, the point cloud video decoder of FIG. 8, the point cloud video decoder of FIG. 9, the geometry decoder and attribute decoder of FIG. 32, the attribute decoding of FIG. 33, or the attribute decoding of FIG. 34 for decoding of the geometry information and attribute information.

Operation 81002 of decoding the point cloud data according to embodiments includes decoding the geometry information and decoding the attribute information.

The operation of decoding the geometry information may include decoding (i.e., reconstructing) the geometry information on a layer group and/or subgroup basis based on layer group-based slicing-related information included in the signaling information.

The operation of decoding the attribute information may include decoding (i.e., decompressing) the attribute information on a layer group and/or subgroup basis based on the reconstructed geometry information and the layer group-based slicing-related information included in the signaling information. In one embodiment, the attribute information may be decoded by one or a combination of one or more of RAHT coding, LoD-based predictive transform coding, and lifting transform coding.

When layer group slicing is enabled, the operation of decoding the attribute information may include generating an LoD on a subgroup basis considering IDCM nodes, deriving weights based on the LoD generated on the subgroup basis, and performing attribute transform (e.g., prediction/lifting inverse transform) on points (or nodes) in the LoD to restore (or derive) attributes. In this case, input points for generating the LoD in the current subgroup may include point(s) of the current subgroup and point(s) of the parent subgroup. In particular, since decoding may be performed without the geometry tree depth reaching the full depth, input point generation and LoD generation may be performed after compensating for the tree depth as much as the difference between the final geometry tree depth and the geometry tree depth of the current subgroup. Further, when point(s) belonging to the parent subgroup related to the current subgroup are included as input for LoD generation for the current subgroup, only IDCM point(s) and/or points not included in the range of the current subgroup may be added. That is, the points selected from among the points of the parent subgroup for LoD generation and NN search for the current subgroup do not overlap with the points belonging to the current subgroup. After this process, LoDs of the current subgroup are generated based on the determined input points, and NN search is performed based on the generated LoDs. Here, to perform LoD generation and NN search considering IDCM nodes, the input buffer stores the nodes of the current subgroup and the parent subgroup separately as shown in FIG. 37. Additionally, the nodes of the current subgroup are divided into non-IDCM nodes and IDCM nodes and stored. The nodes of the parent subgroup are also divided into non-IDCM nodes and IDCM nodes and stored. The IDCM nodes of the current subgroup are stored sequentially, separated by layers, and the IDCM nodes of the parent subgroup are also stored sequentially, separated by layers. Whether a node stored in the input buffer belongs to the current subgroup or the parent subgroup, and whether it is a non-IDCM or IDCM node, may be identified based on the index assigned to each node. In one embodiment, the nodes stored in the input buffer based on the indexes are used for LoD generation and neighbor search for the current subgroup.

As described above, when LoD generation and NN search are performed on a subgroup basis, the operation of decoding the attribute information may include an operation of at least one point in the current subgroup inheriting the attribute of at least one point in the parent subgroup. In other words, some points belonging to the top LoD of the child subgroup match the points in the bottom LoD of the parent subgroup. In this case, the attributes of points belonging to the top LoD of the child subgroup may inherit the attributes of the corresponding points belonging to the bottom LoD of the parent subgroup. For details not described herein, refer to the descriptions of FIGS. 11 to 38.

In the rendering (81003) according to the embodiments, the point cloud data may be reconstructed based on the restored (or reconstructed or derived) geometry information and attribute information and rendered according to various rendering schemes. For example, points in the point cloud content may be rendered as vertices having a certain thickness, as cubes having a certain minimum size centered on the corresponding vertex position, as circles centered on the vertex position, etc. All or a portion of the rendered point cloud content may be presented to a user through a display (e.g., a VR/AR display, a general display, etc.). The rendering of the point cloud data (81003) according to the embodiments may be performed by the renderer 10007 of FIG. 1, or the rendering 20004 of FIG. 2, or the renderer 9011 of FIG. 9.

Therefore, by performing LoD generation and NN search in consideration of IDCM nodes during attribute encoding/decoding, the efficiency of compression of attribute information may be improved.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "...module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments of the embodiments have been shown and described, the embodiments are not limited to the specific embodiments described above, and various modifications may be made by one of ordinary skill in the art without departing from the spirit of the embodiments claimed in the claims, and such modifications should not be understood in isolation from the technical ideas or views of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in the document, the term "or" should be interpreted to indicate "and/or." For instance, the expression "A or B" may comprise 1) only A, 2) only B, and/or 3) both A and B. In other words, the term "or" in this document should be interpreted to indicate "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/-reception device including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

[Mode for Disclosure]

As described above, related contents have been described in the best mode for carrying out the embodiments.

[Industrial Applicability]

As described above, the embodiments may be fully or partially applied to the point cloud data transmission/reception device and system. It will be apparent to those skilled in the art that various changes or modifications may be made to the embodiments within the scope of the embodiments. Thus, it is intended that the embodiments cover modifications and variations provided they come within the scope of the appended claims and their equivalents.

**Claims**

1. A method of receiving point cloud data, the method comprising:

   receiving geometry data, attribute data, and signaling information;
   decoding the geometry data based on the signaling information;
   decoding the attribute data based on the signaling information and the decoded geometry data; and
   rendering point cloud data including the decoded geometry data and the decoded attribute data.

2. The method of claim 1, wherein the decoding of the attribute data comprises:

   receiving the attribute data on a subgroup basis;
   storing nodes of a current subgroup and nodes of a parent subgroup of the current subgroup in a buffer based on the signaling information, the decoded geometry data, and the attribute data;
   generating at least one level of detail (LoD) for the current subgroup based on the nodes of the current subgroup and the nodes of the parent subgroup stored in the buffer;
   searching for nearest neighbors of a node to be attribute decoded in the current subgroup based on the at least one LoD for the current subgroup and at least one LoD for the parent subgroup; and
   deriving attribute data based on the searched nearest neighbors.

3. The method of claim 2, wherein the nodes of the parent subgroup used to generate the at least one LoD for the current subgroup do not overlap with the nodes of the current subgroup.

4. The method of claim 3, wherein the nodes of the parent subgroup used to generate the at least one LoD for the current subgroup comprise nodes outside a boundary of the current subgroup or at least one direct compression (IDCM) node.

5. The method of claim 4, wherein the storing comprises:

   storing the nodes of the current subgroup and the nodes of the parent subgroup separately in the buffer;
   based on at least one of the nodes of the current subgroup being an IDCM node, storing non-IDCM nodes of the current subgroup and the at least one IDCM node separately in the buffer; and
   based on at least one of the nodes of the parent subgroup being an IDCM node, storing non-IDCM nodes of the parent subgroup and the at least one IDCM node separately in the buffer,
   wherein the nodes stored in the buffer are identified by an index assigned to each of the nodes.

6. The method of claim 5, wherein the storing further comprises:

   based on the at least one IDCM node of the current subgroup being included in a plurality of layers, separating the at least one IDCM node of the current subgroup according to the layers and storing the same in the buffer; and
   based on the at least one IDCM node of the parent subgroup being included in a plurality of layers, separating the at least one IDCM node of the parent subgroup according to the layers and storing the same in the buffer.

7. The method of claim 6, wherein the deriving of the attribute data comprises:
   based on a bottom layer of the parent subgroup having a node at an identical position to a node to be reconstructed in a top layer of the current subgroup, matching an attribute of the node in the parent subgroup to an attribute of the node in the top layer of the current subgroup.

8. The method of claim 5, wherein at least one IDCM node of the parent subgroup is a node excluded from being sub-sampled from a top layer of the current subgroup.

9. A device for receiving point cloud data, comprising:

a receiver configured to receive geometry data, attribute data, and signaling information;
a geometry decoder configured to decode the geometry data based on the signaling information;
an attribute decoder configured to decode the attribute data based on the signaling information and the decoded geometry data; and
a renderer configured to render point cloud data including the decoded geometry data and the decoded attribute data.

10. The device of claim 9, wherein the attribute decoder comprises:

a buffer configured to store nodes of a current subgroup and nodes of a parent subgroup of the current subgroup based on the signaling information, the decoded geometry data, and subgroup-based attribute data;
a level of detail (LoD) generator configured to generate at least one LoD for the current subgroup based on the nodes of the current subgroup and the nodes of the parent subgroup stored in the buffer;
a neighbor searcher configured to search for nearest neighbors of a node to be subjected to attribute decoding in the current subgroup based on the at least one LoD for the current subgroup and at least one LoD for the parent subgroup; and
a deriver configured to derive attribute data based on the searched nearest neighbors.

11. The device of claim 10, wherein the nodes of the parent subgroup used to generate the at least one LoD for the current subgroup do not overlap with the nodes of the current subgroup.

12. The device of claim 11, wherein the nodes of the parent subgroup used to generate the at least one LoD for the current subgroup comprise nodes outside a boundary of the current subgroup or at least one direct compression (IDCM) node.

13. The device of claim 12, wherein the buffer is configured to:

store the nodes of the current subgroup and the nodes of the parent subgroup in separate storage areas;
store, based on at least one of the nodes of the current subgroup being an IDCM node, non-IDCM nodes of the current subgroup and the at least one IDCM node in separate storage areas; and
store, based on at least one of the nodes of the parent subgroup being an IDCM node, non-IDCM nodes of the parent subgroup and the at least one IDCM node in separate storage areas,
wherein the nodes stored in the buffer are identified by an index assigned to each of the nodes.

14. The device of claim 13, wherein the buffer is configured to:

separate, based on the at least one IDCM node of the current subgroup being included in a plurality of layers, the at least one IDCM node of the current subgroup according to the layers and store the same; and
separate, based on the at least one IDCM node of the parent subgroup being included in a plurality of layers, the at least one IDCM node of the parent subgroup according to the layers and store the same.

15. The device of claim 14, wherein, based on a bottom layer of the parent subgroup having a node at an identical position to a node to be reconstructed in a top layer of the current subgroup, the deriver matches an attribute of the node in the parent subgroup to an attribute of the node in the top layer of the current subgroup.

# FIG. 1

# FIG. 2

EP 4 654 581 A1

```
       20000                    20001                    20002                    20003                    20004

   ┌──────────────┐         ┌──────────────┐        ┌──────────────┐        ┌──────────────┐        ┌──────────────┐
   │              │ Ply File│              │ ENCODED│              │        │              │ DECODED│              │
   │ ACQUISITION  │────────▶│  ENCODING    │───────▶│ TRANSMISSION │───────▶│  DECODING    │───────▶│  RENDERING   │
   │              │-geometry│              │-geometry│              │        │              │-geometry│              │
   │              │-attribute│             │-attribute bitstream│   │        │              │-attribute│             │
   └──────────────┘         └──────────────┘        └──────────────┘        └──────────────┘        └──────────────┘
```

HEAD ORIENTATION, VIEWPORT INFORMATION

FEEDBACK

HEAD ORIENTATION,
VIEWPORT INFORMATION

20005

# FIG. 3

# FIG. 4

# FIG. 5

Level of details

# FIG. 6

|  | |
|---|---|
| Original order | P0, P1, P2, P3, P4, P5, P6, P7, P8, P9 |

| LOD-based order | P0, P5, P4, P2 | P1, P6, P3 | P9, P8, P7 |
|---|---|---|---|

LOD0

LOD1

LOD2

# FIG. 7

# FIG. 8

# FIG. 9

Reception

9000 — Receiver

9001 — Reception processor

Geometry bitstream

9006

Set value, etc.

Attribute bitstream

9002 — Arithmetic decoder

Metadata parser

Arithmetic decoder — 9007

9003 — Occupancy code-based octree reconstruction processor

Inverse quantization processor — 9008

9004 — Surface model processor (triangle reconstruction, up-sampling, voxelization)

Prediction /lifting/RAHT inverse transform processor — 9009

9005 — Inverse quantization processor

Color inverse transform processor — 9010

Sharing reconstructed position values

Renderer — 9011

# FIG. 10

# FIG. 11

# FIG. 12

# FIG. 13

FIG. 14

(a) Geo data ┌--→ | G | LoD(0)~LoD(N) |

(b) Attr data └--- | A | LoD(0)~LoD(N) |

# FIG. 15

| Geo data | G | LoD0 | G | R1 | G | R2 |

| Attr data | A | LoD0 | A | R1 | A | R2 |

←—LoD 0—→

←————LoD 1————→

←————————LoD 2————————→

FIG. 16

EP 4 654 581 A1

# FIG. 17

# FIG. 18

(a) bitstream | G | LoD0 | A | LoD0 | G | R1 | A | R1 |

(b) discarded | G | R2 | A | R2 |

(c)

EP 4 654 581 A1

# FIG. 19

(a) bitstream

| G | LoD0 | A | LoD0 | G | R1 | A | R1 | G | R2 |

(b) discarded

| A | R2 |

(c)

0 (root)
1
2
3
4
5
6
7 (leaf)

LOD 0
LOD 1

EP 4 654 581 A1

FIG. 20

(a)                                          (b)                                          (c)

EP 4 654 581 A1

# FIG. 21

Geometry coding layer structure(encoder)

Geometry coding layer structure(decoder)

| Slice1<br>(group 1) | Slice2<br>(group 2) | Slice3<br>(group 3) |
|---|---|---|

| Slice1 | Slice2 | Slice3 |
|---|---|---|

(a)

(b)

EP 4 654 581 A1

# FIG. 22

FIG. 23

(a) High-level view (coarse detail)

(b) Mid-level view (medium level detail)

(c) Low-level view (fine-grained detail)

# FIG. 24

Encoder (layer-group sliceing) 47001

47002

Slice selector 47003

Layer-group1  Layer-group2  Layer-group3

decoder 47004

High-level view (Layer-group1)

Mid-level view (layer-group1 + layer-group2)

Low-level view (layer-group1 + layer-group2 + layer-group3)

EP 4 654 581 A1

# FIG. 25

Geometry coding output points
(LoD = maximum depth of the geometry tree)

↓

48001 — | LoD sub-sampling | LoD = LoD - 1

↓ 48002

Finest LoD of the current layer-group? — No

Yes ↓ 48003

Lose of child FGS? — No

Yes ↓

Reference node list → | Missing node detection |
48004

↓

48005 — | Add missing nodes |

↓ 48006

End of LoD? — No

Yes ↓

LoDs

# FIG. 26

# FIG. 27

# FIG. 28

# FIG. 29

48061   48060        48072              48071

Parent
subgroup                                                           LoD N-2  48073

                                                                   LoD N-1

Child
subgroups                                                          LoD N

                                                                   LoD N+1

                                                                   48070

Nodes out of the child subgroup bounding box        Nodes within the child subgroup bounding box
: Geometry position details up to the finest level of    : Geometry position details up to the finest level of
the parent subgroup                                  the child subgroup

# FIG. 30

**FIG. 31**

```
generate SPS, GPS, APS, LGSI
            │
            ▼
      Geometry encoder
            │
            ▼  ⌐58081
       LoD generation
            │
            ▼  ⌐58082
  LoD to layer-group mapping
            │
            ▼  ⌐58083
      Weight derivation
            │
            ▼  ⌐58084
   Determine layer-group
            │
            ▼  ⌐58085
    Determine subgroup
            │
            ▼  ⌐58086
     Subgroup changed?  ── No ──┐
            │ Yes               │
            ▼  ⌐58087           │
    Save and load encoder       │
            │                   │
            ▼  ⌐58088           │
    Encode node attribute ◄─────┘
            │
            ▼
  No ── End of nodes?
  node++      │ Yes
            ▼
  No ── End of LoD?
  lod++       │ Yes
            ▼
generate attribute data unit headers
            │
            ▼
 generate attribute bitstreams
            │
            ▼
      End of encoding
```

# FIG. 32

# FIG. 33

parsing SPS, GPS, APS, LGSI

↓

Geometry decoder

↓

LoD generation /62091

↓

Weight derivation /62092

↓

Parsing attribute data unit header /62093

↓

decode attribute data unit /62094

↓

Layer-group slicing enabled? /62095 — No →

Yes ↓

Parsing dependent attribute data unit header /62096

↓

LoD to layer-group mapping /62097

↓

Parent subgroup selection /62098

↓

decode dependent attribute data unit

↓

End of geometry bitstream? ← No

Yes ↓

Generate output point cloud

↓

End of decoding ←

## FIG. 34

parsing SPS, GPS, APS, LGSI

Geometry decoder

Parsing (dependent) attribute data unit header — 63010

Layer-group slicing enabled? — 63011

No →

Yes ↓

Generate subgroup input point cloud — 63015

Subgroup LoD generation — 63016

Inherit decoded attributes — 63017

Subgroup weight derivation — 63018

Subgroup attribute transform (predicting/lifting) — 63019

Save decoded attributes — 63020

End of (selected) geometry slice? — No

Yes ↓

End of (selected) attribute slice? — No

Yes ↓

LoD generation — 63012

Weight derivation — 63013

Attribute transform (predicting/lifting) — 63014

Generate output point cloud

End of decoding

# FIG. 35

| Subgroup A | | | |
| --- | --- | --- | --- |
| ⓓ | ⓗ | ⓞ | ⓡ |

| Subgroup B | Subgroup C |
| --- | --- |
| ⓐ ⓑ ⓒ ⓓ ⓔ | ⓕ    ⓗ ⓘ ⓙ ⓚ ⓛ ⓜ ⓝ ⓞ ⓟ ⓠ |

## FIG. 36

FIG. 37

| | Current subgroup | | | | Parent subgroup (non-overlapped nodes in the current subgroup) | | | |
|---|---|---|---|---|---|---|---|---|
| Non-IDCM nodes | IDCM nodes (top layer) | . . . | IDCM nodes (bottom layer) | Non-IDCM nodes | IDCM nodes (top layer) | . . . | IDCM nodes (bottom layer) |

# FIG. 38

# FIG. 39

EP 4 654 581 A1

slice 0

slice n

| SPS | GPS | APS $_0$ | APS $_1$ | TPS | Geom $_0^0$ | Attr $_0^0$ | Attr $_1^0$ | $\cdots$ | Geom $_0^n$ | Attr $_0^n$ | Attr $_1^n$ |

| Geom_slice_header | Geom_slice_data |

| Attr_slice_header | Attr_slice_data |

# FIG. 40

| seq_parameter_set( ) { | Descriptor |
|---|---|
| ...... | u(1) |
| sps_extension_flag | u(1) |
| if( sps_extension_flag ) { | |
| layer_group_enabled_flag | u(1) |
| if(layer_group_enabled_flag) { | |
| num_layer_groups_minus1 | u(8) |
| for(i=0; i<=num_layer_groups_minus1; i++) { | |
| layer_group_id[i] | u(8) |
| num_layers_minus1[i] | u(8) |
| subgroup_enabled_flag[i] | u(1) |
| } | |
| if(subgroup_enabled_flags( ) ) { | |
| subgroup_bbox_origin_bits_minus1 | ue(v) |
| subgroup_bbox_size_bits_minus1 | ue(v) |
| } | |
| root_subgroup_bbox_origin | ue(v) |
| root_subgroup_bbox_size | ue(v) |
| } | |
| while( more_data_in_data_unit( ) ) | |
| sps_extension_data_flag | u(1) |
| } | |
| byte_alignment( ) | |
| } | |

# FIG. 41

| dependent_attribute_data_unit_header( ) { | Descriptor |
|---|---|
| dadu_attribute_parameter_set_id | u(4) |
| dadu_sps_attr_idx | ue(v) |
| dadu_slice_id | ue(v) |
| dadu_layer_group_id | u(8) |
| if(subgroup_enabled_flag[layer_group_id]) | |
| dadu_subgroup_id | u(16) |
| byte_alignment( ) | |
| } | |

FIG. 42

# FIG. 43

FIG. 44

# FIG. 45

```
┌─────────────────────────────────┐
│      Acquire point cloud data    │──~71001
└─────────────────────────────────┘
                 │
                 ▼
┌─────────────────────────────────┐
│       Encode point cloud data    │──~71002
└─────────────────────────────────┘
                 │
                 ▼
┌─────────────────────────────────┐
│  Transmit encoded point cloud data and │──~71003
│        signaling information     │
└─────────────────────────────────┘
```

# FIG. 46

```
┌────────────────────────────────┐
│  Receive encoded point cloud    │
│   data and                      │──── 81001
│   signaling information          │
└────────────────────────────────┘
            │
            ▼
┌────────────────────────────────┐
│  Decode point cloud data based  │
│   on                            │──── 81002
│   signaling information          │
└────────────────────────────────┘
            │
            ▼
┌────────────────────────────────┐
│  Render decoded point cloud     │
│   data                          │──── 81003
└────────────────────────────────┘
```

## INTERNATIONAL SEARCH REPORT

| International application No. |
|---|
| **PCT/KR2024/001034** |

| A. | CLASSIFICATION OF SUBJECT MATTER |
|---|---|

**H04N 19/31**(2014.01)i; **H04N 19/597**(2014.01)i; **H04N 19/54**(2014.01)i; **H04N 19/70**(2014.01)i; **H04N 19/184**(2014.01)i

According to International Patent Classification (IPC) or to both national classification and IPC

| B. | FIELDS SEARCHED |
|---|---|

Minimum documentation searched (classification system followed by classification symbols)

H04N 19/31(2014.01); G06T 5/00(2006.01); G06T 9/00(2006.01); G06T 9/40(2006.01); H04N 19/119(2014.01); H04N 19/597(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 포인트 클라우드(point cloud), 지오메트리(geometry), 어트리뷰트(attribute), 이웃(neighbor), 버퍼(buffer)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2023-287243 A1 (LG ELECTRONICS INC.) 19 January 2023 (2023-01-19)<br>See paragraphs [0104]-[0109], [0297], [0320], [0478], [0482], [0663], [0911], [0943]-[0944], [0976] and [1344]; and claim 11. | 1,9 |
| Y | | 2-8,10-15 |
| Y | KR 10-2022-0123034 A (BLACKBERRY LIMITED) 05 September 2022 (2022-09-05)<br>See paragraphs [0024], [0045], [0082] and [0092]-[0095]; and figure 9. | 2-8,10-15 |
| Y | KR 10-2022-0123655 A (GUANGDONG OPPO MOBILE TELECOMMUNICATIONS CORP., LTD.) 08 September 2022 (2022-09-08)<br>See paragraphs [0135]-[0136]; and figure 4. | 6-7,14-15 |
| X | KR 10-2022-0124164 A (QUALCOMM INCORPORATED) 13 September 2022 (2022-09-13)<br>See paragraphs [0044]-[0048]; claim 29; and figure 3. | 1,9 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 May 2024** | **02 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2024/001034** |

### C. DOCUMENTS CONSIDERED TO BE RELEVANT

| Category* | Citation of document, with indication, where appropriate, of the relevant passages | Relevant to claim No. |
|---|---|---|
| X | KR 10-2022-0124151 A (SAMSUNG ELECTRONICS CO., LTD.) 13 September 2022 (2022-09-13) See paragraphs [0021], [0116], [0148], [0150], [0228] and [0234]-[0235]; and figure 15. | 1,9 |

Form PCT/ISA/210 (second sheet) (July 2022)

## INTERNATIONAL SEARCH REPORT
### Information on patent family members

International application No.

**PCT/KR2024/001034**

| Patent document cited in search report | | | Publication date (day/month/year) | Patent family member(s) | | | Publication date (day/month/year) |
|---|---|---|---|---|---|---|---|
| WO | 2023-287243 | A1 | 19 January 2023 | CN | 117693939 | A | 12 March 2024 |
| KR | 10-2022-0123034 | A | 05 September 2022 | CN | 114930395 | A | 19 August 2022 |
| | | | | EP | 4088261 | A1 | 16 November 2022 |
| | | | | US | 2023-0048381 | A1 | 16 February 2023 |
| | | | | WO | 2021-140354 | A1 | 15 July 2021 |
| KR | 10-2022-0123655 | A | 08 September 2022 | CN | 114731425 | A | 08 July 2022 |
| | | | | CN | 115174922 | A | 11 October 2022 |
| | | | | JP | 2023-516246 | A | 19 April 2023 |
| | | | | US | 2022-0343550 | A1 | 27 October 2022 |
| | | | | WO | 2021-138785 | A1 | 15 July 2021 |
| KR | 10-2022-0124164 | A | 13 September 2022 | CN | 114930858 | A | 19 August 2022 |
| | | | | EP | 4088472 | A1 | 16 November 2022 |
| | | | | US | 11350132 | B2 | 31 May 2022 |
| | | | | US | 2021-0211734 | A1 | 08 July 2021 |
| | | | | WO | 2021-142239 | A1 | 15 July 2021 |
| KR | 10-2022-0124151 | A | 13 September 2022 | CN | 114982238 | A | 30 August 2022 |
| | | | | EP | 4059222 | A1 | 21 September 2022 |
| | | | | US | 11593967 | B2 | 28 February 2023 |
| | | | | US | 11803987 | B2 | 31 October 2023 |
| | | | | US | 2021-0209809 | A1 | 08 July 2021 |
| | | | | US | 2023-0169693 | A1 | 01 June 2023 |
| | | | | US | 2024-0046526 | A1 | 08 February 2024 |
| | | | | WO | 2021-141400 | A1 | 15 July 2021 |

Form PCT/ISA/210 (patent family annex) (July 2022)